# EUROPÄISCHE PATENTSCHRIFT

(11) **EP 2 212 869 B1**
(45) Veröffentlichungstag und Bekanntmachung des Hinweises auf die Patenterteilung: **14.01.2015**
(21) Anmeldenummer: 08839229.5
(22) Anmeldetag: 15.10.2008
(51) Int. Cl.: B62B 5/04, G08B 13/24, G07C 9/00

(54) **VORRICHTUNG, VERFAHREN, COMPUTERPROGRAMM UND SYSTEM ZUM ERKENNEN, WENN EIN OBJEKT ODER EINE PERSON EINE DURCH EIN MAGNETISCHES FELD MARKIERTE GRENZE ÜBERSCHREITET**
DEVICE, METHOD, COMPUTER PROGRAMME AND SYSTEM FOR RECOGNISING WHEN AN OBJECT OR A PERSON CROSSES A THRESHOLD THAT IS MARKED BY A MAGNETIC FIELD
DISPOSITIF, PROCÉDÉ, PROGICIEL ET SYSTÈME POUR IDENTIFIER LE MOMENT OÙ UN OBJET OU UN INDIVIDU FRANCHIT UN SEUIL MARQUÉ PAR UN CHAMP MAGNÉTIQUE

(30) Priorität: 15.10.2007 DE 102007049497; 07.11.2007 DE 102007052946
(43) Veröffentlichungstag der Anmeldung: 04.08.2010
(73) Patentinhaber: Fraunhofer-Gesellschaft zur Förderung der angewandten Forschung e.V., 80686 München (DE)
(72) Erfinder: BERNHARD, Josef, 92507 Nabburg (DE); LEIPOLD, Thomas, 91056 Erlangen (DE); VON DER GRÜN, Thomas, Dipl.-Ing., 91077 Kleinsendelbach (DE)
(74) Vertreter: Lehmann-Dronke, Benedikt
(86) Internationale Anmeldenummer: PCT/EP2008/008994
(87) Internationale Veröffentlichungsnummer: WO 2009/049919

(56) Entgegenhaltungen:
- DE-A1- 2 051 386
- GB-A- 2 001 250
- US-A- 4 014 117
- US-A- 5 194 844
- US-A1- 2006 247 847

## Beschreibung

Die vorliegende Erfindung bezieht sich im Allgemeinen auf eine Vorrichtung, ein Verfahren, ein Computerprogramm und ein System zum Erkennen, wenn eine Person eine durch ein magnetisches Feld markierte Grenze überschreitet.

Einige Ausführungsbeispiele beziehen sich auch auf ein Verfahren zur Überwachung eines Areals und zur Überwachung von Objekten, die das Areal verlassen.

Es existieren viele verschiedene Anwendungen, bei denen es gewünscht ist, zu Überwachen, ob ein Objekt oder eine Person in einem bestimmten Bereich eintritt oder den bestimmten Bereich verlässt. So kann beispielsweise das Eintreten eines Objekts oder einer Person in einen Bereich oder das Verlassen dieses Bereichs ein ökonomisches Risiko oder sogar ein Sicherheitsrisiko mit sich bringen.

In manchen Fällen erscheint es als vorteilhaft, eine Grenze eines bestimmten Bereichs zu markieren, beispielsweise durch ein elektrisches Feld oder auch durch ein Magnetfeld. So existieren beispielsweise zur Diebstahlüberwachung von Einkaufswägen in Supermärkten Systeme auf dem Markt, die bei Überschreiten einer Grundstücksfläche (z.B. bei Verlassen des Parkplatzes über eine Ausfahrt) ein Rad des Einkaufswagens blockieren und somit einen Dieb, der versucht, den Einkaufswagen zu stehlen, an der Weiterfahrt hindern.

Einige dieser Systeme umfassen ein Kabel, das als Antenne im Boden vergraben ist, sowie einen Empfänger in dem Rad (z.B. des Einkaufswagens). Das in dem Boden vergrabene Kabel kann beispielsweise um das komplette zu überwachende Areal bzw. Gebiet verlegt sein. Ferner ist das im Boden vergrabene Kabel in der Regel mit einem Sender verbunden, der bei einer bestimmten Frequenz (z.B. 8 kHz) ein moduliertes (oder unmoduliertes) Signal erzeugt. Dieses Signal wird von dem Kabel abgestrahlt, wodurch ein elektromagnetisches Feld um das Kabel herum erzeugt wird. Nähert sich beispielsweise der Einkaufswagen der vergrabenen Leitung bzw. dem vergrabenen Kabel an, so detektiert der Empfänger (der sich beispielsweise in dem Rad des Einkaufswagens befindet) ab einer bestimmten Annäherung das (von dem Kabel abgestrahlte) Signal und löst eine Blockierung des Rades aus. Zur Deaktivierung der Blockierung des Rades wird beispielsweise ein zweites Signal entweder (A) von einer zweiten Leitung oder (B) von einem mobilen Gerät ausgesendet. Wenn der Empfänger das zweite Signal empfängt, kann die Blockierung des Rades wieder gelöst werden.

Wird das zweite Signal von einer zweiten Leitung abgestrahlt, so ist es in vielen Fällen erfoderlich, eine zweite Leitung im Boden zu vergraben. Wird das zweite Signal hingegen von einem mobilen Gerät abgestrahlt, so ist meist ein zusätzliches Bedienpersonal notwendig, das mit dem Gerät zu dem Einkaufswagen hingeht.

In der US 5,194,844 ist ein Verfahren beschrieben, mit dem Aktivierung und Deaktivierung des Blockiermechanismus über nur ein Signal bzw. eine vergrabene Leitung realisiert werden kann. Bei diesem Verfahren wird ein unsymmetrisches (Rechteck)-Signal mit einem Tastverhältnis (Duty Cycle) von kleiner als 40 % übertragen. Das Signal wird über eine Empfangsspule empfangen und ausgewertet. Durch die Unsymmetrie des Signals ergibt sich ein Gleichanteil, aufgrund dessen ein Empfänger entscheiden kann, ob er sich innerhalb oder außerhalb des überwachten Bereichs befindet. Das Verfahren erfordert allerdings eine spezielle Signalform und ist deshalb bei den am Markt befindlichen Systemen, die ein moduliertes oder unmoduliertes symmetrisches (Sinus-) Trägersignal verwenden, nicht anwendbar.

Aus dem Stand der Technik sind im Übrigen eine Vielzahl von weiteren Systemen bekannt, um einen Diebstahlschutz bei Einkaufswagen zu realisieren oder eine Positionsbestimmung zu ermöglichen.

So beschreiben die WO 99/03720, die US 6,362,728, die US 6,945,366, die US 6,353,388, die US 6,127,927 und die US 6,037,869 jeweils ähnliche Diebstahlschutzsysteme für Fahrzeuge wie z.B. Einkaufswagen. Das in den genannten Schriften beschriebene System umfasst ein vergrabenes Kabel, das einen vorbestimmten räumlichen Umfang definiert. Das System umfasst ferner einen Empfänger, der einem Rad des Fahrzeugs zugeordnet ist. Der Empfänger ist ausgelegt, um ein vorbestimmtes Signal zu empfangen, und um ansprechend darauf ein Blockierbauteil zum Blockieren des Rades von einem gelösten Zustand in einen blockierten Zustand zu bewegen oder umgekehrt. Eine Entscheidung darüber, ob das Blockierbauteil in den gelösten oder den blockierten Zustand verschoben wird, erfolgt basierend darauf, ob das Rad bei der Annäherung an das vergrabene Kabel blockiert oder frei beweglich war.

Die US 5,315,290 beschreibt einen Mechanismus zur Blockierung eines Wagens. Der Mechanismus spricht auf Signale an, die einen zulässigen Verwendungsbereich des Wagens beschreiben, und ist vollständig innerhalb des Rades des Wagens enthalten. Der Mechanismus umfasst eine Platine mit einem Hochfrequenzempfänger, einen Decoder und einen Logiktreiber. Der Mechanismus umfasst ferner eine Festkörpereinrichtung. Wenn der Empfänger detektiert, dass der Wagen aus dem vorgeschriebenen Verwendungsgebiet heraus bewegt worden ist, wird die Festkörpereinrichtung mit Energie versorgt, um eine Rotation des Rades zu blockieren und um den Wagen somit zu blockieren. Das genannte System basiert im Wesentlichen darauf, eine Signalstärke eines von einer zentralen Antenne abgestrahlten Signals zu detektieren. Wenn der Empfänger das Signal verliert, so zeigt dies an, dass der Wagen aus dem vorgeschriebenen Verwendungsbereich heraus bewegt wurde. Wenn das Signal hingegen wieder gefunden wird, so zeigt dies an, dass der Wagen sich wieder innerhalb des vorgeschriebenen Verwendungsbereichs befindet.

Die US 6,125,972 beschreibt einen weiteren Sicherheitsapparat für einen Einkaufswagen oder andere Fahrzeuge. Ein Bremsbauteil ist drehbar auf einer Achse eines der Räder montiert. Das Bremsbauteil ist ausgelegt, um in einer Betriebsposition das Rad von dem Boden zu trennen und so eine Bewegung des Fahrzeugs zu blockieren. Eine Verriegelungseinrichtung verriegelt das Bremsbauteil in einer gehobenen Position. Das Bremsbauteil wird ferner ansprechend auf ein Signal von einem Signalisierungssystem, das sich um einen Bereich herum erstreckt, in dem der Wagen festgehalten werden soll, freigegeben. In diesem Fall rotiert das Bremsbauteil in eine Betriebsposition, und stoppt so eine normale Bewegung des Wagens. Das System umfasst im Übrigen eine vergrabene Schleifenantenne, die entlang eines Umfangs des zu überwachenden Bereichs vergraben ist. Ein Empfänger, der das Bremsbauteil ansteuert, umfasst einen Resonator, einen Hochfrequenzverstärker, einen Gleichrichter, einen Schwellwertdetektor und einen Pulsgenerator zur Ansteuerung eines Festkörpers. Der Verriegelungsmechanismus wird im Übrigen unter Verwendung eines speziellen Schlüssels wieder deaktiviert. Zu diesem Zweck weist ein Gehäuse ein Schlüsselloch auf.

Die US 2006/0247847 A1 beschreibt ein Navigationssystem, das ein Koppelnavigationsverfahren verwendet, um eine gegenwärtige Position eines Objekts relativ zu einer oder mehreren früheren Positionen zu schätzen. Das Koppelnavigationsverfahren bestimmt eine Veränderung der Position aus der Richtung und Geschwindigkeit des Objekts während eines Zeitintervalls. Das System umfasst unter anderem auch einen Magnetfeld-Sensor. Mit Hilfe von zwei Magnetfeld-Sensoren, die beispielsweise entlang einer x-Achse und entlang einer z-Achse angeordnet sind, kann im Übrigen beispielsweise ein magnetischer Richtungsmarkierer erkannt werden. Ferner kann beispielsweise eine Markierung mit einem magnetischen Streifen-Code (Barcode) ausgewertet werden. Ein Zwei-Achsen-Magnetsensor ist beispielsweise ausgelegt, um Magnetfeld-Komponenten in der Bewegungsrichtung des Objekts und senkrecht zu der Bewegungsrichtung des Objekts zu erkennen. Ein z-Achsen-Sensor kann beispielsweise verwendet werden, um den Anfang und das Ende eines Bits zu erkennen. Ein y-Achsen-Sensor hingegen erkennt, ob es sich bei dem Bit um eine "1" oder eine "0" handelt.

Die US 2006/0244588 A1 beschreibt ein Zwei-Richtungs-Kommunikationssystem zum Verfolgen von Positionen und Zuständen von Fahrzeugen. Das Fahrzeugverfolgungssystem umfasst ein Rad, das eine Sensorschaltung enthält. Die Sensorschaltung ist in der Lage, verschiedene Bedingungen zu erkennen, wie z.B. eine Rotation des Rades, eine Vibration des Rades oder spezifische elektromagnetische und/oder magnetische Signale, die eine bestimmte Position des Rades anzeigen. Die genannte Schrift beschreibt unter anderem die Verwendung von magnetischen Markierungen oder Streifen, um einen zusätzlichen Positions-Verfolgungsmechanismus zu realisieren. Jeder magnetische Streifen hat ein eindeutiges magnetisches Muster, das durch einen Magnetfeld-Sensor, der in jedem Rad enthalten ist, erkannt werden kann. Das System umfasst ferner eine Signalleitung für ein Signal mit einer sehr niederen Frequenz. Ein Code, der über diese Leitung übertragen wird, kann eindeutig dem Ausgang oder Eingang eines Ladens entsprechen. Ein Eintreten des Wagens in den Laden kann von einem Verlassen des Ladens unterschieden werden, indem ein Timing, mit dem der Sendeempfänger des Wagens das Signal mit der sehr niederen Frequenz empfängt, relativ zu einem Timing, mit dem der Wagen verschiedene RSSI-Pegel von an den Ausgängen montierten Zugriffspunkten sieht, ausgewertet wird.

Die US 6,161,849 beschreibt eine Lenkrad-Verriegelungseinrichtung zur Verwendung mit Einkaufswägen, die zumindest ein gelenktes Rad haben. Die Verriegelungseinrichtung verriegelt das drehbare Rad in einer gedrehten Konfiguration, so dass der Wagen sich nur noch entlang eines kreisförmigen Pfades bewegen kann. Ein Rücksetzen der Verriegelungseinrichtung kann beispielsweise durch die Verwendung eines tragbaren Senders erfolgen. Alternativ dazu kann auch ein mechanischer Schlüssel zum Rücksetzen der Verriegelung verwendet werden.

Die US 5,357,182 beschreibt ein weiteres Diebstahlverhinderungssystem für Einkaufswägen. Das System zielt darauf ab, ein Fahrzeug abzubremsen, wenn versucht wird, das Fahrzeug aus einem definierten Umfang heraus zu bewegen. Zumindest ein Rad des Fahrzeugs ist mechanisch mit einer Achse gekoppelt, die eine Einrichtung trägt, um ansprechend auf eine Rotation der Achse einen elektrischen Strom zu erzeugen. Das System umfasst ferner eine Schaltung, die ausgelegt ist, um ansprechend auf ein vorbestimmtes Signal die Anschlüsse kurzzuschließen, um somit eine Rotation der Achse zu behindern und um das Rad zu bremsen. Das System umfasst ferner eine Einrichtung zur Erzeugung des vorbestimmten Signals sowie eine Einrichtung zum lokalen Ausstrahlen eines Signals entlang des Umfanges. Bei dem genannten System werden zwei Antennen verwendet, die verschiedene Signale ausstrahlen. Ein Signal, das von der ersten Antenne ausgestrahlt wird, bewirkt ein Blockieren des Rades. Ein Signal, das von der zweiten Antenne ausgestrahlt wird, bewirkt ein Lösen der Blockierung des Rades.

Es ist die Aufgabe der vorliegenden Erfindung, ein Konzept zu schaffen, das es ermöglicht, besonders zuverlässig zu erkennen, wenn ein Objekt eine durch ein magnetisches Feld markierte Grenze überschreitet.

Diese Aufgabe wird durch eine Vorrichtung gemäß dem Patentanspruch 1 und ein Verfahren gemäß dem Patentanspruch 13. gelöst.

Die vorliegende Erfindung schafft eine Vorrichtung zum Erkennen, wenn ein Objekt oder eine Person eine durch ein magnetisches Wechselfeld markierte Grenze überschreitet. Die Vorrichtung umfasst einen ersten Magnetfeld-Sensor, der ausgelegt ist, um eine erste Magnetfeld-Komponente des magnetischen Wechselfeldes zu detektieren, und um ein zugehöriges Magnetfeld-Sensor-Signal zu liefern. Die Vorrichtung umfasst zudem einen zweiten Magnetfeld-Sensor, der ausgelegt ist, um eine zweite Magnetfeld-Komponente des magnetischen Wechselfeldes zu detektieren. Eine Magnetfeld-Hauptempfindlichkeitsrichtung des ersten Magnetfeld-Sensors unterscheidet sich von einer Magnetfeld-Hauptempfindlichkeitsrichtung des zweiten Magnetfeld-Sensors.

Die Vorrichtung umfasst ferner einen Auswerter, der ausgelegt ist, um ansprechend auf eine Veränderung einer Phasenbeziehung zwischen dem von dem ersten Magnetfeld-Sensor gelieferten Magnetfeld-Sensor-Signal und einem Referenzsignal, das auf der Detektion der zweiten Magnetfeld-Komponente durch den zweiten Magnetfeld-Sensor basiert, eine Information zu liefern, die anzeigt, dass das Objekt oder die Person die markierte Grenze überschritten hat.

Einige Ausführungsbeispiele der vorliegenden Erfindung basieren auf der Erkenntnis, dass sich ein Überschreiten einer durch ein magnetisches Wechselfeld markierten Grenze in einer Veränderung einer Phasenbeziehung zwischen verschiedenen Magnetfeld-Komponenten wiederspiegelt. Während nämlich beispielsweise innerhalb der durch das magnetische Wechselfeld markierten Grenze zwei verschiedene Magnetfeld-Komponenten in Phase zueinander sein können, sind die entsprechenden Magnetfeld-Komponenten beispielsweise außerhalb der durch das magnetische Wechselfeld markierten Grenze gegenphasig. So wurde im Übrigen erkannt, dass die Phasenbeziehung zwischen zwei verschiedenen Magnetfeld-Komponenten bei einigen Ausführungsbeispielen ein wesentlich zuverlässigeres Maß dafür ist, ob die durch das magnetische Wechselfeld markierte Grenze überschritten wird, als beispielsweise die Amplitude der entsprechenden Magnetfeld-Komponente.

Im Übrigen wurde erkannt, dass durch die Auswertung einer Phasenbeziehung zwischen verschiedenen Magnetfeld-Komponenten in einigen Fällen, wenn auch nicht in allen Fällen, festgestellt werden kann, auf welcher Seite der durch das magnetische Wechselfeld markierten Grenze sich die Vorrichtung bzw. das Objekt oder die Person gerade befindet.

Zusammenfassend ist somit festzuhalten, dass bei einigen Ausführungsbeispielen eine Phasenbeziehung zwischen verschiedenen Magnetfeld-Komponenten eine zuverlässige Erkennung ermöglicht, ob die Vorrichtung bzw. ein Objekt oder eine Person, die mit der erfindungsgemäßen Vorrichtung versehen ist, die durch das magnetische Wechselfeld markierte Grenze überschritten hat oder nicht.

Eine erste Magnetfeld-Komponente wird dabei durch den ersten Magnetfeld-Sensor ausgewertet, während hingegen eine zweite Magnetfeld-Komponente (deren Orientierung sich beispielsweise von der Orientierung der ersten Magnetfeld-Komponente unterscheidet) beispielsweise durch den zweiten Magnetfeld-Sensor ausgewertet werden kann, um ein Referenzsignal zur Auswertung der Phasenbeziehung zwischen den zumindest zwei verschiedenen Magnetfeld-Komponenten zu erhalten. Das Referenzsignal kann allerdings natürlich auch unter Verwendung zusätzlicher Magnetfeld-Sensoren erzeugt werden, wie es später noch beschrieben wird.

Ausführungsbeispiele der erfindungsgemäßen Vorrichtung können einige wesentliche Vorteile mit sich bringen. So ermöglichen einige Ausführungsbeispiele eine präzise Erkennung, ob eine durch ein magnetisches Wechselfeld markierte Grenze von einem Objekt oder von einer Person überschritten wurde, ohne dass dem zur Markierung der Grenze verwendeten Magnetfeld ein Gleichanteil überlagert sein muss. Vielmehr erfolgt beispielsweise eine synchrone Detektion unter Verwendung eines Referenzsignals. Somit wird es möglich, die zu markierende Grenze beispielsweise durch ein Magnetfeld zu markieren, dessen zeitlicher Verlauf zumindest näherungsweise sinusförmig ist. Das zur Markierung verwendete Magnetfeld muss bei einigen Ausführungsbeispielen keinen Gleichanteil aufweisen. Ferner ist es nicht erforderlich, dass das zur Markierung verwendete Magnetfeld einen erheblichen Oberwellenanteil aufweist, wie dies bei manchen herkömmlichen Lösungen der Fall ist. Somit können besonders einfache Generatoren verwendet werden, um das zur Markierung der Grenze verwendete Magnetfeld zu erzeugen. Dadurch können die zur Realisierung des erfindungsgemäßen Konzepts erforderlichen Kosten deutlich gesenkt werden.

Zudem ermöglichen es einige Ausführungsbeispiele durch die Verwendung eines Referenzsignals und durch die Auswertung einer Phasenbeziehung zwischen dem Magnetfeld-Sensor-Signal und dem Referenzsignal, eine besonders störungsarme Positionsbestimmung zu erreichen. So wird die genannte Phasenbeziehung beispielsweise weder durch ein störendes magnetisches Gleichfeld noch durch andere störende magnetische Wechselfelder wesentlich beeinflusst. Dies gilt umso mehr, als bei einigen Ausführungsbeispielen nur eine signifikante Veränderung der Phasenbeziehung, beispielsweise um etwa 180°, ausgewertet wird.

Zusammenfassend lässt sich somit festhalten, dass es Ausführungsbeispiele der vorliegenden Erfindung ermöglichen, ein besonders kostengünstiges System zur Erkennung, ob ein Objekt oder eine Person eine markierte Grenze überschritten hat, zu realisieren.

Bei einigen Ausführungsbeispielen wird es ermöglicht, ein Verlassen und Wiederbetreten des markierten Bereichs automatisch zu erkennen. Somit kann bei einigen Ausführungsbeispielen auf die Verwendung eines zweiten Kabels zur Erkennung, ob ein Gebiet betreten oder verlassen wurde, verzichtet werden. Im Übrigen kann bei der Erzeugung des magnetischen Felds zur Markierung der Grenze mit einem sinusförmigen Signal (beispielsweise ohne einen wesentlichen Gleichanteil und ohne wesentliche Oberwellenanteile) gearbeitet werden, wodurch die Markierung der Grenze im Vergleich zu einigen existierenden Systemen wesentlich vereinfacht wird.

Gemäß einem Ausführungsbeispiel der vorliegenden Erfindung ist der Auswerter ausgelegt, um eine Bereitstellung einer Information, die anzeigt, dass das Objekt oder die Person die markierte Grenze überschritten hat, zu verhindern, wenn eine Veränderung einer Phasenbeziehung zwischen dem durch den ersten Magnetfeld-Sensor gelieferten Magnetfeld-Sensor-Signal und dem Referenzsignal aufgrund einer Drehung der Vorrichtung erfolgt.

Die genannte Verbesserung basiert auf der Erkenntnis, dass die Phasenlage des Referenzsignals beispielsweise durch eine Drehung der Vorrichtung bzw. des Objekts oder der Person, die mit der Vorrichtung ausgestattet ist, verändert werden kann. Eine Drehung der Vorrichtung (bzw. des mit der Vorrichtung versehenden Objekts oder der mit der Vorrichtung versehenden Person) soll aber nicht als ein Überschreiten der markierten Grenze detektiert werden. Insofern lässt sich die Zuverlässigkeit bei einigen Ausführungsbeispielen noch merklich verbessern, indem erkannt wird, wenn sich eine Phasenbeziehung zwischen dem Magnetfeld-Sensor-Signal und dem Referenzsignal nicht aufgrund der Überschreitung der markierten Grenze, sondern aufgrund einer Drehung der Vorrichtung ändert. Damit ist das hier beschriebene Konzept auch in solchen Situationen einsetzbar, in denen eine Drehung der Vorrichtung innerhalb des zur Markierung der Grenze verwendeten Wechselfelds erfolgen kann. Die Zuverlässigkeit des hier beschriebenen Konzepts kann somit bei einigen Ausführungsbeispielen deutlich erhöht werden.

Gemäß einem Ausführungsbeispiel kann die Vorrichtung für den genannten Zweck einen Referenzsignal-Korrigierer aufweisen, der ausgelegt ist, um basierend auf einem ursprünglichen Referenzsignal und einer Information über eine Drehung der Vorrichtung relativ zu dem magnetischen Wechselfeld ein phasenkorrigiertes Referenzsignal zu erzeugen. Auf diesem Weg kann beispielsweise zuverlässig verhindert werden, dass sich das Referenzsignal aufgrund einer Drehung der Vorrichtung in dem magnetischen Wechselfeld im Hinblick auf seine Phasenlage wesentlich verändert. Das korrigierte Referenzsignal kann somit zur Bestimmung der Phasenbeziehung und zur Erzeugung der Information, die anzeigt, dass das Objekt oder die Person eine markierte Grenze überschritten hat, verwendet werden.

Bei einem Ausführungsbeispiel kann die Vorrichtung einen Drehungs-Erkenner aufweisen, der ausgelegt ist, um basierend auf einer Information über zumindest eine der Magnetfeld-Komponenten eine Drehung der Vorrichtung relativ zu dem magnetischen Wechselfeld zu erfassen. In anderen Worten, zur Erkennung von möglichen Drehungen der Vorrichtung sind nicht notwendigerweise irgendwelche zusätzlichen Sensoren erforderlich, die die erfindungsgemäße Vorrichtung unnötig verteuern würden. Vielmehr kann auf die ohnehin vorhandenen Magnetfeld-Sensoren zurückgegriffen werden, um die Drehung der Vorrichtung zu erfassen.

Bei einem Ausführungsbeispiel umfasst die Vorrichtung zusätzlich zu den oben genannten zwei Magnetfeld-Sensoren einen dritten Magnetfeld-Sensor, der ausgelegt ist, um eine dritte Magnetfeld-Komponente des magnetischen Wechselfeldes zu detektieren. Der Drehungs-Erkenner kann beispielsweise ausgelegt sein, um die Drehung der Vorrichtung relativ zu dem magnetischen Wechselfeld basierend auf einem von dem zweiten Magnetfeld-Sensor gelieferten Sensorsignal und auf einem von dem dritten Magnetfeld-Sensor gelieferten Sensorsignal zu detektieren. In anderen Worten, bei einer Vorrichtung mit insgesamt zumindest drei Magnetfeld-Sensoren können zwei der Magnetfeld-Sensoren in vorteilhafter Weise verwendet werden, um einerseits ein Referenzsignal zu erzeugen und um andererseits Drehungen der Vorrichtung zu kompensieren. Das Magnetfeld-Sensorsignal eines weiteren Magnetfeld-Sensors kann im Übrigen im Wesentlichen für die Hauptfunktionalität der Vorrichtung, nämlich für die Erkennung, ob die markierte Grenze überschritten wurde, herangezogen werden. Es hat sich gezeigt, dass bei einigen Ausführungsbeispielen durch eine Verwendung von insgesamt drei Magnetfeld-Sensoren eine besonders hohe Zuverlässigkeit des Systems erreicht werden kann.

Bei einem weiteren Ausführungsbeispiel umfasst die Vorrichtung einen Referenzsignal-Erzeuger, der ausgelegt ist, um das Referenzsignal abhängig von zumindest zwei Magnetfeld-Sensor-Signalen von zumindest zwei Magnetfeld-Sensoren zu bestimmen. Eine derartige Bestimmung des Referenzsignals abhängig von zumindest zwei Magnetfeld-Sensor-Signalen ermöglicht eine besonders hohe Zuverlässigkeit des Referenzsignals. Somit kann die Phasenbeziehung zwischen dem Referenzsignal und dem Magnetfeld-Sensor-Signal von dem ersten Magnetfeld-Sensor besonders zuverlässig bestimmt werden, wodurch auch ein Überschreiten der markierten Grenze besonders zuverlässig detektiert werden kann.

Bei einem Ausführungsbeispiel umfasst die Vorrichtung insgesamt drei Magnetfeld-Sensoren, die ausgelegt sind, um zumindest drei verschiedene Magnetfeld-Komponenten des magnetischen Wechselfelds zu detektieren. Der Referenzsignal-Erzeuger ist ausgelegt, um das Referenzsignal abhängig von einem Magnetfeld-Sensor-Signal des zweiten Magnetfeld-Sensors und einem Magnetfeld-Sensor-Signal des dritten Magnetfeld-Sensors zu bestimmen. Durch die genannte Vorgehensweise wird es ermöglicht, zwei Magnetfeld-Komponenten, die durch den zweiten Magnetfeld-Sensor und den dritten Magnetfeld-Sensor detektiert werden, gezielt für die Erzeugung des Referenzsignals heranzuziehen und ferner eine Phasenbeziehung zwischen einer weiteren Magnetfeld-Komponente, die durch den ersten Magnetfeld-Sensor detektiert wird und dem Referenzsignal auszuwerten. Durch die Verwendung von drei Magnetfeld-Komponenten wird somit die gesamte dreidimensionale Struktur des Magnetfelds ausgewertet, wodurch sich eine sehr gute Zuverlässigkeit ergibt. So kann bei dem genannten Ausführungsbeispiel das Referenzsignal ggf. sogar unabhängig von dem durch den ersten Magnetfeld-Sensor gelieferten Magnetfeld-Sensor-Signal erzeugt werden, was eine besonders hohe Güte bei der Auswertung der Phasenbeziehung ermöglicht.

Weitere Ausführungsbeispiele sind im Übrigen durch die abhängigen Patentansprüche definiert.

Ausführungsbeispiele der vorliegenden Erfindung werden nachfolgend Bezug nehmend auf die beiliegenden Figuren näher erläutert. Es zeigen:
- Fig. 1a: ein Blockschaltbild einer erfindungsgemäßen Vorrichtung zum Erkennen, wenn ein Objekt oder eine Person eine durch ein magnetisches Wechselfeld markierte Grenze überschreitet;
- Fig. 1b: eine schematische Darstellung eines Magnetfelds, das durch einen von einem Wechselstrom durchflossenen Leiter erzeugt wird, zu verschiedenen Zeitpunkten;
- Fig. 2: eine schematische Darstellung eines Anwendungsszenarios für die Vorrichtung gemäß Anspruch 1;
- Fig. 3: eine schematische Darstellung eines Querschnitts durch eine mit einem magnetischen Feld markierte Grenze;
- Fig. 4: eine graphische Darstellung einer Polarität eines durch einen Magnetfeld-Sensor gelieferten Signals;
- Fig. 5: eine graphische Darstellung eines Sensor-Koordinatensystems für Spulen an einem Wagenrad;
- Fig. 6: eine schematische Darstellung, die eine mögliche Bewegung eines Wagenrads beschreibt;
- Fig. 7: eine schematische Darstellung von Magnetfeld-Komponenten in einem Sensor-Koordinatensystem für verschiedene Orientierungen des Sensor-Koordinatensystems;
- Fig. 8: ein Blockschaltbild einer erfindungsgemäßen Vorrichtung, gemäß einem weiteren Ausführungsbeispiel der Erfindung;
- Fig. 9: ein Flussdiagramm eines Verfahrens, gemäß einem Ausführungsbeispiel der Erfindung;
- Fig. 10a: eine schematische Darstellung einer Spielanlage gemäß einem Ausführungsbeispiel der Erfindung;
- Fig. 10b: eine schematische Darstellung einer Spielanlage, gemäß einem Ausführungsbeispiel der Erfindung;
- Fig. 11: eine Querschnittsdarstellung eines Tores sowie der im Bereich des Tores vorhandenen Magnetfelder;
- Fig. 12: ein Blockschaltbild einer Vorrichtung zum Erfassen eines Torereignisses, gemäß einem Ausführungsbeispiel der Erfindung; und
- Fig. 13: eine schematische Darstellung von verschiedenen Möglichkeiten bei einer Erkennung eines Torereignisses.

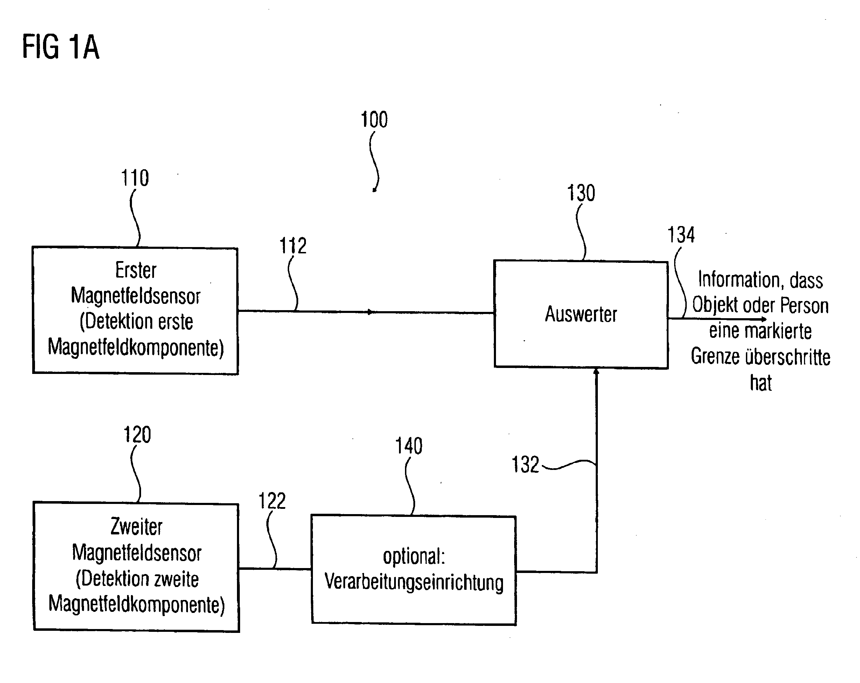

Fig. 1a zeigt ein Blockschaltbild einer erfindungsgemäßen Vorrichtung zum Erkennen, wenn ein Objekt oder eine Person eine durch ein magnetisches Wechselfeld markierte Grenze überschreitet. Die Vorrichtung gemäß der Fig. 1a ist in ihrer Gesamtheit mit 100 bezeichnet.

Die Vorrichtung 100 umfasst einen ersten Magnetfeld-Sensor 110. Der erste Magnetfeld-Sensor 110 ist ausgelegt, um eine erste Magnetfeld-Komponente des magnetischen Wechselfeldes zu detektieren, um ein zugehöriges Magnetfeld-Komponente-Signal 112 zu liefern.

Die Vorrichtung 100 umfasst ferner einen zweiten Magnetfeld-Sensor 120, der ausgelegt ist, um eine zweite Magnetfeld-Komponente des magnetischen Wechselfeldes zu detektieren. Der zweite Magnetfeld-Sensor kann beispielsweise ein zugehöriges Magnetfeld-Sensor-Signal 122 liefern. Eine Magnetfeld-Hauptempfindlichkeitsrichtung des zweiten Magnetfeld-Sensors 120 unterscheidet sich beispielsweise (aber nicht notwendigerweise) von einer Magnetfeld-Hauptempfindlichkeitsrichtung des ersten Magnetfeld-Sensors.

Die Vorrichtung 100 umfasst ferner einen Auswerter 130. Der Auswerter 130 ist ausgelegt, um das von dem ersten Magnetfeld-Sensor 110 gelieferte Magnetfeld-Sensor-Signal 112 zu empfangen. Ferner ist der Auswerter 130 ausgelegt, um ein Referenzsignal 132 zu empfangen. Bei dem Referenzsignal 132 kann es sich in dem einfachsten Fall unmittelbar um das von dem zweiten Magnetfeld-Sensor 120 gelieferte Magnetfeld-Sensor-Signal 122 handeln. Das Referenzsignal 132 kann aber auch, durch eine optionale Verarbeitungseinrichtung 140, unter Verwendung des durch den zweiten Magnetfeld-Sensor 120 gelieferten Magnetfeld-Sensor-Signals 122 bzw. basierend auf dem durch den zweiten Magnetfeld-Sensor 120 gelieferten Magnetfeld-Sensor-Signal 122 erzeugt werden.

Der Auswerter 130 ist beispielsweise ausgelegt, um eine Phasenbeziehung (Phasendifferenz) zwischen dem von dem ersten Magnetfeld-Sensor 110 gelieferten zugehörigen Magnetfeld-Sensor-Signal 112 und dem Referenzsignal 132, das auf der Detektion der zweiten Magnetfeld-Komponente durch den zweiten Magnetfeld-Sensor 120 basiert, zu ermitteln. Der Auswerter 130 ist ferner beispielsweise ausgelegt, um ansprechend auf eine Veränderung der genannten Phasenbeziehung eine Information 134 zu liefern, die anzeigt, dass die Vorrichtung 100, bzw. ein Objekt oder eine Person, die mit der Vorrichtung 100 versehen bzw. verbunden ist, die markierte Grenze überschritten hat.

Basierend auf der obigen strukturellen Beschreibung der Vorrichtung 100 wird im Folgenden die Funktionsweise der Vorrichtung 100 beschrieben. Dabei wird davon ausgegangen, dass eine bestimmte Grenze bzw. Grenzlinie durch ein magnetisches Wechselfeld markiert ist.

Im Folgenden wird davon ausgegangen, dass eine Grenze bzw. eine Grenzlinie durch ein magnetisches Wechselfeld markiert ist. Es wird angenommen, dass das magnetische Wechselfeld beispielsweise entlang der Grenze bzw. Grenzlinie räumlich konzentriert ist. Dadurch ergibt sich im Regelfall, dass das magnetische Wechselfeld in dem Bereich der Grenze bzw. Grenzlinie eine deutliche Inhomogenität aufweist. Die entsprechende Inhomogenität spiegelt sich beispielsweise darin wieder, dass eine der Magnetfeld-Komponenten zu einem in der Nähe der Grenze bestimmten festgelegten Zeitpunkt an verschiedenen Orten verschiedene Orientierungen aufweist. Es sei im Übrigen darauf hingewiesen, dass unter einer Magnetfeld-Komponente ein Anteil des dreidimensionalen magnetischen Wechselfeldes entlang einer bestimmten Richtung verstanden wird. Wird beispielsweise von einem Koordinatensystem mit den Richtungen x, y und z ausgegangen, so kann beispielsweise eine erste Magnetfeld-Komponente durch den Anteil des Magnetfeldes in z-Richtung gebildet werden. Eine zweite Magnetfeld-Komponente kann beispielsweise durch den Anteil des Magnetfeldes in x-Richtung gebildet werden. Eine dritte Magnetfeld-Komponente kann beispielsweise durch den Anteil des Magnetfeldes in y-Richtung gebildet werden. Die x-Richtung, y-Richtung und z-Richtung können beispielsweise jeweils zueinander orthogonal sein. Allerdings ist dies nicht zwingend erforderlich.

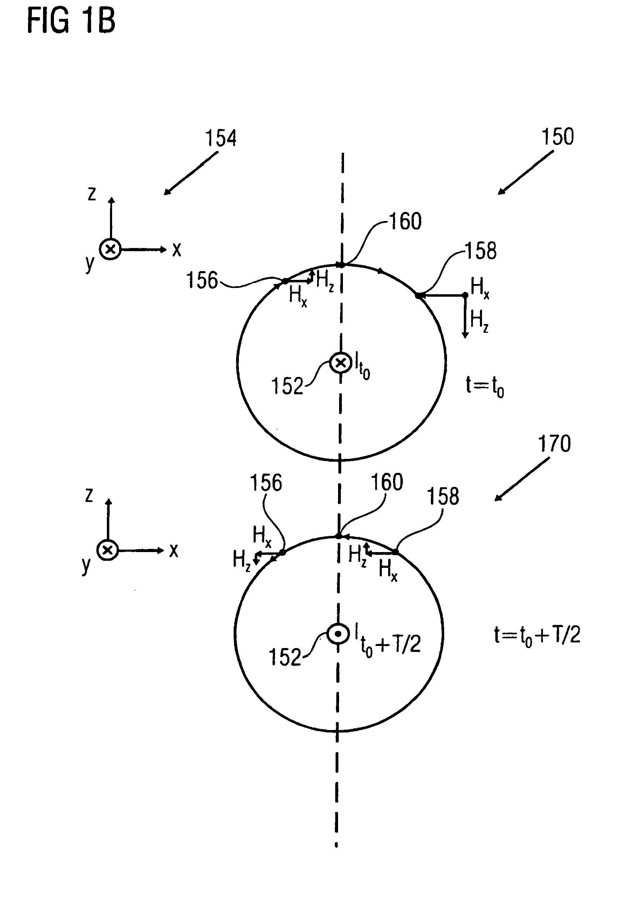

Zur weiteren Veranschaulichung zeigt die Fig. 1b eine schematische Darstellung eines Magnetfeldes, das durch einen von einem Wechselstrom durchflossenen Leiter erzeugt wird.

Eine erste schematische Darstellung 150 zeigt das Magnetfeld zu einem Zeitpunkt t=t₀, und ein zweite schematische Darstellung 170 zeigt das Magnetfeld zu einem Zeitpunkt t=t₀+T/2, wobei T/2 eine halbe Periodendauer des den Leiter durchfließenden Stroms ist. Der Stromdurchflossene Leiter ist in den graphischen Darstellungen 150, 170 der Fig. 1b jeweils mit 152 bezeichnet. Ein Koordinatensystem, das die Richtungen x, y und z umfasst, ist im Übrigen mit 154 bezeichnet. An einem ersten Ort 156 liegt zu dem Zeitpunkt t=t₀ ein Magnetfeld an, das eine Komponente (bzw. einen Anteil) Hₓ in positiver x-Richtung und eine Komponente H_{z} in positiver z-Richtung aufweist. An einem zweiten Ort 158 liegt zu dem Zeitpunkt t=t₀ ein Magnetfeld an, das einen Anteil Hₓ in positiver x-Richtung und einen Anteil H_{z} in negativer z-Richtung aufweist.

Zu dem Zeitpunkt t=t₀+T/2 (also eine halbe Periodendauer des Wechselstromsignals später) haben sich die Richtungen aller Magnetfelder umgekehrt. An dem ersten Ort 156 liegt also zu dem Zeitpunkt t=t₀+T/2 ein Magnetfeld mit einer Komponente Hₓ in negativer x-Richtung und einer Komponente H_{z} in negativer z-Richtung an. Ferner liegt zu dem Zeitpunkt t=t₀+T/2 an dem zweiten Ort 158 ein Magnetfeld mit einer Komponente Hₓ in negativer x-Richtung und einer Komponente H_{z} in positiver z-Richtung an.

Aus der Fig. 1b ist somit ersichtlich, dass die Magnetfeld-Komponente H_{z} in z-Richtung zu einem vorgegebenen Zeitpunkt (z.B. zu dem Zeitpunkt t=t₀ (oder zu dem Zeitpunkt t=t₀+T/2) an den Orten 156, 158 jeweils unterschiedliche Richtungen aufweist. Allerdings ist ebenso ersichtlich, dass die Magnetfeld-Komponente H_{z} auch an einem einzigen Ort, beispielsweise an dem ersten Ort 156, ihre Richtung über der Zeit ändert. Eine bloße Detektion der Richtung der Magnetfeld-Komponente H_{z} in z-Richtung ist somit bei einigen Ausführungsbeispielen nicht ausreichend, um eine Information darüber zu erhalten, ob sich die Vorrichtung 100 an dem ersten Ort 156 oder an dem zweiten Ort 158 befindet.

Allerdings ist aus der Fig. 1b auch ersichtlich, dass die Magnetfeld-Komponenten Hₓ und H_{z} in x-Richtung und z-Richtung an dem ersten Ort 156 sowohl zu dem ersten Zeitpunkt in gleiche Richtungen (in positive Richtungen) weisen als auch zu dem zweiten Zeitpunkt (t=t₀+T/2) in gleiche Richtungen (negative Richtungen) weisen. In anderen Worten, die Magnetfeld-Komponenten Hₓ und H_{z} in x-Richtung und z-Richtung sind an dem ersten Ort 156 (zumindest bei Verwendung eines unveränderten Koordinatensystems 154) in Phase. An dem zweiten Ort 158 weisen die Magnetfeld-Komponente Hₓ in x-Richtung und die Magnetfeld-Komponente H_{z} in z-Richtung zu dem Zeitpunkt t=t₀ unterschiedliche Orientierungen auf, wobei die Magnetfeld-Komponente Hₓ zu dem Zeitpunkt t=t₀ in positive x-Richtung weist, während hingegen die Magnetfeld-Komponente H_{z} zu dem selben Zeitpunkt in negative z-Richtung weist. Zu dem Zeitpunkt t=t₀+T/2 weist die Magnetfeld-Komponente Hₓ an dem Ort 158 in negative x-Richtung, während hingegen die Magnetfeld-Komponente H_{z} an dem Ort 158 in positive z-Richtung weist. Somit ist festzuhalten, dass die Magnetfeld-Komponenten Hₓ und H_{z} in x-Richtung und z-Richtung an dem zweiten Ort 158 gegenphasig sind bzw. eine Phasenverschiebung von 180° aufweisen.

Somit ist insgesamt festzuhalten, dass bei Verwendung eines magnetischen Wechselfeldes zur Markierung einer Grenze die Orientierung einer Magnetfeld-Komponente zu einem einzigen Zeitpunkt keinen Aussagewert im Hinblick auf die Position, an der sich die Vorrichtung befindet, hat. Eine Auswertung einer Phasenbeziehung (z.B. "gleichphasig" bzw. "gegenphasig") zwischen zwei verschiedenen Magnetfeld-Komponenten (z.B. in Magnetfeld-Komponenten Hₓ und H_{z}) ermöglicht allerdings auch in einem magnetischen Wechselfeld eine Bestimmung eines Ortes, an dem sich die Vorrichtung befindet.

Bezug nehmend auf das Beispiel der Fig. 1b kann beispielsweise darauf geschlossen werden, dass sich die Vorrichtung an dem ersten Ort 156 (oder, allgemeiner, auf einer ersten Seite bzw. links von dem stromdurchflossenen Leiter 152) befindet, wenn festgestellt wird, dass die Magnetfeld-Komponenten Hₓ und H_{z} in Phase sind bzw. gleichphasig sind. Ferner kann darauf geschlossen werden, dass sich die Vorrichtung an dem zweiten Ort 158 (oder, allgemeiner, auf einer zweiten Seite bzw. rechts von dem stromdurchflossenen Leiter 152) befindet, wenn festgestellt wird, dass die Magnetfeld-Komponenten Hₓ und H_{z} außer Phase sind bzw. gegenphasig sind.

Im Übrigen sei darauf hingewiesen, dass sich eine Phasenbeziehung zwischen den Magnetfeld-Komponenten Hₓ und H_{z} beispielsweise mit hoher Präzision dann ändert, wenn sich die Vorrichtung an einem dritten Ort 160 befindet, wobei der dritte Ort 160 beispielsweise mit hoher Präzision oberhalb des stromdurchflossenen Leiters 152 (bzw. an der Grenze zwischen zwei Bereichen) liegt.

Erfasst somit beispielsweise der erste Magnetfeld-Sensor 110 der Vorrichtung 100 die Magnetfeld-Komponente H_{z} in z-Richtung, und erfasst ferner der zweite Magnetfeld-Sensor 120 der Vorrichtung 100 die Magnetfeld-Komponente Hₓ in x-Richtung, kann beispielsweise in einem einfachsten Fall der Auswerter 130 durch Bestimmung der Phasenbeziehung zwischen den Magnetfeld-Sensor-Signalen 112 und 122 von den beiden Magnetfeld-Sensoren 110, 120 darauf schließen, ob sich die Vorrichtung links von dem stromdurchflossenen Leiter 152 oder rechts von dem stromdurchflossenen Leiter 152 befindet. Eine Veränderung der Phasenbeziehung zwischen den Magnetfeld-Sensor-Signalen 112, 122 deutet somit darauf hin, dass die Vorrichtung die Grenze zwischen einem ersten Bereich, z.B. einem linksseitigen Bereich, links des stromdurchflossenen Leiters 152, und einem zweiten Bereich, z.B. einem rechtsseitigen Bereich, rechts des stromdurchflossenen Leiters 152, überschritten hat. Somit kann der Auswerter 130, ansprechend auf eine Veränderung der Phasenbeziehung zwischen den Magnetfeld-Sensor-Signalen 112, 122 in sehr zuverlässiger Weise die Information 134 liefern, die anzeigt, dass die Vorrichtung (bzw. das Objekt oder die Person, die mit der Vorrichtung 100 versehen ist), die markierte Grenze überschritten hat.

Im Hinblick auf die Vorrichtung 100 sei darauf hingewiesen, dass natürlich das Referenzsignal 132 nicht notwendigerweise unmittelbar dem von dem zweiten Magnetfeld-Sensor 120 gelieferten Magnetfeld-Sensor-Signal 122 entsprechen muss. Vielmehr kann das Referenzsignal 132 auch unter Verwendung zusätzlicher Signalverbesserungsmechanismen bzw. Korrekturmechanismen unter Verwendung des von dem zweiten Magnetfeld-Sensor 120 gelieferten Magnetfeld-Sensor-Signals 122 erzeugt werden, wie im Folgenden noch ausführlich beschrieben wird. Dies ändert aber nichts an der grundsätzlichen Funktionsweise, wie sie anhand der Fig. 1a und 1b beschrieben wurde.

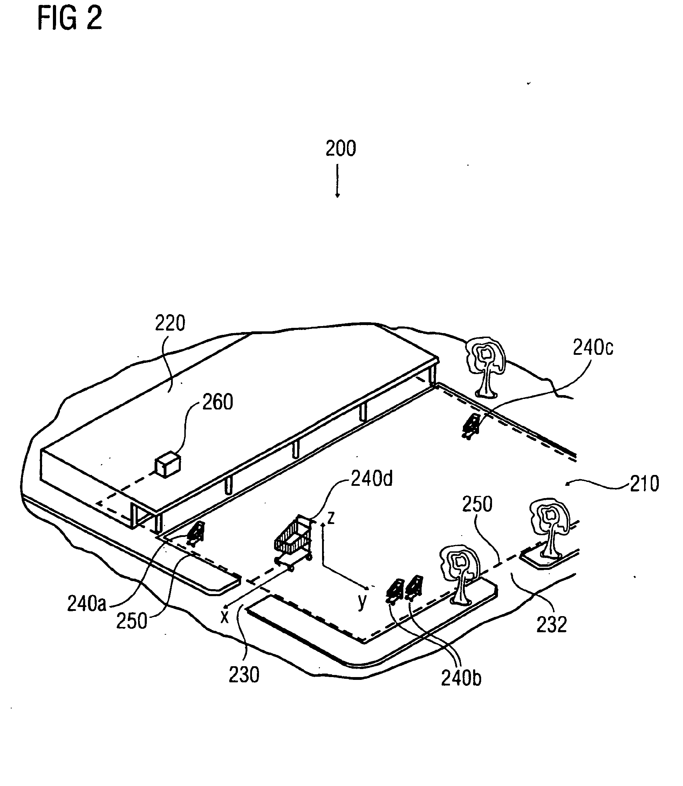

Im Folgenden wird ein typisches Anwendungsszenario beschrieben, in dem die Vorrichtung 100 eingesetzt werden kann. Fig. 2 zeigt zu diesem Zweck ein Funktionsprinzip eines Einkaufwagendiebstahlsystems bzw. eines Einkaufwagendiebstahlschutzsystems. In anderen Worten, Fig. 2 zeigt eine schematische Darstellung eines Szenarios, in dem die Vorrichtung 100 gemäß Fig. 1 eingesetzt werden kann. Das System gemäß der Fig. 2 ist in seiner Gesamtheit mit 200 bezeichnet.

Fig. 2 zeigt ganz allgemein ein Gelände eines Ladengeschäfts bzw. eines Einkaufzentrums. Das Gelände umfasst beispielsweise einen Vorplatz bzw. Parkplatz 210 sowie ein Geschäftsgebäude 220. Der Vorplatz oder Parkplatz 210 ist beispielsweise außerhalb des Geschäftsgebäudes 220 angeordnet. Der Vorplatz oder Parkplatz 210 kann aber auch Teil des Geschäftsgebäudes 210 sein oder beispielsweise überdacht sein. Der Vorplatz oder Parkplatz 210 umfasst im Übrigen beispielsweise eine oder mehrere Ausfahrten 230, 232, durch die ein Verlassen des Vorplatzes oder Parkplatzes 210 möglich ist.

Auf dem Parkplatz 210 sowie in dem Geschäftsgebäude 220 dürfen Kunden bzw. Angestellte beispielsweise Einkaufswägen 240a, 240b, 240c, 240d im Wesentlichen frei herumbewegen.

Allerdings soll bei einigen Ausführungsbeispielen vermieden werden, dass die Einkaufswägen den Bereich des Geschäftsgebäudes 220 bzw. des Vorplatzes oder Parkplatzes 210 verlassen. Zu diesem Zweck ist beispielsweise ein äußerer Umfang des Parkplatzes bzw. Vorplatzes 210, also des Bereichs, in dem die Einkaufswägen 240a, 240b, 240c, 240d bewegt werden dürfen, markiert. Der äußere Umfang des genannten Bereichs kann beispielsweise durch ein Magnetfeld markiert sein. Bei einigen Ausführungsbeispielen wird es bevorzugt, dass der äußere Umfang des genannten Bereichs, innerhalb dessen die Einkaufswägen 240a bis 240d bewegt werden dürfen, durch ein magnetisches Wechselfeld markiert ist. Das magnetische Wechselfeld kann beispielsweise durch einen Stromfluss erzeugt werden, der in einem verlegten Kabel 250, gekennzeichnet durch eine gestrichelte Linie, erzeugt wird. Das Kabel kann beispielsweise entlang einer Oberflächen in Form eines Flachkabels verlegt sein. Alternativ kann das Kabel aber auch unterirdisch, also beispielsweise vergraben, verlegt sein. Der Stromfluss in dem Kabel 250 kann beispielsweise durch einen Generator 260 erzeugt werden. Der Generator kann an jedem beliebigen Ort, also beispielsweise innerhalb des Geschäftsgebäudes 220 angeordnet sein, wie dies in der Fig. 2 gezeigt ist.

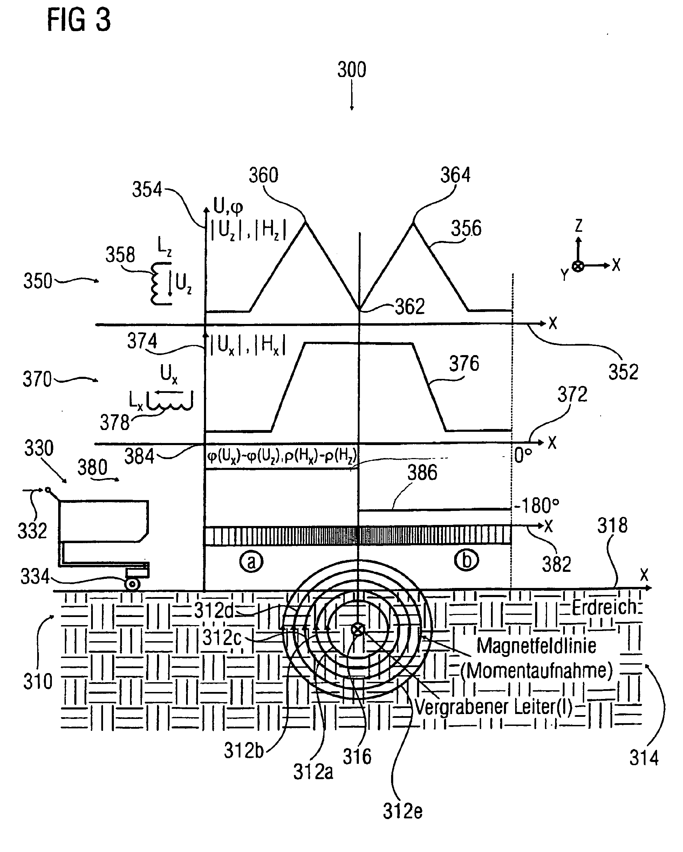

Weitere Details werden im Folgenden anhand der Fig. 3 erläutert. Die Fig. 3 zeigt zu diesem Zweck eine Querschnitt durch eine Anordnung mit einem unterirdisch verlegten Kabel. Die graphische Darstellung gemäß der Fig. 3 ist in ihrer Gesamt mit 300 bezeichnet. In anderen Worten, die Fig. 3 zeigt einen Querschnitt durch das Kabel und den Boden.

Die Fig. 3 zeigt in einer Querschnittsdarstellung 310 eine Momentaufnahme von magnetischen Feldlinien 312a-312e, die durch einen in dem Erdbereich (bzw. Bodenbereich) 314 vergrabenen Leiter 316 erzeugt werden. Im Hinblick auf die Feldlinien sei darauf hingewiesen, dass ein großer Teil der Feldlinien 312a-312e in dem Erdreich 314, also unterhalb einer Oberfläche bzw. Erdoberfläche 318 verlaufen, da ja der Leiter 316 in dem Erdreich 314 vergraben (bzw. allgemein unterhalb der Oberfläche 318 verlegt) ist. Ein gewisser Teil der Feldlinien 312c-312e erstreckt sich jedoch in den Bereich oberhalb der Oberfläche bzw. Erdoberfläche 318, wie aus der Fig. 3 unschwer ersichtlich ist.

Im Übrigen sie darauf hingewiesen, dass in der Querschnittsdarstellung 310 Richtungen der Feldlinien 312a-312e durch Pfeile angedeutet sind. Die entsprechende Feldrichtung ergibt sich beispielsweise zu einem Zeitpunkt, zu dem in dem vergrabenen Leiter 316 ein Stromfluss in die Zeichenebene hinein (angedeutet durch das Symbol ⊗) herrscht. Fließt allerdings in dem vergrabenen Leiter 316 ein Wechselstrom, so liegt nach einer halben Periodendauer eine umgekehrte Stromrichtung vor. Damit kehren sich nach einer halben Periodendauer des Wechselstroms die Richtungen des Magnetfelds bzw. die Richtungen der Feldlinien 312a-312e um.

In der Fig. 3 ist ferner ein Einkaufswagen 330 gezeigt, der durch eine Kraft 332 entlang der Oberfläche bzw. Erdoberfläche 318 geschoben werden kann. Der Einkaufswagen 330 umfasst beispielsweise ein drehbar gelagertes Vorderradbauteil 334. An dem drehbar gelagerten Vorderradbauteil 334 kann eine Vorrichtung 100, wie sie anhand der Fig. 1a beschrieben wurde, angebracht sein. Bei einigen Ausführungsbeispielen kann die Vorrichtung 100 sogar innerhalb des Vorderradbauteils 334 angeordnet sein.

Im Folgenden wird erläutert, welche Magnetfelder an dem Ort des Vorderradbauteils 334 auftreten, wenn sich der Einkaufswagen 330 in x-Richtung entlang der Oberfläche 318 (bei der er sich um eine Erdoberfläche bzw. um eine Oberfläche eines Bodenbelags handeln kann) bewegt.

Eine graphische Darstellung 350 beschreibt qualitativ einen örtlichen Verlauf einer Magnetfeldstärke entlang der x-Richtung. An einer Abszisse 352 ist die x-Position angetragen, und an einer Ordinate 354 ist ein Betrag |H_{z}| einer Komponente der magnetischen Feldstärke H in z-Richtung angetragen. Eine Kurve, die den Betrag |H_{z}| der z-Komponente der magnetischen Feldstärke in Abhängigkeit von einer Position in x-Richtung beschreibt, ist mit 356 bezeichnet. Wird ferner davon ausgegangen, dass die magnetische Feldstärkenkomponente in z-Richtung, also H_{z}, durch eine Spule 358 erfasst wird, deren Achse sich in z-Richtung erstreckt, so ist die in dieser z-Spule 358 induzierte Spannung U_{z} von ihrem Betrage |U_{z}| her zumindest näherungsweise parallel zu der z-Komponente H_{z} der magnetischen Feldstärke H. Insofern beschreibt die Kurve 356 nicht nur einen örtlichen Verlauf des Betrags der magnetischen Feldstärke in z-Richtung (|H_{z}|), sondern auch den Betrag der in der z-Spule 358 induzierten Spannung |U_{z}|.

Es sei allerdings darauf hingewiesen, dass eine Phasenverschiebung zwischen der in der z-Spule induzierten Spannung U_{z} und der z-Komponente H_{z} der magnetischen Feldstärke bestehen kann, wie dies für einen Fachmann wohlbekannt ist.

Aus der graphischen Darstellung 350 ist ersichtlich, dass der Betrag |H_{z}| der z-Komponente der magnetischen Feldstärke H in großer Entfernung von dem stromdurchflossenen Leiter 316 sehr klein ist. Dies ergibt sich einfach dadurch, dass die magnetische Feldstärke in einem idealisierten Fall umgekehrt proportional zu dem Abstand von dem stromdurchflossenen Leiter 316 ist. Bei Annäherung an den stromdurchflossenen Leiter steigt die z-Komponente der magnetischen Feldstärke zunehmend an. Allerdings nimmt der Betrag der z-Komponente der magnetischen Feldstärke im Idealfall an einem Ort senkrecht oberhalb des stromdurchflossenen Leiters einen Wert von Null an. Dies ist anhand der Feldlinien 312a-312e leicht verständlich. Senkrecht oberhalb des stromdurchflossenen Leiters 316 verlaufen die Feldlinien nämlich im Idealfall waagrecht. In anderen Worten, bei Annäherung an den stromdurchflossenen Leiter steigt der Betrag der z-Komponente der magnetischen Feldstärke ausgehend von einem sehr geringen Wert zunächst auf einen Maximalwert 360 an und sinkt dann bei weiterer Annäherung an den Leiter 316 wieder ab. An einem Ort senkrecht oberhalb des stromdurchflossenen Leiters 316 geht der Betrag der z-Komponente der magnetischen Feldstärke im Idealfall sogar auf einen Minimalwert 362 von etwa Null zurück. Bei einer weiteren Bewegung steigt der Betrag der z-Komponente der magnetischen Feldstärke wieder an, um einen zweiten Maximalwert 364 zu erreichen. Daraufhin nimmt der Betrag der magnetischen Feldstärke bei weiterer Fortbewegung in x-Richtung wieder ab.

Eine weitere graphische Darstellung 370 beschreibt einen örtlichen Verlauf einer x-Komponente der magnetischen Feldstärke. Eine Abszisse 372 beschreibt eine Position in x-Richtung, und eine Ordinate 374 beschreibt einen Betrag der x-Komponente der magnetischen Feldstärke.

Eine Kurve 376 beschreibt den Betrag der x-Komponente der magnetischen Feldstärke in Abhängigkeit von der x-Koordinate. Der Betrag der x-Komponente der magnetischen Feldstärke **H** ist mit |Hₓ| bezeichnet. Der Betrag |Hₓ| der x-Komponente der magnetischen Feldstärke ist in großem Abstand von dem stromdurchflossenen Leiter 316 sehr gering. Bei Annäherung an den stromdurchflossenen Leiter 316 steigt der Betrag der x-Komponente der magnetischen Feldstärke zunächst rasch an und bleibt dann in der Nähe des stromdurchflossenen Leiters 316 auf einem zumindest näherungsweise gleichmäßig hohen Niveau. Nach dem Überschreiten des Leiters nimmt der Betrag der x-Komponente der magnetischen Feldstärke schließlich wieder ab.

Im Übrigen sei darauf hingewiesen, dass die x-Komponente der magnetischen Feldstärke beispielsweise durch eine Spule 378 erfasst werden kann, deren Achse in x-Richtung orientiert ist. Ein Betrag der in der x-Spule 378 induzierten Spannung (auch mit |Uₓ| bezeichnet) ist beispielsweise zumindest näherungsweise proportional zu einem Betrag der x-Komponente der magnetischen Feldstärke. Freilich kann eine Phasenverschiebung, z.B. um 90°, zwischen der in der x-Spule 378 induzierten Spannung Uₓ und der x-Komponente Hₓ der magnetischen Feldstärke **H** bestehen, wie es dem Fachmann wohl bekannt ist.

Aus den graphischen Darstellungen 350, 370 ist ersichtlich, dass zumindest im Idealfall im Hinblick auf die Beträge der Komponenten Hₓ und H_{z} der magnetischen Feldstärke keine Unterschiede zwischen einem Bereich linkseitig des stromdurchflossenen Leiters 316 und einem Bereich rechtsseitig des stromdurchflossenen Leiters 316 bestehen.

In einer graphischen Darstellung 380 ist eine Phasenverschiebung zwischen der x-Komponente Hₓ und der z-Komponente H_{z} der magnetischen Feldstärke **H** gezeigt. Eine Abszisse 382 beschreibt wiederum die x-Koordinate, und eine Ordinate 384 beschreibt eine Phasenverschiebung ϕ(Hₓ)-ϕ(H_{z}). Die Phasenverschiebung zwischen der in der x-Spule 378 induzierten Spannung Uₓ und der in der z-Spule 358 induzierten Spannung U_{z}, die auch mit ϕ(Uₓ)-ϕ(U_{z}) bezeichnet ist, entspricht im Wesentlichen der Phasenverschiebung zwischen der x-Komponente der magnetischen Feldstärke und der z-Komponente der magnetischen Feldstärke.

Ein Verlauf der genannten Phasenverschiebung in Abhängigkeit von der x-Koordinate ist durch eine Kurve 386 beschrieben. Wie aus der graphischen Darstellung 380 ersichtlich ist, beträgt die Phasenverschiebung in einem Bereich linkseits des stromdurchflossenen Leiters 316 (auch mit "a" bezeichnet) beispielsweise etwa 0°. So ist aus der Fig. 3 ersichtlich, dass die Feldlinien 312a-312e in einem Bereich linksseits des stromdurchflossenen Leiters 316 und oberhalb der Oberfläche 318 nach rechts oben, also in positive x-Richtung und positive z-Richtung verlaufen. In einem Bereich rechtsseits des stromdurchflossenen Leiters 316, der auch mit "b" gekennzeichnet ist, beträgt die genannte Phasenverschiebung ϕ(Hₓ)-ϕ(H_{z}) 180° bzw. -180°. So ist es aus der Fig. 3 unschwer ersichtlich, dass in dem Bereich "b" rechtsseits des stromdurchflossenen Leiters 316 und oberhalb der Oberfläche 318 die magnetischen Feldlinien nach rechts unten, also in positive x-Richtung und in negative z-Richtung, verlaufen.

Somit ist ersichtlich, dass ein Überschreiten einer durch das Magnetfeld markierten, in vertikaler Richtung verlaufenden Grenze, also der Grenze zwischen den Bereichen "a" linksseits des stromdurchflossenen Leiters und "b" rechtsseits des stromdurchflossenen Leiters 316, durch Auswertung der Phasendifferenz ϕ(Hₓ)-ϕ(H_{z}) bzw. der Phasendifferenz ϕ(Uₓ)-ϕ(U_{z}) detektiert werden kann. Dies gilt im Übrigen auch dann, wenn der stromdurchflossene Leiter 316 durch einen Wechselstrom durchflossen wird, da der gezeigte Verlauf der Phasenverschiebung zeitunabhängig besteht.

Es sei im Übrigen darauf hingewiesen, dass Magnetfeld-Sensor-Signale, die die magnetische Feldstärke (bzw. eine entsprechende magnetische Flussdichte) beschreiben, nicht nur durch Spulen, sondern auch durch andere Sensoren erzeugt werden können. So können anstelle der x-Spule 378 zur Erfassung der x-Komponente der magnetischen Feldstärke beliebige andere Magnetfeld-Sensoren verwendet werden. Beispielsweise kann ein Hall-Magnetfeld-Sensor anstelle einer Spule zur Erfassung der magnetischen Feldstärke bzw. der magnetischen Flussdichte verwendet werden. Alternativ können auch beliebige andere Sensoren verwendet werden, die es ermöglichen, zumindest eine Richtung der magnetischen Feldstärke bzw. der magnetischen Flussdichte zu detektieren. Auch die z-Spule 358 kann selbstverständlich durch einen beliebigen Magnetfeld-Sensor ersetzt werden, so lange es möglich ist, damit die Richtung der magnetischen Feldstärke bzw. der magnetischen Flussdichte zu erfassen.

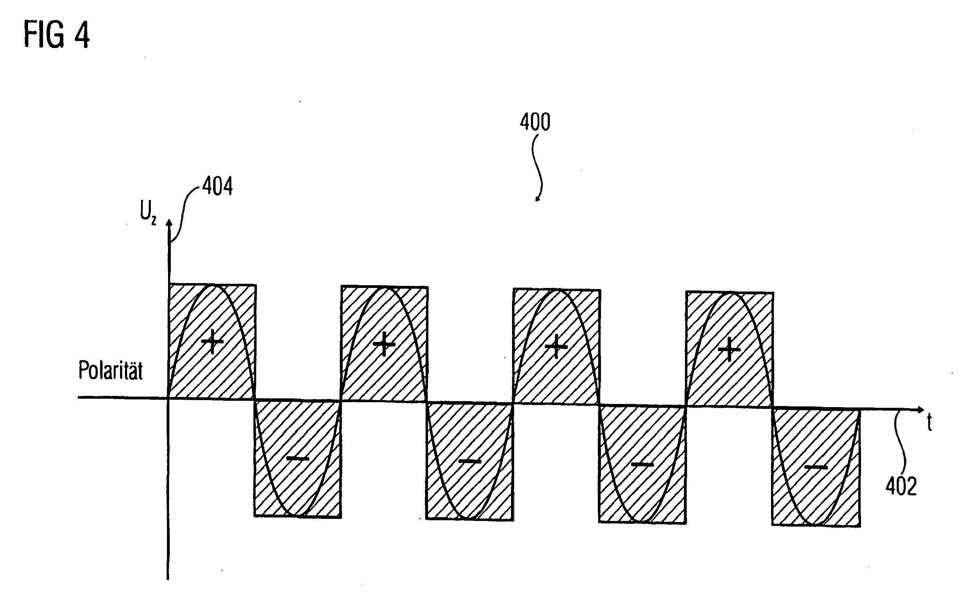

Fig. 4 zeigt im Übrigen eine schematische Darstellung eines Zeitverlaufs der in der z-Spule 358 induzierten Spannung U_{z}. Die graphische Darstellung der Fig. 4 ist in ihrer Gesamtheit mit 400 bezeichnet. An einer Abszisse 402 ist die Zeit t angetragen. An einer Ordinate 404 ist die in der z-Spule 358 induzierte Spannung U_{z} angetragen. Wird davon ausgegangen, dass in dem stromdurchflossenen Leiter 316 ein Stromfluss eingeprägt ist, der zumindest näherungsweise sinusförmig ist, so ist die in der z-Spule 358 induzierte Spannung U_{z} ebenso näherungsweise sinusförmig, wie dies aus der Fig. 4 ersichtlich ist. Wie aus der Fig. 4 ersichtlich ist, existieren Zeitintervalle, während derer die Spannung U_{z} größer als Null ist, U_{z} also eine positive Polarität ("+") aufweist. Ferner existieren Zeitintervalle, während derer die Spannung U_{z} eine negative Polarität ("-") aufweist.

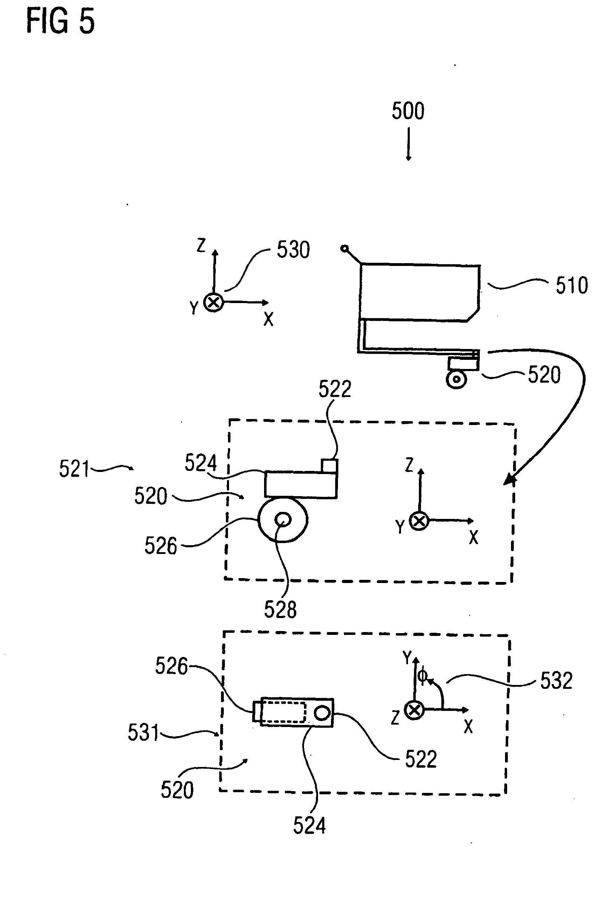

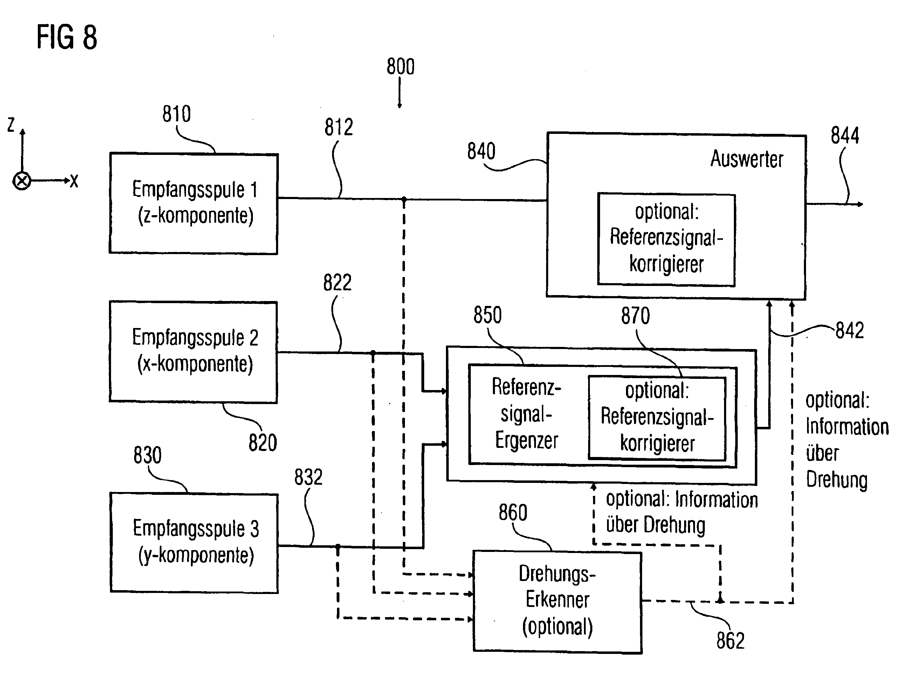

Im Folgenden werden anhand der Fig. 5, 6 und 7 einige Probleme erläutert, die sich bei der Auswertung der Phasenbeziehung zwischen der x-Komponente der magnetischen Feldstärke und der z-Komponente der magnetischen Feldstärke ergeben. Zudem wird anhand der Fig. 8 eine Vorrichtung beschrieben, mit der die im Folgenden erläuterten Probleme gelöst werden können.

Fig. 5 zeigt eine schematische Darstellung eines im Folgenden verwendeten Koordinatensystems, beispielsweise eines Koordinatensystems für Spulen (oder Magnetfeldsensoren) am Wagenrand. Die schematische Darstellung gemäß der Fig. 5 ist in ihrer Gesamtheit mit 500 bezeichnet. Die Darstellung 500 zeigt einen Einkaufswagen 510 mit einem drehbar gelagerten Vorderradbauteil 520. Ferner ist ein Koordinatensystem 530 gezeigt. Bei dem Koordinatensystem 530 handelt es sich beispielsweise um ein rechtwinkliges bzw. kartesisches Koordinatensystem. Die x-Richtung ist zur Veranschaulichung nach rechts angetragen. Die y-Richtung verläuft in die Zeichenebene hinein. Die z-Richtung verläuft nach oben.

Die Fig. 5 zeigt ferner eine vergrößerte schematische Darstellung des drehbar gelagerten Vorderradbauteils 520. Eine schematische Darstellung 521 zeigt eine Seitenansicht des Vorderradbauteils 520. Das Vorderradbauteil 520 umfasst eine drehbar gelagerte Achse 522, die sich, zumindest näherungsweise, in vertikaler Richtung, also in z-Richtung erstreckt. Das Vorderradbauteil 520 umfasst ferner einen Körper 524. An dem Körper 524 ist das eigentliche Rad 526 drehbar angebracht. Das Rad 526 ist um eine Achse 528, die sich im Wesentlichen in der y-Richtung erstreckt, drehbar gelagert angebracht.

Es sei hier darauf hingewiesen, dass die Fig. 5 nicht als detaillierte mechanische Darstellung, sondern lediglich als schematische Zeichnung zu verstehen ist. Fig. 5 dient im Wesentlichen dazu, in schematischer Weise beispielhaft zu beschreiben, in welchen Richtungen die einzelnen Bauteile angeordnet sein können bzw. wie ein beispielhaftes Koordinatensystem definiert sein kann. Eine anderweitige Definition des Koordinatensystems ändert natürlich nichts an dem hier beschriebenen Sachverhalt.

Eine weitere schematische Darstellung 531 zeigt eine Draufsicht auf das Vorderradbauteil 520. In der schematischen Darstellung 531 ist wiederum die näherungsweise in z-Richtung verlaufende Achse 520 (diesmal in Draufsicht) ersichtlich. Ferner ist auch der Körper 524 des Radbauteils 520 in Draufsicht ersichtlich. Zudem zeigt die schematische Darstellung 531 einen kleinen Teil des Rades 526, während ein größerer Teil des Rades 526 durch den Körper 524 des Radbauteils 520 verdeckt ist. Dies ist durch eine gestrichelte Linie angedeutet. Im Übrigen sei darauf hingewiesen, dass in der schematischen Darstellung 531 die x-Richtung nach rechts verläuft, die y-Richtung nach oben verläuft und die z-Richtung aus der Zeichenebene heraus verläuft, wie durch ein Koordinatensystem 532 angedeutet ist.

Es sei hier darauf hingewiesen, dass das durch den Stromdurchflossenen Leiter (z.B. den Leiter 152, das Kabel 250 oder den Leiter 316) erzeugte Magnetfeld jeweils in einem Koordinatensystem der entsprechenden Vorrichtung (z.B. der Vorrichtung 100) ausgewertet wird. In anderen Worten, die Lage der entsprechenden Auswertevorrichtung (z.B. der Vorrichtung 100) relativ zu dem durch den Stromdurchflossenen Leiter erzeugten Magnetfeld entscheidet darüber, welche Magnetfeldkomponenten in der Vorrichtung (z.B. in der Vorrichtung 100) detektiert werden. Wird davon ausgegangen, dass die Vorrichtung 100 beispielsweise in dem Körper 524 des Vorderradbauteils 520 angeordnet ist, so dreht sich das entsprechende Koordinatensystem mit dem Körper 524 des Vorderradbauteils 520 mit. Ganz allgemein lässt sich sagen, dass sich das Koordinatensystem der erfindungsgemäßen Vorrichtung, z.B. der Vorrichtung 100, mit einer Drehung der erfindungsgemäßen Vorrichtung bzw. des Objekts oder der Person, an der die erfindungsgemäße Vorrichtung angebracht ist, mitdreht.

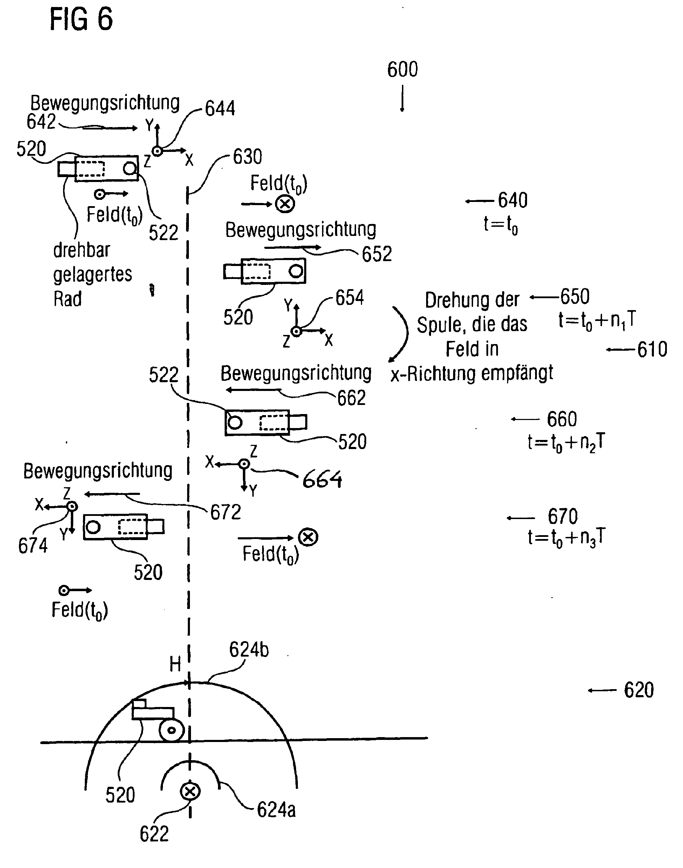

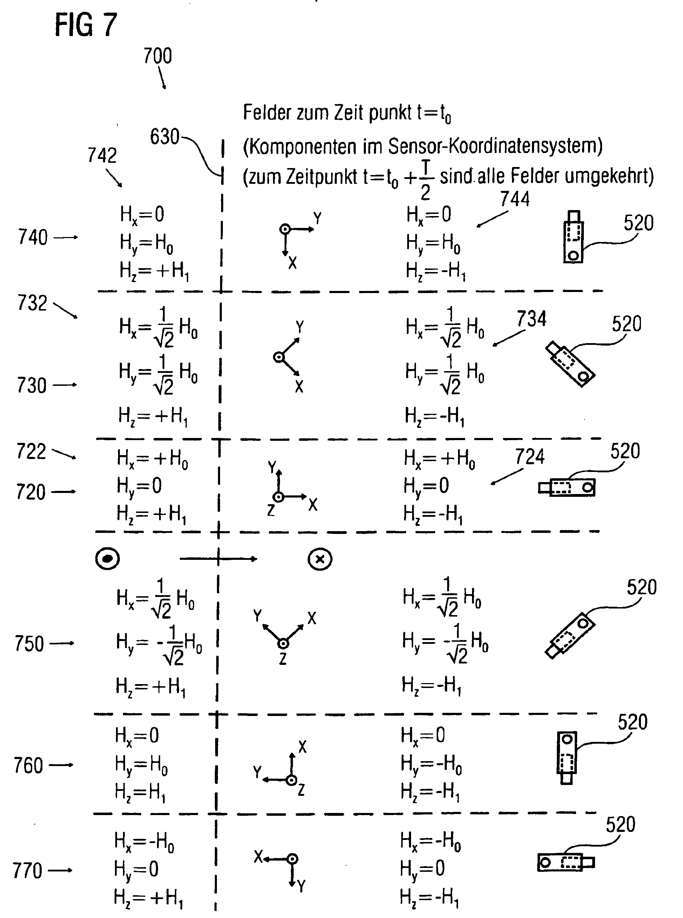

Im Folgenden wird diese Problematik an dem Beispiel eines Vorderradbauteils eines Einkaufwagens anhand der Fig. 6 und 7 erläutert. Fig. 6 zeigt eine schematische Darstellung eines Szenarios, in dem die erfindungsgemäße Vorrichtung (z.B. die Vorrichtung 100) zum Einsatz kommen kann. Im Hinblick auf die Fig. 6 wird davon ausgegangen, dass die erfindungsgemäße Vorrichtung an dem Körper 524 des Vorderradbauteils 520 angebracht bzw. in dem Körper 524 angeordnet ist. Die schematische Darstellung der Fig. 6 ist in ihrer Gesamtheit mit 600 bezeichnet. Die schematische Darstellung 600 umfasst eine Draufsicht 610, die das Vorderradbauteil 520, wie es anhand der Fig. 5 beschrieben wurde, in verschiedenen Bewegungszuständen zeigt. Eine Querschnittsdarstellung 620 zeigt im Übrigen einen Querschnitt durch die Gesamtanordnung, einschließlich eines stromdurchflossenen Leiters. In der Draufsicht 610 ist eine Grenze 630 gezeigt, die durch ein magnetisches Wechselfeld markiert ist. Die markierte Grenze ist durch eine gestrichelte Linie 630 gekennzeichnet. Die Draufsicht 610 zeigt eine Momentaufnahme des Magnetfelds zu einem bestimmten Zeitpunkt t₀. Zu diesem Zeitpunkt tritt das Magnetfeld links der Grenze 630 aus der Zeichenebene heraus und verläuft rechts der Grenze 630 in die Zeichenebene hinein. Ein Querschnitt des Magnetfelds in einem stromdurchflossenen Leiter ist in der Querschnittsdarstellung 620 gezeigt, wobei magnetische Feldlinien mit 624a und 624b bezeichnet sind. Die Position des Vorderradbauteils 520 zu einem Zeitpunkt t₀ ist in einer ersten Zeile 640 der Draufsicht 610 gezeigt. Das Vorderradbauteil 520 befindet sich zu dem Zeitpunkt t = t₀ links der markierten Grenze 630 und bewegt sich nach rechts, also auf die Grenze 630 zu, wie durch den Pfeil 642 angedeutet ist. Die Achse 522 des Vorderradbauteils 520 befindet sich bei dieser Bewegungsrichtung auf der rechten Seite des Vorderradbauteils 520, wie leicht nachvollziehbar ist. In der ersten Zeile 640 ist ferner ein zugehöriges Koordinatensystem 644 eingezeichnet, das an dem Vorderradbauteil 520 festgemacht ist.

Die Situation zu einem zweitem Zeitpunkt t = t₀+n₁ T ist in der zweiten Zeile 650 der Draufsicht 610 gezeigt. n₁ sei hierbei eine ganze Zahl, und T bezeichnet eine Periodendauer des magnetischen Wechselfeldes bzw. des in dem stromdurchflossenen Leiter 622 fließenden Wechselstroms. Zu dem zweiten Zeitpunkt befindet sich das Vorderradbauteil 520 rechts der markierten Grenze 630 und bewegt sich nach rechts, wie durch einen Bewegungsteil 652 angedeutet ist. Ein zu dem Körper 524 des Vorderradbauteils 520 gehöriges Koordinatensystem ist mit 654 bezeichnet.

Eine dritte Zeile 660 beschreibt einen Zustand zum Zeitpunkt t = t₀+n₂T. Dabei wird davon ausgegangen, dass n₂ eine ganze Zahl ist, wobei gilt: n₂>n₁. Es wird davon ausgegangen, dass sich das Vorderradbauteil 520 zu dem dritten Zeitpunkt nach links bewegt. In anderen Worten, eine Bewegungsrichtung zu dem dritten Zeitpunkt (dargestellt durch einen Bewegungspfeil 662) hat sich gegenüber der Bewegungsrichtung zu dem zweiten Zeitpunkt (dargestellt durch den Bewegungspfeil 652) umgekehrt. Wie unschwer nachvollziehbar ist, dreht sich der Körper 524 des Vorderradbauteils 520. Durch die Umkehr der Bewegungsrichtung zu dem dritten Zeitpunkt befindet sich somit die Achse 522 im Wesentlichen links von dem Körper 524 des Vorderradbauteils 520. Mit anderen Worten, der Körper 524 des Vorderradbauteils 520 hat sich zwischen dem zweiten Zeitpunkt (gezeigt in der zweiten Zeile 650) und dem dritten Zeitpunkt (gezeigt in der dritten Zeile 660) um ca. 180° gedreht. Damit dreht sich auch das dem Körper 524 des Vorderradbauteils 520 zugeordnete Koordinatensystem. Das entsprechende Koordinatensystem zu dem dritten Zeitpunkt ist mit 564 bezeichnet.

Zu dem zweiten Zeitpunkt und dem dritten Zeitpunkt dreht sich somit insbesondere ein Magnetfeld-Sensor, der eine x-Komponente des Magnetfelds (bezogen auf das an dem Körper 524 festgemachte Koordinatensystem) detektiert, um 180°. Ebenso dreht sich zwischen dem zweiten Zeitpunkt und dem dritten Zeitpunkt ein Magnetfeld-Sensor, der die y-Komponente des Magnetfelds (bezogen auf ein an dem Körper 524 festgemachtes Koordinatensystem) detektiert, um 180°. Eine Hauptempfindlichkeitsrichtung eines Magnetfeld-Sensors, der eine Magnetfeldkomponente in z-Richtung (bezogen auf das an dem Körper 524 festgemachte Koordinatensystem) detektiert, bleibt hingegen zwischen dem zweiten Zeitpunkt und dem dritten Zeitpunkt unverändert. Somit ist festzuhalten, dass die Drehung des Vorderradbauteils 520 zwischen dem zweiten Zeitpunkt und dem dritten Zeitpunkt dazu führt, dass sich beispielsweise eine Phasenbeziehung zwischen einer x-Komponente des Magnetfelds (betrachtet in dem an dem Körper 524 festgemachten Koordinatensystem) und einer z-Komponente des Magnetfelds (ausgewertet in dem an dem Körper 524 festgemachten Koordinatensystem) um etwa 180° verändert. Diese Veränderung der Phasenbeziehung ist nicht etwa durch ein Überschreiten der Grenze 630 zwischen dem zweiten Zeitpunkt und dem dritten Zeitpunkt bedingt, (die Grenze 630 wird zwischen dem zweiten Zeitpunkt und dem dritten Zeitpunkt ja gar nicht überschritten), sondern ist vielmehr durch eine Drehung des Vorderradbauteils 520 um die z-Achse bedingt.

Somit ist ersichtlich, dass beispielsweise eine Veränderung der Phasenbeziehung zwischen der x-Komponente des Magnetfelds und der z-Komponente des Magnetfelds, ausgewertet jeweils in einem Koordinatensystem, das beispielsweise an dem Vorderradbauteil 520 (allgemein: an der erfindungsgemäßen Vorrichtung) festgemacht ist, für sich genommen in manchen Fällen (beispielsweise wenn das Vorderradbauteil 520 bzw., allgemein, die erfindungsgemäße Vorrichtung, drehbar ist) noch keinen eindeutigen Rückschluss darauf ermöglicht, dass die Grenze 630 überschritten wurde.

So tritt eine Veränderung der besagten Phasenbeziehung nämlich sowohl beim Überschreiten der durch das magnetische Wechselfeld markierten Grenze 630 als auch bei einer Drehung des Vorderradbauteils 620 bzw. Vorrichtung 100 um die z-Achse (um etwa 180°) auf. Der letztere Effekt kann vernachlässigt werden, wenn beispielsweise sichergestellt ist, dass sich das Vorderradbauteil 520 nicht um die z-Achse dreht, wenn etwa beispielsweise ein richtungsmäßig festgelegtes Vorderradbauteil verwendet wird. Ebenso tritt der letztgenannte Effekt nicht störend in Erscheinung, wenn die erfindungsgemäße Vorrichtung so geführt ist, dass eine Drehung um 180° in der Nähe der markierten Grenze 630 verhindert wird.

Aus Gründen der Vollständigkeit zeigt eine vierte Zeile 670 der Draufsicht 610 einen Zustand zu einem vierten Zeitpunkt t = t₀+n₃T. n₃ ist eine ganze Zahl mit n₃>n₂. Zu dem vierten Zeitpunkt, wie es in der vierten Zeile 670 gezeigt ist, hat das Vorderradbauteil 520 die markierte Grenze 630 wieder überschritten und befindet sich auf der linken Seite der markierten Grenze 630. Ferner wird von einer Bewegung nach links ausgegangen, wie diese durch den Pfeil 672 dargestellt ist. Ein an dem Körper 524 des Vorderradbauteil 520 festgemachtes Koordinatensystem 674 weist, zumindest näherungsweise, die gleiche Orientierung auf wie das Koordinatensystem 564 zu dem dritten Zeitpunkt.

Zusammenfassend ist somit festzuhalten, dass eine Drehung des Vorderradbauteils 520 (oder allgemeiner, der erfindungsgemäßen Vorrichtung 100) die Schwierigkeit mit sich bringt, dass sich das an dem Vorderradbauteil 520 bzw. an der Vorrichtung 100 festgemachte Koordinatensystem mitdreht. Diese Drehung des an dem Vorderradbauteil 520 bzw. an der Vorrichtung 100 festgemachten Koordinatensystem kann im ungünstigsten Fall dazu führen, dass es zu einer Veränderung der Phasenbeziehung zwischen zwei Magnetfeldkomponenten kommt, die allein durch die Drehung des Vorderradbauteils 520 bzw. der Vorrichtung 100 bedingt ist, und die nicht durch ein Überschreiten der markierten Grenze bedingt ist. Somit besteht bei einigen Ausführungsbeispielen der vorliegenden Erfindung der Wunsch, eine derartige, durch eine Drehung bedingte Veränderung der Phasenbeziehung zu erkennen, und zu verhindern, dass die Vorrichtung 100 in diesem Fall fälschlich ein Überschreiten der Magnetgrenze (z.B. der Grenze 630) anzeigt.

Zur weiteren Veranschaulichung beschreibt die tabellarische Darstellung der Fig. 7 die Komponenten Hₓ, Hy und H_{z} des Magnetfelds bei verschiedenen Orientierungen eines Koordinatensystems mit Richtungen x, y und z.

Die tabellarische Darstellung der Fig. 7 ist in ihrer Gesamtheit mit 700 bezeichnet. Die tabellarische Darstellung der Fig. 7 zeigt eine durch ein Magnetfeld markierte Grenze 630, die durch eine gestrichelte Linie gezeichnet ist. Es wird hier davon ausgegangen, dass das Magnetfeld eine Konfiguration aufweist, wie sie beispielsweise anhand der Fig. 6 erläutert wurde. Ferner sei darauf hingewiesen, dass die Darstellung gemäß der Fig. 7 Feldkomponenten zu einem Zeitpunkt t=t₀ beschreibt. Zu einem Zeitpunkt t=t₀+T/2 weisen alle Feldkomponenten eine umgekehrte Richtung und damit ein umgekehrtes Vorzeichen auf, wie unschwer verständlich ist. Im Hinblick auf das Magnetfeld wird angenommen, dass eine beispielhafte Feldlinie des Magnetfelds zu dem Zeitpunkt t₀ links der Grenze 630 nach vorne aus der Zeichenebene heraustritt, die Grenze 630 vor der Zeichenebene von links nach rechts überschreitet und auf der rechten Seite der Grenze 630 von vorne nach hinten die Zeichenebene durchtritt. Die tabellarische Darstellung 7 zeigt für verschiedene Fälle entsprechende, zueinander gedrehte, Koordinatensysteme, in denen das Magnetfeld ausgewertet wird. Die Drehung der Koordinatensysteme kann beispielsweise einer Drehung des Vorderradbauteils 520 bzw. eine Drehung der Vorrichtung 100 gemäß der Fig. 1 entsprechen. Die entsprechende Drehung des Vorderradbauteils 520 ist auf der rechten Seite der tabellarischen Darstellung gemäß der Fig. 7 dargestellt.

Eine Zeile 720 zeigt beispielsweise eine erste Ausrichtung des Vorderradbauteils 520, die auftritt, wenn der zugehörige Einkaufswagen die Grenze 630 von links nach rechts näherungsweise senkrecht überschreitet. Befindet sich das Vorderradbauteil 520 an einer bestimmten Position links der Grenze 630, so sind in einem an dem Vorderradbauteil festgemachten Koordinatensystem die mit 722 bezeichneten Magnetfeldkomponenten detektierbar. Befindet sich das Vorderradbauteil 520 hingegen an einer bestimmten Position rechts der Grenze 630, so sind entsprechend die mit 724 bezeichneten Magnetfeldkomponenten detektierbar. Ein Vergleich der Magnetfeldkomponenten 722 und 724 zeigt, durch die Komponente H_{z} in z-Richtung ihr Vorzeichen beim Überschreiten der Grenze 630 ändert.

Eine Zeile 730 beschreibt die Situation, wenn der Einkaufswagen die Grenze 630 schräg, in der Draufsicht der Fig. 7 beispielsweise nach rechts unten, überschreitet. Befindet sich das Vorderradbauteil 520 an der bestimmten Position links der Grenze 630, so treten dort die mit 732 bezeichneten Komponenten des Magnetfelds auf. Befindet sich das Vorderrad des Einkaufswagens hingegen an dem bestimmten Ort rechts der Grenze 630, so treten dort die mit 734 Magnetfeldkomponenten (bezogen auf das an dem Vorderradbauteil 520 festgemachte Koordinatensystem) auf. Aus einem Vergleich der Zeilen 720 und 730 ist ersichtlich, dass die Magnetfeldkomponente in z-Richtung (also H_{z}) unverändert bleibt, während sich hingegen die Magnetfeldkomponenten in x-Richtung und y-Richtung verändern.

Eine Zeile 740 zeigt die Situation, wenn sich der Einkaufswagen parallel zu der Grenze 630 bewegt. In der Draufsicht gemäß Fig. 7 kann sich der Einkaufswagen beispielsweise nach unten bewegen. Befindet sich das Vorderradbauteil 520 an dem bestimmten Ort links der Grenze 630, so sind in dem Koordinatensystem des Vorderradbauteils 520 die mit (742) bezeichneten Magnetfeldkomponenten detektierbar. Befindet sich das Vorderradbauteils 520 hingegen an dem bestimmten Ort rechts der Grenze 630, so sind die mit 744 bezeichneten Magnetfeldkomponenten detektierbar.

Aus der Zeile 720 ist ersichtlich, dass die Magnetfeldkomponente in x-Richtung als ein zuverlässiges, betragsmäßig großes Referenzsignal angesehen werden kann, wenn der Einkaufswagen bzw. das Vorderradbauteil 520 die Grenze 630 senkrecht oder nahezu senkrecht überschreitet. Bewegt sich der Einkaufswagen bzw. das Vorderradbauteil 520 hingegen nahezu parallel zu der Grenze 630, so wird die Magnetfeldkomponente in x-Richtung klein bzw. zu Null. Sie kann dann freilich nicht mehr als eine zuverlässige Quelle für ein Referenzsignal (zur Bestimmung einer relativen Phasenlage der Magnetfeldkomponente in z-Richtung) dienen.

Zeilen 750, 760 zeigen die Magnetfeldkomponenten in weiteren Situationen bzw. für weitere Ausrichtungen des Vorderradbauteils 520.

Eine Zeile 770 zeigt die Magnetfeldkomponenten für eine Bewegung des Einkaufwagens bzw. des Vorderradbauteils 520 von rechts nach links. Mit anderen Worten, die Zeilen 720 und 770 beschreiben die Situation für entgegengesetzte Bewegungsrichtungen. Aus Fig. 7 ist ersichtlich, dass eine Umkehr der Bewegungsrichtung, die mit einer Drehung des Vorderradbauteils 520 um 180° verbunden ist, zu einer Umkehr der Phasenbeziehung zwischen der x-Komponente des Magnetfelds und der z-Komponente des Magnetfelds führt. Während bei der Situation gemäß der Zeile 720 die x-Komponente und die z-Komponente des Magnetfelds links der Grenze 730 gleichphasig sind, sind bei der Situation gemäß der Zeile 770 die genannten Magnetfeldkomponenten links der Grenze 630 gegenphasig. Eine umgekehrte Situation liegt rechts der Grenze 630 vor, wie aus der Fig. 7 ersichtlich ist.

Im Folgenden wird anhand der Fig. 8 erläutert, wie trotz der genannten Probleme, die sich aus der Drehung des Vorderradbauteils 520 bzw. allgemein, aus der Drehung der erfindungsgemäßen Vorrichtung, ergeben, eine zuverlässige Detektion ermöglicht werden kann, um zu erkennen, ob bzw. wann die erfindungsgemäße Vorrichtung die markierte Grenze überschritten hat.

Fig. 8 zeigt ein Blockschaltbild einer erfindungsgemäßen Vorrichtung zum Erkennen, wenn ein Objekt oder eine Person eine durch ein magnetisches Feld markierte Grenze überschreitet. Die Vorrichtung gemäß der Fig. 8 ist in ihrer Gesamtheit mit 800 bezeichnet. Die Vorrichtung 800 umfasst einen ersten Magnetfeld-Sensor 810, der beispielsweise ausgelegt ist, um eine erste Magnetfeldkomponente zu detektieren. In anderen Worten, der erste Magnetfeld-Sensor 810 weist eine erste Hauptempfindlichkeitsrichtung auf. Bei dem ersten Magnetfeld-Sensor 810 handelt es sich beispielsweise um einen Magnetfeld-Sensor, der nicht nur den Betrag des Magnetfelds bestimmen kann, sondern der auch die Detektion der Richtung des Magnetfelds ermöglicht. Gemäß einem Ausführungsbeispiel handelt es sich bei dem ersten Magnetfeld-Sensor 810 um einen Magnetfeld-Sensor, der ausgelegt ist, um eine z-Komponente des magnetischen Feldes (bzw. der magnetischen Flussdichte) zu detektieren. In anderen Worten, bei einem Ausführungsbeispiel ist die Hauptempfindlichkeitsrichtung des ersten Magnetfeld-Sensors (810) in z-Richtung orientiert. Der erste Magnetfeld-Sensor (810) kann somit detektieren, ob die Komponente des Magnetfelds z.B. in positiver oder in entgegengesetzter, negativer z-Richtung orientiert ist.

Der erste Magnetfeld-Sensor 810 kann beispielsweise durch eine erste Empfangsspule realisiert werden. Diese erste Empfangsspule kann auch als z-Spule bezeichnet werden. Der erste Magnetfeld-Sensor 810 kann aber auch durch ein anderes geeignetes Sensorbauteil, z.B. eine Hall-Sonde, gebildet werden.

Die Vorrichtung 800 umfasst ferner einen zweiten Magnetfeld-Sensor 820. Der zweite Magnetfeld-Sensor 820 ist ausgelegt, um eine zweite Komponente (z.B. eine x-Komponente) der magnetischen Feldstärke **H** bzw. der magnetischen Flussdichte **B** zu detektieren. Mit anderen Worten, der zweite Magnetfeld-Sensor 820 weist eine zugehörige Hauptempfindlichkeitsrichtung auf, die beispielsweise in x-Richtung orientiert ist. Der zweite Magnetfeld-Sensor 820 kann, abgesehen von der unterschiedlichen Orientierung der Hauptempfindlichkeitsrichtung, dem ersten Magnetfeld-Sensor 810 sehr ähnlich sein. So wird es bevorzugt, dass der zweite Magnetfeld-Sensor 820 in der Lage ist, eine Richtung der magnetischen Feldstärke bzw. der magnetischen Flussdichte zu detektieren, also beispielsweise eine magnetische Feldstärke in positiver x-Richtung von einer magnetischen Feldstärke in negativer x-Richtung zu unterscheiden.

Der zweite Magnetfeld-Sensor 820 kann beispielsweise eine zweite Empfangsspule umfassen, die auch als x-Spule bezeichnet werden kann. Alternativ dazu können andere geeignete Sensorbauteile, wie z.B. ein Hall-Sensorbauteil, zum Einsatz kommen.

Die Vorrichtung 800 umfasst ferner einen dritten Magnetfeld-Sensor 830, der ausgelegt ist, um eine Magnetfeldkomponente in einer dritten Richtung zu detektieren. Mit anderen Worten, der dritte Magnetfeld-Sensor 830 weist beispielsweise eine Hauptempfindlichkeitsrichtung auf, die sich von der Hauptempfindlichkeitsrichtung des ersten Magnetfeld-Sensors 810 und auch von der Hauptempfindlichkeitsrichtung des zweiten Magnetfeld-Sensors 820 unterscheidet. Beispielsweise kann der dritte Magnetfeld-Sensor 830 ausgelegt sein, um eine y-Komponente der magnetischen Feldstärke bzw. eine y-Komponente der magnetischen Flussdichte zu detektieren. Der dritte Magnetfeld-Sensor 830 ist bevorzugt ausgelegt, um Orientierungs-empfindlich zu arbeiten, um also beispielsweise eine magnetische Feldstärke in positiver y-Richtung von einer magnetischen Feldstärke in negativer y-Richtung zu unterscheiden.

Der dritte Magnetfeld-Sensor 830 kann beispielsweise eine dritte Empfangsspule umfassen, die auch als y-Spule bezeichnet werden kann. Alternativ sind aber auch andere Typen von Sensorbauteilen verwendbar, z.B. ein oder mehrere Hall-Sensorbauteile.

In den obigen Ausführungen wurde davon ausgegangen, dass die z-Richtung die Hauptempfindlichkeitsrichtung des ersten Magnetfeld-Sensors 810 ist, dass die x-Richtung die Hauptempfindlichkeitsrichtung des zweiten Magnetfeld-Sensors 820 ist, und dass die y-Richtung die Hauptempfindlichkeitsrichtung des dritten Magnetfeld-Sensors 830 ist. Dabei wurde davon ausgegangen, dass die x-Richtung, die y-Richtung und die z-Richtung den Achsen eines kartesischen Koordinatensystems entsprechen, also paarweise senkrecht zueinander sind. Dies ist aber nicht zwingend erforderlich.

Ganz allgemein ist es ausreichend, wenn sich die Hauptempfindlichkeitsrichtungen der drei Magnetfeld-Sensoren 810, 820, 830 voneinander unterscheiden. Bei einem Ausführungsbeispiel beträgt der Winkel zwischen den Hauptempfindlichkeitsrichtungen der genannten drei Magnetfeld-Sensoren jeweils zumindest 25°. Bei einem weiteren Hauptempfindlichkeitsrichtungen jeweils zumindest 45°. Bei einem weiteren Ausführungsbeispiel ist die Hauptempfindlichkeitsrichtung des ersten Magnetfeld-Sensors 810 zumindest näherungsweise senkrecht zu einer Ebene, die durch die Hauptempfindlichkeitsrichtungen des zweiten Magnetfeld-Sensors 820 und des dritten Magnetfeld-Sensors 830 aufgespannt wird. In diesem Fall kann beispielsweise ein spitzer Winkel zwischen der Hauptempfindlichkeitsrichtung des ersten Magnetfeld-Sensors 810 und der aufgespanten Ebene zumindest 70° betragen. Ferner kann beispielsweise in diesem Fall ein Winkel zwischen den Hauptempfindlichkeitsrichtungen des zweiten Magnetfeld-Sensors 820 und des dritten Magnetfeld-Sensors 830 zumindest 45° betragen.

Zusammenfassend ist somit festzuhalten, dass die drei Magnetfeld-Sensoren 810, 820, 830 beispielsweise ausgelegt sein können, um drei verschiedene Komponenten einer magnetischen Feldstärke bzw. einer magnetischen Flussdichte zu detektieren. Die drei verschiedenen Komponenten können bei einem Ausführungsbeispiel paarweise zueinander senkrecht sein. Dies ist allerdings nicht dringend erforderlich.

Die Vorrichtung 800 umfasst ferner einen Auswerter 840, der ausgelegt ist, um ein Magnetfeld-Sensor-Signal 812 von dem ersten Magnetfeld-Sensor 810 zu empfangen. Das Magnetfeld-Sensor-Signal 812 beschreibt beispielsweise eine z-Komponente der magnetischen Feldstärke bzw. der magnetischen Flussdichte.

Der Auswerter 840 ist ferner ausgelegt, um ein Referenzsignal 842 zu empfangen. Ferner ist der Auswerter 840 beispielsweise ausgelegt, um eine Phasenbeziehung (z.B. eine Phasenverschiebung) zwischen dem Magnetfeld-Sensor-Signal 812 und dem Referenzsignal 842 (oder zwischen dem Magnetfeld-Sensor-Signal 812 und einem von dem Referenz-Signal 842 abgeleiteten phasenkorrigierten Referenzsignal) zu bestimmen. Der Auswerter 840 ist ausgelegt, um basierend auf der bestimmten Phasenbeziehung (bzw. Phasenverschiebung) eine Information 844 zu erzeugen, die anzeigt, dass die erfindungsgemäße Vorrichtung (bzw. ein Objekt oder eine Person, die mit der erfindungsgemäßen Vorrichtung 800 zu versehen ist) eine durch ein Magnetfeld markierte Grenze überschritten hat. Beispielsweise kann der Auswerter 840 ausgelegt sein, um ein Überschritten einer markierten Grenze zu erkennen und durch Ausgabe der Information 844 zu signalisieren, wenn sich die bestimmte Phasenbeziehung um mehr als einen vorbestimmten Veränderungs-Schwellwert verändert. Beispielsweise kann der Auswerter 840 ausgelegt sein, um ein Überschreiten der markierten Grenze durch Ausgäbe der Information 844 zu signalisieren, wenn sich die Phasenbeziehung um mehr als 90° oder um mehr als 160° ändert.

Allerdings kann der Auswerter 840 auch zusätzliche Mechanismen aufweisen, um beispielsweise eine Fehl-Detektion eines Überschreitens einer markierten Grenze zu vermeiden. Beispielsweise kann der Auswerter 840 ausgelegt sein, um die Signalisierung, die anzeigt, dass die markierte Grenze überschritten worden ist, zu unterdrücken, wenn eine Veränderung der Phasenbeziehung durch eine Drehung der Vorrichtung 800 verursacht wird. Details diesbezüglich werden im Folgenden noch näher erläutert.

Die Vorrichtung 800 umfasst ferner einen Referenzsignalerzeuger 850. Der Referenzsignalerzeuger 850 ist mit dem zweiten Magnetfeld-Sensor 820 gekoppelt, um von dem zweiten Magnetfeld-Sensor 820 ein zugehöriges Magnetfeld-Sensor-Signal 822 zu empfangen, das beispielsweise eine x-Komponente der magnetischen Feldstärke bzw. der magnetischen Flussdichte beschreibt. Der Referenzsignalerzeuger 850 kann ferner (optional) mit dem dritten Magnetfeld-Sensor 830 gekoppelt sein, um von dem dritten Magnetfeld-Sensor 830 ein entsprechendes Magnetfeld-Sensor-Signal 832 zu empfangen, das beispielsweise eine y-Komponente der magnetischen Feldstärke bzw. der magnetischen Flussdichte beschreibt. Der Referenzsignalerzeuger 850 ist ferner ausgelegt, um das Referenzsignal 842 zu erzeugen und an den Auswerter 840 zu liefern.

Die Vorrichtung 800 umfasst ferner optional einen Drehungs-Erkenner 860. Der Drehungs-Erkenner ist ausgelegt, um zumindest eines der Magnetfeld-Sensor-Signale 812, 822, 832 von den Magnetfeld-Sensoren 810, 820, 830 zu empfangen. Bei einem Ausführungsbeispiel ist der Drehungs-Erkenner 860 ausgelegt, um zumindest zwei der Magnetfeld-Sensor-Signale 812, 822, 832 zu empfangen. Bei einem weiteren Ausführungsbeispiel ist der Drehungs-Erkenner 860 ausgelegt, um zumindest das Magnetfeld-Sensor-Signal 822 von dem zweiten Magnetfeld-Sensor 820 und das Magnetfeld-Sensor-Signal 832 von dem dritten Magnetfeld-Sensor 830 zu empfangen. Der Drehungs-Erkenner 860 ist ferner ausgelegt, um eine Information 862 über eine Drehung der Vorrichtung 800 (z.B. relativ zu einem äußeren magnetischen Wechselfeld) zu liefern. Der Drehungs-Erkenner 860 ist beispielsweise entweder mit dem Referenzsignalerzeuger 850 gekoppelt, um die Information 862 über die Drehung an den Referenzsignalerzeuger 850 zu liefern, oder mit dem Auswerter 840 gekoppelt, um die Information 862 über die Drehung an den Auswerter 840 zu liefern. Freilich kann der Drehungs-Erkenner 860 auch sowohl mit dem Referenzsignalerzeuger 850 als auch mit dem Auswerter 840 gekoppelt sein, um die Information 862 über die Drehung sowohl an den Referenzsignalerzeuger 850 als auch an den Auswerter 840 zu liefern.

Im Folgenden werden verschiedene Aspekte der Vorrichtung 800 erläutert, die zu einer besonders hohen Zuverlässigkeit der Vorrichtung 800 beitragen.

Bei einem Ausführungsbeispiel ist der Referenzsignalerzeuger 850 ausgelegt, um sowohl das Magnetfeld-Sensor-Signal 822 von dem zweiten Magnetfeld-Sensor 820 als auch das Magnetfeld-Sensor-Signal 832 von dem dritten Magnetfeld-Sensor 830 zu empfangen, und um das Referenzsignal in Abhängigkeit von den beiden Magnetfeld-Sensor-Signalen 822, 832 zu erzeugen. Beispielsweise kann der Referenzsignalerzeuger 850 ausgelegt sein, um zu detektieren, welches der beiden Magnetfeld-Sensor-Signalen 822, 832 von dem zweiten Magnetfeld-Sensor 820 bzw. von dem dritten Magnetfeld-Sensor 830 stärker ist. Ferner kann der Referenzsignalerzeuger 850 beispielsweise das Stärkere der genannten Magnetfeld-Sensor-Signale 822, 832 als das Referenzsignal 842 auswählen.

Alternativ dazu kann der Referenzsignalerzeuger 850 natürlich das Referenz-Signal 842 auch durch eine Kombination der Magnetfeld-Sensor-Signale 822, 832 von dem zweiten Magnetfeld-Sensor 820 und dem dritten Magnetfeld-Sensor 830 erzeugen. Bei der entsprechenden Kombination kann der Referenzsignalerzeuger 850 die Magnetfeld-Sensor-Signale 822, 832 beispielsweise nach ihrer Stärke und/oder Zuverlässigkeit gewichten.

Bei einem weiteren Ausführungsbeispiel ist der Referenzsignalerzeuger 850 ausgelegt, um zu verhindern, dass sich eine Phasenlage des Referenzsignals sprunghaft wesentlich (also beispielsweise um mehr als 45°) verändert. Beispielsweise kann der Referenzsignalerzeuger 850 ausgelegt sein, um zu detektieren, ob das Magnetfeld-Sensor-Signal 822 von dem zweiten Magnetfeld-Sensor 820 und das Magnetfeld-Sensor-Signal 832 von dem dritten Magnetfeld-Sensor 830 eine gleiche oder eine entgegengesetzte Phasenlage aufweisen. Weisen die genannten Magnetfeld-Sensor-Signale 822, 832 eine entgegengesetzte Phasenlage auf, kann der Referenzsignalerzeuger 850 beispielsweise eine Phasenkorrektur durchführen, derart, dass sich die Phasenlage des Referenzsignals 842 nicht wesentlich ändert, wenn beispielsweise dazu übergegangen wird, das Magnetfeld-Sensor-Signal 832 statt dem Magnetfeld-Sensor 822 als Referenzsignal 842 zu verwenden oder umgekehrt. So kann der Referenzsignalerzeuger 850 beispielsweise ausgelegt sein, um dasjenige der Magnetfeld-Sensor-Signale 822, 832, das gerade nicht als Referenzsignal 842 ausgewählt ist, so Phasen zu korrigieren, dass die Phasenlage des gerade nicht als Referenzsignal ausgewählten Magnetfeld-Sensor-Signal an die Phasenlage des gerade als Referenzsignal 842 ausgewählten Magnetfeld-Sensor-Signals angenähert wird.

Alternativ dazu kann die entsprechende Phasenkorrektur natürlich auch unmittelbar bei der Erzeugung des Referenzsignals 842 erfolgen. Bei einem Ausführungsbeispiel kann die Phase des Referenzsignals verändert, beispielsweise invertiert, werden, wenn eine Veränderung im Hinblick darauf auftritt, von welchem der Magnetfeld-Sensor-Signale 822, 832 das Referenzsignal abgeleitet wird und wenn ferner eine derartige Korrektur erforderlich ist, um eine signifikante Veränderung der Phasenlage des Referenzsignals (beispielsweise um mehr als 45°) zu vermeiden.

Zusammenfassend kann somit festgehalten werden, dass der Referenzsignalerzeuger 850 beispielsweise ausgelegt sein kann, um ganz allgemein einer Veränderung der Phasenlage des Referenzsignals 842 entgegen zu wirken. Eine derartige Maßnahme ist besonders dann von großem Vorteil, wenn das Referenzsignal 842 nicht nur unter Verwendung eines einzigen Magnetfeld-Sensor-Signals 822, 832 erzeugt wird, denn mehrere Magnetfeld-Sensor-Signale 822, 832 können durchaus unterschiedliche Phasenlagen aufweisen, wie beispielsweise anhand der Fig. 7 ersichtlich ist.

Bei einem weiteren Ausführungsbeispiel umfasst die Vorrichtung 800 den Drehungs-Erkenner 860. Der Drehungs-Erkenner 860 kann dazu ausgelegt sein, um den Einfluss von Drehungen der Vorrichtung 800 auf die Information 844 zu verringern bzw. auszuschließen. Der Drehungs-Erkenner 860 ist beispielsweise ausgelegt, um anhand der durch die Magnetfeld-Sensoren 810, 820, 830 gelieferten Magnetfeld-Sensor-Signale 812, 822, 832 zu erkennen, wenn sich die Vorrichtung 800 in dem zur Markierung der Grenze verwendeten Magnetfeld dreht. Der Drehungs-Erkenner 860 kann zu diesem Zweck ein, zwei oder gar drei der Magnetfeld-Sensor-Signale 812, 822, 832 auswerten.

Bei einem weiteren Ausführungsbeispiel ist der Drehungs-Erkenner 860 beispielsweise ausgelegt, um die Magnetfeld-Sensor-Signale 822, 832 von dem zweiten Magnetfeld-Sensor 820 und dem dritten Magnetfeld-Sensor 830 auszuwerten. So kann beispielsweise durch eine kontinuierliche Auswertung der Magnetfeldkomponenten Hₓ und Hy in x-Richtung bzw. y-Richtung eine Drehung der Vorrichtung 800 verfolgt werden. Basierend auf der Detektion dieser Drehung der Vorrichtung 800 kann der Drehungs-Erkenner 860 beispielsweise die Information 862 erzeugen. Die Information 862 kann beispielsweise durch den Referenzsignalerzeuger 850 ausgewertet werden, um das Referenzsignal 842 (beispielsweise unter Verwendung eines optionalen Referenzsignal-Korrigierers 870) entsprechend zu korrigieren. Der optionale Referenzsignal-Korrigierer 870 kann dabei beispielsweise ausgelegt sein, um das Referenzsignal 842 so zu erzeugen, dass eine Phasenlage des Referenzsignals im Wesentlichen unabhängig von der Drehung der Vorrichtung 800 ist. Beispielsweise kann der Referenzsignal-Korrigierer ausgelegt sein, um das Referenzsignal 842 so zu erzeugen, dass eine Phasenlage des Referenzsignals bei einer Drehung der Vorrichtung um 360° höchstens um 90° ändert. Der Referenzsignal-Korrigierer 870 kann diese Korrektur erwirken, indem der Referenzsignal-Korrigierer abhängig von einem aktuellen Drehwinkel, wie er durch den Drehungs-Erkenner 860 festgestellt und durch die Information 862 beschrieben wird, beispielsweise ein geeignetes Signal aus den Magnetfeld-Sensor-Signalen 822, 832 auswählt und/oder eine Phasenkorrektur, beispielsweise durch Phasenveränderung um 180°, ausführt.

Bei einem weiteren Ausführungsbeispiel erfolgt die Berücksichtigung der Information 862 im Hinblick auf die Drehung der Vorrichtung 800 in dem Auswerter 840. Beispielsweise kann der Auswerter 840 eine Signalisierung, die anzeigt, dass die Vorrichtung 800 die markierte Grenze überschritten hat, unterdrücken, wenn die Information 862 anzeigt, dass sich die Vorrichtung 800 zumindest um einen vorbestimmten Winkel, also beispielsweise zumindest um 135°, oder um näherungsweise 180°, gedreht hat. Umfasst der Auswerter 840 eine derartige Funktionalität, so kann bei einigen Ausführungsbeispielen eine hohe Zuverlässigkeit der Vorrichtung 800 auch ohne Korrektur des Referenzsignal 842 erzielt werden.

Zusammenfassend ist festzuhalten, dass verschiedene Möglichkeiten existieren, um die Zuverlässigkeit der Vorrichtung 800 zu erhöhen. Einerseits kann bei der Erzeugung des Referenzsignals 842 eine Korrektur durchgeführt werden, durch die bewirkt wird, dass sich auch bei einer Drehung der Vorrichtung 800 die Phasenlage des Referenzsignals 842 nicht wesentlich verändert. Dies kann durch einfache Maßnahmen wie beispielsweise durch eine Angleichung der Phasenlagen der Magnetfeld-Sensor-Signale 822, 832 erreicht werden. Alternativ oder zusätzlich kann aber auch durch einen optionalen Drehungs-Erkenner 860 eine Drehung der Vorrichtung 800 erkannt werden, und die entsprechende Information 862 über die Drehung kann zur Korrektur des Referenzsignals 842 herangezogen werden.

Im Übrigen ist es auch möglich, die Information 862 über die Drehung unmittelbar dem Auswerter 840 zuzuführen, wobei der Auswerter bei Vorliegen einer entsprechend großen Drehung (beispielsweise um zumindest 90°, oder um zumindest 135°) erkennen kann, dass eine Veränderung einer Phasenbeziehung zwischen dem Magnetfeld-Sensor-Signal 812 von dem ersten Magnetfeld-Sensor 810 und dem Referenzsignal 842 auf einer Drehung der Vorrichtung 800 und nicht auf einem Überschreiten der markierten Grenze basiert. Die entsprechende Information kann dann verwendet werden, um zu verhindern, dass bei einer bloßen Drehung der Vorrichtung 800 ein Überschreiten einer Grenze signalisiert wird.

Im Übrigen sei darauf hingewiesen, dass die Aufteilung der verschiedenen Funktionalitäten auf die einzelnen Komponenten der Vorrichtung 800 geändert werden kann. Beispielsweise kann die Korrektur des Referenzsignals in dem Auswerter 840 erfolgen, so dass beispielsweise der Auswerter 840 (und nicht der Referenzsignalerzeuger 850) den optionalen Referenzsignal-Korrigierer 870 umfasst. Ferner kann der Drehungs-Erkenner 860 beispielsweise Teil des Referenzsignal-Erzeugers 850 oder des Auswerters 840 sein.

Ferner kann die Vorrichtung 800 gemäß der Fig. 8 in verschiedener Weise erweitert werden. So kann beispielsweise die Information 844, die anzeigt, dass eine durch ein Magnetfeld markierte Grenze überschritten wurde, verwendet werden, um einen Aktuator anzusteuern. Beispielsweise kann die Information 844, die beispielsweise durch ein geeignetes (elektrisches oder optisches) Signal repräsentiert werden kann, verwendet werden, um einen Aktuator anzusteuern, um ansprechend auf ein Überschreiten einer markierten Grenze ein Objekt oder eine Person, an der die Vorrichtung 800 angebracht ist, zu bremsen oder zum Stehen zu bringen. Ist beispielsweise die Vorrichtung 800 an einem Einkaufswagen angebracht bzw. bei einem Ausführungsbeispiel in einem Radbauteil eines Einkaufswagens angeordnet, so kann die Information 844 verwendet werden, um einen Aktuator zum Bremsen oder Blockieren eines Rades des Einkaufwagens anzusteuern. Somit kann beispielsweise die Vorrichtung 800 verwendet werden, um die Bewegung des Einkaufswagens ansprechend auf ein Überschreiten der markierten Grenze zu bremsen oder zu blockieren. Die Vorrichtung kann im Übrigen zusätzlich so ausgelegt sein, dass die Bremsung oder Blockierung wieder aufgehoben wird, wenn die markierte Grenze ein zweites Mal (bevorzugt in entgegengesetzter Richtung) überschritten wird. So ist beispielsweise folgender Ablauf möglich: der Einkaufswagen überschreitet die markierte Grenze von innen nach außen, woraufhin ein Überschreiten der Grenze signalisiert wird, und woraufhin ferner zumindest ein Rad des Einkaufwagens gebremst oder blockiert wird. Anschließend wird der Einkaufswagen in einem Bereich außerhalb der markierten Grenze umgedreht. Dieses Umdrehen des Einkaufwagens führt zwar beispielsweise zu einer Veränderung einer Phasenbeziehung zwischen dem Magnetfeld-Sensor-Signal 812 und dem Magnetfeld-Sensor-Signal 822, wird aber aufgrund der oben beschriebenen Mechanismen nicht als ein Überschreiten der markierten Grenze detektiert. Überschreitet der so umgedrehte Einkaufswagen anschließend wieder die markierte Grenze, so wird dieses tatsächliche Überschreiten wiederum detektiert und führt beispielsweise dazu, dass die Blockierung oder Bremsung des Rades aufgehoben wird. Befindet sich somit der Einkaufswagen wieder im Inneren des durch die Markierung begrenzten Bereichs, so kann er wieder mühelos bewegt werden.

Zusammenfassend ist somit festzuhalten, dass unter Verwendung der erfindungsgemäßen Vorrichtung 100 bzw. 800 beispielsweise ein Diebstahlschutz für Einkaufswägen realisiert werden kann.

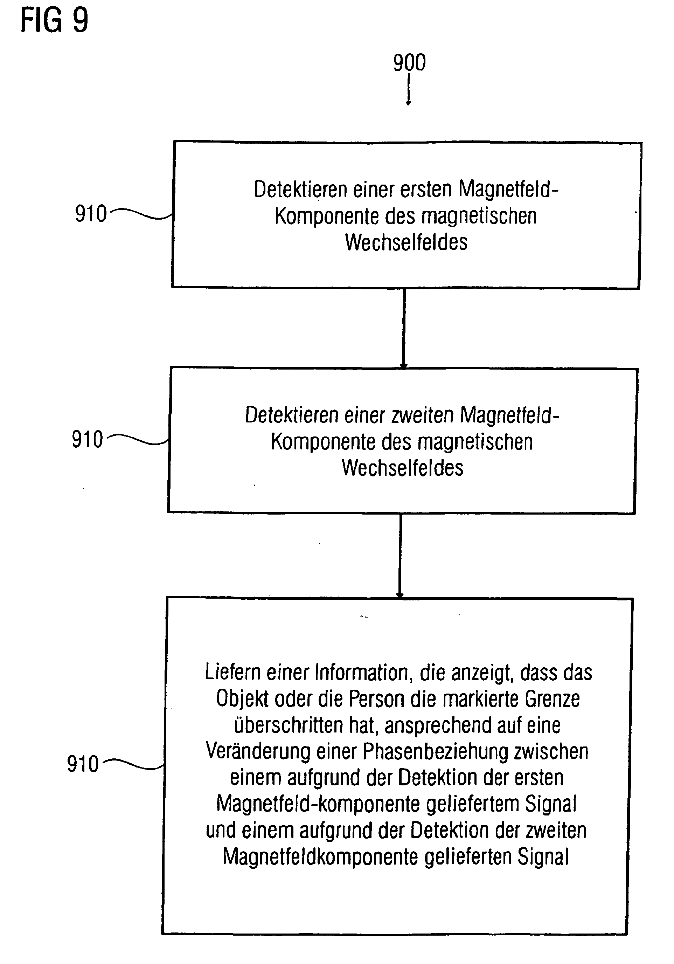

Fig. 9 zeigt ein Flussdiagramm eines erfindungsgemäßen Verfahrens zum Erkennen, wenn ein Objekt oder eine Person eine durch ein magnetisches Wechselfeld markierte Grenze überschreitet. Das Verfahren gemäß der Fig. 9 ist in seiner Gesamtheit mit 900 bezeichnet. Das Verfahren 900 umfasst in einem ersten Schritt 910 ein Detektieren einer ersten Magnetfeld-Komponente des magnetischen Wechselfeldes. Das Verfahren 900 umfasst ferner in einem zweiten Schritt 920 ein Detektieren einer zweiten Magnetfeld-Komponente des magnetischen Wechselfeldes.

Das Verfahren 900 umfasst ferner in einem dritten Schritt 930 ein Liefern einer Information, die anzeigt, dass das Objekt oder die Person die markierte Grenze überschritten hat, ansprechend auf eine Veränderung einer Phasenbeziehung zwischen einem aufgrund der Detektion der ersten Magnetfeld-Komponente gelieferte Signal und einem aufgrund der Detektion der zweiten Magnetfeldkomponente gelieferten Signal.

Das Verfahren 900 gemäß der Fig. 9 kann um diejenigen Schritte und Merkmale ergänzt werden, die im Rahmen der vorliegenden Beschreibung erläutert sind.

Das Verfahren 900 gemäß der Fig. 9 kann auch als ein Computerprogramm implementiert werden.

In anderen Worten, die erfindungsgemäße Vorrichtung und das erfindungsgemäße Verfahren kann in Hardware oder in Software implementiert werden. Die Implementation kann auf einem digitalen Speichermedium, beispielsweise einer Diskette, einer CD, einer DVD, einem ROM, einem PROM, einem EPROM, einem EEPROM, oder einem FLASH-Speicher, mit elektronisch auslesbaren Steuersignalen erfolgen, die so mit einem programmierbaren Computersystem zusammenwirken können, dass das entsprechende Verfahren ausgeführt wird. Allgemein besteht die vorliegende Erfindung somit auch in einem Computer-Programm-Produkt mit auf einem maschinenlesbaren Träger gespeicherten Programmcode zur Durchführung des erfindungsgemäßen Verfahrens, wenn das Computerprogramm-Produkt auf einem Rechner abläuft. In anderen Worten ausgedrückt, die Erfindung kann als ein Computer-Programm mit einem Programmcode zur Durchführung des erfindungsgemäßen Verfahrens realisiert werden, wenn das Computer-Programm auf einem Computer abläuft.

Im Folgenden wird das vorliegende Konzept noch einmal kurz zusammengefasst.

Fig. 2 zeigt beispielhaft ein Funktionsprinzip eines Einkaufwagendiebstahlsystems. Mit anderen Worten, Fig. 2 zeigt ein Areal mit einem vergrabenen Kabel 250 an den Grenzen. Ein Kabel 250 ist an den Grenzen des zu beobachtenden Areals (z.B. des Parkplatzes bzw. Vorplatzes 210) vergraben. Das Kabel ist beispielsweise mit einem Generator oder Sender 260 verbunden, der beispielsweise im Inneren eines Supermarktes bzw. eines Geschäftsgebäudes 210 installiert. An einem Einkaufswagen 240a, 240b, 240c, 240d ist beispielsweise ein Empfänger mit einer Empfangsspule angebracht. Der Empfänger (beispielsweise die Vorrichtung 100 gemäß Fig. 1a bzw. die Vorrichtung 800 gemäß der Fig. 8) ist beispielsweise mit einem Bremsmechanismus (oder einem anderen Aktuator) verbunden, um den Wagen bzw. Einkaufswagen bei Überschreiten der Grenze zu stoppen.

Fig. 3 zeigt einen Querschnitt durch den Boden 340 und das Kabel 250, das darin vergraben ist. Das Kabel wird dabei beispielsweise durch den stromdurchflossenen Leiter 316 repräsentiert. Fig. 3 zeigt ferner einen Einkaufswagen mit einem Empfänger im Rad, der sich über das Kabel 250 bzw. über den vergrabenen stromdurchflossenen Leiter 316 hinweg bewegt. Bei dem Empfänger in dem Rad bzw. in einem Radbauteil kann es sich beispielsweise um die Vorrichtung 100 gemäß Fig. 1a oder um die Vorrichtung 800 gemäß Fig. 8 handeln.

Das gespeiste Kabel 250 bzw. der vergrabene stromdurchflossene Leiter 316 erzeugt ein magnetisches Wechselfeld.

In dem Rad bzw. Radbauteil 334 des Einkaufwagens 330 ist beispielsweise eine Empfangsspule bzw. z-Spule L_{z} angebracht, die beispielsweise senkrecht zu der Oberfläche bzw. Erdoberfläche 318 orientiert. In der Fig. 3 ist eine Momentanaufnahme der Magnetfeldlinien 312a-312e um den vergrabenen stromdurchflossenen Leiter 316 zum Zeitpunkt t=T₀ dargestellt. Das Magnetfeld des Kabels bzw. des vergrabenen stromdurchflossenen Leiters 316 induziert in der Empfangsspule (bzw. in der z-Spule 358) des Empfängers (also beispielsweise der Vorrichtung 100 oder der Vorrichtung 800) eine Spannung U_{z}. Die Spannung (z.B. U_{z}) an der Spule (beispielsweise an der z-Spule 358) in einem Empfänger eines Einkaufwagens, der sich zu dem Zeitpunkt t=T₀ in dem Bereich a über dem Kabel bzw. stromdurchflossenen Leiter 316 befindet (der sich also beispielsweise links oberhalb des stromdurchflossenen Leiters 316 befindet, bzw. der sich innerhalb des durch den stromdurchflossenen Leiters 316 begrenzten Bereichs befindet) hat eine andere Polarität (beispielsweise Phasenunterschied = 180°) als die Spannung an der Spule (beispielsweise der z-Spule 358) eines Einkaufwagens, der sich zum gleichen Zeitpunkt t=T₀ in dem Bereich b befindet (sich also beispielsweise rechts oberhalb des vergrabenen stromdurchflossenen Leiters 316 bzw. außerhalb des durch den stromdurchflossenen Leiter 316 begrenzten Bereichs befindet). Diese Tatsache ergibt sich aufgrund der unterschiedlichen Richtungen der Magnetfeldlinien 312a-312e, mit denen die Spule (z.B. die z-Spule 358) (z.B. in den verschiedenen Bereichen a und b) durchsetzt wird. Direkt über der Leitung 316 hat das Magnetfeld im Übrigen keine Komponente, die die senkrechte Spule (z.B. die z-Spule 358) durchsetzt. Deshalb ist hier die induzierte Spannung (z.B. Spannung U_{z}) gleich Null.

Durch die Bestimmung der Polarität der induzierten Spannung (beispielsweise der in der z-Spule 358 induzierten Spannung U_{z}) kann somit zwischen den zwei Bereichen "a" innerhalb des Areals und "b" außerhalb des Areals unterschieden werden. Da es sich bei dem Magnetfeld um ein Wechselfeld handeln kann, wechselt die Polarisation (bzw. die Polarität des Magnetfelds) mit der Trägerfrequenz des abgestrahlten Signals (bzw. mit der Trägerfrequenz des Stromflusses in dem stromdurchflossenen Leiter 316). Die Trägerfrequenz kann beispielsweise 8 kHz betragen. Es ist somit vorteilhaft, wenn zu jedem Zeitpunkt T eine Referenzpolarität für den Bereich "a" oder für den Bereich "b" bekannt ist.

Fig. 4 zeigt zur Veranschaulichung eine graphische Darstellung der Polarität der in der z-Spule 358 induzierten Spannung U_{z} als Funktion der Zeit.

Die oben genannte Referenzpolarität der induzierten Spannung lässt sich beispielsweise durch die Verwendung einer oder zweier zusätzlicher Empfangsspulen ermitteln, die beispielsweise nicht senkrecht, sondern parallel zu der Erdoberfläche 318 angebracht sind. Diese Empfangsspulen (beispielsweise die x-Spule 378) werden von den gleichen Magnetfeldlinien durchsetzt, allerdings in den Bereichen "a" und "b" (also linksseits des stromdurchflossenen Leiters 316 und rechtsseits des stromdurchflossenen Leiters 316) immer in gleicher Richtung. Deshalb ändert sich die Polarität der (in der x-Spule 378 oder einer entsprechenden y-Spule) induzierten Spannung nur mit dem Signalverlauf des Trägersignals und nicht entlang des Weges x (bzw. entlang der x-Richtung).

Es kann also aufgrund einer Änderung der Polarität der induzierten Spannung an der Spule in z-Richtung (also der in der z-Spule 358 induzierten Spannung U_{z}) gegenüber der Spule in x-Richtung (x-Spule) oder y-Richtung (y-Spule) ein Überschreiten des Kabels bzw. des stromdurchflossenen Leiters 316 erkannt werden. In anderen Worten, ändert sich die Polarität der Spannung U_{z} gegenüber der Polarität der Spannung Uₓ (bzw. ändert sich eine Phasenbeziehung zwischen der Spannung U_{z} und der Spannung Uₓ), so deutet dies auf ein Überschreiten der Grenze zwischen dem Bereich "a" linksseits des stromdurchflossenen Leiters und dem Bereich "b" rechtsseits des stromdurchflossenen Leiters hin.

Weiterhin ist es zum Erkennen, in welcher Richtung das Kabel bzw. der stromdurchflossene Leiter 316 überschritten wurde, vorteilhaft, wenn bekannt ist, wie groß der Polarisationsunterschied zwischen der x-Spule und der z-Spule bzw. der y-Spule und der z-Spule in den Bereichen "a" und "b" ist bzw. sein sollte. Bei einem Koordinatensystem, wie es beispielsweise in der Fig. 5 gezeigt ist, würde beispielsweise in dem Bereich "a" die Polarität der z-Spule (bzw. der durch die z-Spule gelieferten Spannung U_{z}) in Phase zur Polarität der x-Spule (bzw. der durch die x-Spule gelieferten Spannung Uₓ) sein.

Bei einem System, das einen Bereich (z.B. einen durch den stromdurchflossenen Leiter 316 begrenzten Bereich) immer senkrecht zu dem vergrabenen Kabel bzw. senkrecht zu dem vergrabenen stromdurchflossenen Leiter 316 verlässt, kann es ausreichend sein, nur die x-Spule (beispielsweise in Verbindung mit der z-Spule, aber ohne Verwendung einer y-Spule) auszuwerten. Bei einem System wie dem hier beschriebenen Einkaufswagendiebstahlsystem kann allerdings der Bereich (z.B. der durch den stromdurchflossenen Leiter 316 begrenzte Bereich) bei einigen Ausführungsbeispielen unter (nahezu) jedem beliebigen Winkel zum Kabel bzw. zum stromdurchflossenen Leiter 316 verlassen und wieder betreten werden. Deshalb kann es sinnvoll sein, sowohl die x-Spule als auch eine y-Spule auszuwerten.

Eine weitere Schwierigkeit bei dem Einkaufswagen 330 besteht darin, dass sowohl das Rad bzw. Radbauteil 334 als auch der Einkaufswagen und damit der Empfänger mit den Empfangsspulen (also beispielsweise die Vorrichtung 100 bzw. die Vorrichtung 800) beliebig um die z-Achse gedreht werden können (wobei die z-Achse beispielsweise näherungsweise senkrecht zu der Oberfläche 318 sein kann). Damit ändert sich beispielsweise die Ausrichtung der x-Spule und der y-Spule gegenüber dem Kabel bzw. dem stromdurchflossenen Leiter 316. Somit ändert sich auch eine Referenz für eine Polaritätsbestimmung der z-Spule (bzw. für eine Bestimmung der Polarität der Spannung U_{z}).

Eine Drehung des Rades bzw. Radbauteils 334 oder des Einkaufwagens 330 lässt sich aber durch eine gleichzeitige Auswertung der x- und y-Spulen erkennen und kann in eine Bestimmung der Polarität der z-Spule (auch als "z-Spulen-Polarität" bezeichnet) mit einfließen, so lange sich der Wagen bzw. Einkaufswagen 330 über dem Kabel bzw. dem stromdurchflossenen Leiter 316 (oder zumindest in der Nähe des Kabels bzw. des stromdurchflossenen Leiters 316) befindet.

Bei einem Ausführungsbeispiel ist im Übrigen eine Drehung des Radbauteils 334 oder des Einkaufwagens 336 um die z-Achse nicht detektierbar, wenn sich das Radbauteil oder der Einkaufswagen außerhalb eines Bereichs befindet, in dem ein Signal von dem stromdurchflossenen Leiter 316 bzw. von dem Kabel empfangen werden kann. Es ist damit bei einigen Ausführungsbeispielen eine Absolutstellung des Rades bzw. Radbauteils 334 oder gar des Wagens bzw. Einkaufwagens 330 bei einem Überfahren des Kabels bzw. des vergrabenen Leiters 316 nicht bekannt. Deshalb wird bei einigen Ausführungsbeispielen zur Lösung des Problems von einem a-priori-Wissen ausgegangen, dass sich der Wagen zunächst innerhalb des Areals (also innerhalb des durch den stromdurchflossenen Leiter 316 begrenzten Bereichs) befindet und jeweils nur eine Änderung der Phase detektiert wird.

Bei einem Ausführungsbeispiel kann ein automatisches Blockier- und Deblockiersystem wie folgt funktionieren:
1. Es wird eine Bewegung in Richtung auf das Kabel erkannt. Die Erkennung einer Bewegung kann beispielsweise dadurch erfolgen, dass sich an der z-Spule die Signalstärke ändert. Alternativ kann die Erkennung einer Bewegung auch dadurch erfolgen, dass sich ein Zustand von "kein Signal an z-Spule" auf "Signal an z-Spule" ändert.
2. Es wird die Polarität der z-Spule (bzw. der in der z-Spule induzierten Spannung U_{z}) bezüglich der x-Spule (bzw. y-Spule, je nachdem welches Signal stärker ist) erfasst.
3. Es wird eine Polarität der x-Spule (oder y-Spule, je nachdem, welche Spule unter 2. gewählt wurde) gegenüber der y-Spule (bzw. x-Spule) erfasst.
4. Ändert sich beispielsweise die Polarität der x-Spule (bzw. der y-Spule) gegenüber der Referenzspule (beispielsweise gegenüber der y-Spule bzw. gegenüber der x-Spule), so hat sich das Rad bzw. Radbauteil beispielsweise um (etwa) 180° gedreht. Die Polarität des Referenzsignals für die z-Spule ist damit auch invertiert.
5. Tritt eine Änderung der Polarität der z-Spule (bzw. der in der z-Spule induzierten Spannung U_{z}) gegenüber der x-Spule (bzw. y-Spule) auf, und hat keine Drehung des Rades oder Wagens (beispielsweise bestimmt nach 4.) stattgefunden, dann hat eine Überschreitung des Kabels bzw. des stromdurchflossenen Leiters stattgefunden. Der Wagen befindet sich außerhalb des Areals. Das Rad wird blockiert.

Bei einem Wiederbetreten (z.B. des durch den stromdurchflossenen Leiter 316 begrenzten Bereichs) kann beispielsweise der gleiche Ablauf ausgehend von einem Zustand "Wagen außerhalb des Areals" stattfinden. Bei einer Überschreitung des Kabels bzw. des stromdurchflossenen Leiters 316, also beispielsweise bei einer Änderung der Polarität an der z-Spule, kann in den Zustand "Wagen innerhalb des Areals" übergegangen und das Rad deblockiert werden.

Bei den obigen Ausführungen wird davon ausgegangen, dass der Wagen auch mit blockiertem Rad noch bewegt werden kann, allerdings mit größerer Anstrengung.

Das oben beschriebene Verfahren kann auch für andere Anwendungsbereiche angewendet werden. Beispielsweise kann das Verfahren auch in solchen Bereichen eingesetzt werden, in denen es keine Räder zur Blockierung gibt. Beispielsweise können mit dem beschriebenen Verfahren Personen, wie beispielsweise ältere Personen, überwacht werden. Sie können eine Empfangseinheit mit den oben genannten Spulen (beispielsweise eine Vorrichtung 100 gemäß Fig. 1 oder eine Vorrichtung 800 gemäß Fig. 8) tragen. Die Empfangseinheit ist in diesem Fall beispielsweise nicht mit einem Blockiersystem ausgestattet, sondern mit einem Sender, der beim Verlassen des Areals eine Meldung sendet.

Das Verlassen des Areals kann aber auch anderweitig, z.B. über einen akustischen oder optischen Signalgeber, signalisiert werden.

Das oben beschriebene Verfahren könnte auch für die Überwachung von Sicherheitsbereichen, z.B. bei Maschinen, angewendet werden. Bei einem Ausführungsbeispiel wird ebenfalls wieder drahtlos eine Meldung an die Maschine gesendet und die Maschine angehalten, wenn ein Maschinenbediener mit einem Empfänger einen bestimmten Bereich betritt.

Zusammenfassend ist somit festzuhalten, dass sich mit den hier beschriebenen Verfahren bei einigen Ausführungsbeispielen ein kostengünstiges automatisches System zur Diebstahlsicherung realisieren lässt, dass ohne die Installation eines zweiten Kabels oder der Nutzung eines zusätzlichen mobilen Geräts auskommt. Bei einigen Ausführungsbeispielen wird das System damit kundenfreundlicher. Weiterhin kann bei einigen Ausführungsbeispielen mit einem sinusförmigen Signal (z.B. einem sinusförmigen Stromsignal in dem stromdurchflossenen Leiter 316) gearbeitet werden, wodurch sich beispielsweise die senderseitige Technik (wie auch die empfängerseitige Technik) vereinfacht. So wird die senderseitige Technik, wie auch die empfängerseitige Technik) bei einigen Ausführungsbeispielen schmalbandiger und somit leichter und kostengünstiger realisierbar.

Einige Ausführungsbeispiele der vorliegenden Erfindung lösen somit die Aufgabe, das Verlassen und Wiederbetreten eines Bereichs automatisch zu erkennen. Bei einigen Ausführungsbeispielen ist dies unter Verwendung nur eines Signals bzw. nur eines vergrabenen Signalkabels und unter Verwendung eines modulierten oder unmodulierten, symmetrischen (Sinus-)Trägersignals möglich, wie es von den am Markt verfügbaren Systemen eingesetzt wird. Bei einigen Ausführungsbeispielen ist damit das automatische Blockieren und Deblockieren eines Wagenrads möglich.

Einige Ausführungsbeispiele der vorliegenden Erfindung sind im Zusammenhang mit einer Diebstahlüberwachung von Einkaufswagen bei Supermärkten einsetzbar.

Bei einigen Ausführungsbeispielen kann das Konzept aber auch auf anderen Gebieten eingesetzt werden:
- Überwachung von Personen;
- Überwachung von Lagerplätzen und Hallen; oder
- Überwachung von Sicherheitsbereichen an Maschinen.

Generell sind alle Anwendungsbereiche denkbar, bei denen das Verlassen oder Betreten eines bestimmten Areals automatisch überwacht werden soll.

Die hierin beschriebene Vorrichtung zum Erkennen, wenn ein Objekt oder eine Person eine durch ein magnetisches Feld markierte Grenze überschreitet, kann in vielen weiteren Anwendungen eingesetzt werden. Zum Beispiel ist es möglich, die Vorrichtung zum Erkennen, wenn ein Objekt oder eine Person ein durch ein magnetisches Feld markierte Grenze überschreitet, zu verwenden, um Linienüberschreitungen bei Ballspielen (wie zum Beispiel beim Fußball) zu erkennen. Details diesbezüglich werden im Folgenden erläutert.

Die hier beschriebene Vorrichtung bzw. das hierin beschriebene Verfahren kann beispielsweise in einem einfachsten Fall zur Erkennung von Linienüberschreitungen bei Ballspielen (z. B. beim Fußball dienen). Beispielsweise kann das hier beschriebene Konzept verwendet werden, um zu erkennen, wenn ein Spieler, der beispielsweise mit einer Vorrichtung zum Erkennen, wenn eine Person eine durch ein magnetisches Feld markierte Grenze überschreitet, ausgestattet ist, eine Spielfeldbegrenzung oder auch eine beliebige Linie innerhalb des Spielfeldes überschreitet. Die Spielfeldbegrenzung bzw. ganz allgemein eine beliebige Linie innerhalb des Spielfeldes, um das Spielfeld herum oder außerhalb des Spielfeldes, kann durch ein magnetisches Wechselfeld markiert sein. Beispielsweise kann das Spielfeld mit einem Kabel im Boden umgeben sein. Somit kann das hier beschriebene Verfahren bzw. Konzept auch zur Erkennung von Linienüberschreitungen verwendet werden.

Ein Spielteilnehmer oder ein Ball kann beispielsweise einen Empfänger mit Empfangsspulen (oder anderweitigen Magnetfeldsensoren) tragen. Der Empfänger kann zusätzlich mit einem Funksender ausgestattet sein, um eine Erkennung an eine zentrale Stelle zu übermitteln.

In anderen Worten, detektiert der mit Magnetfeldsensoren (z. B. Empfangsspulen) gekoppelte bzw. versehene Empfänger eine Überschreitung einer Linie, die somit beispielsweise eine durch ein magnetisches Wechselfeld markierte Grenze darstellt, so kann beispielsweise der Funksender, der Teil des Empfängers ist, oder der mit dem Empfänger gekoppelt sein kann, ein entsprechendes Signal ausstrahlen. Ansprechend auf den Empfang dieses Signals bzw. Signalisierungssignals kann die Überschreitung der Linie bzw. der durch das Magnetfeld markierten Grenze detektiert werden.

Es sei hier darauf hingewiesen, dass das entsprechende Konzept bei nahezu beliebigen Sportarten einsetzbar ist, z. B. beim Fußball, beim Handball, beim Volleyball, beim Tennis, beim Eishockey usw. Ferner können beliebige an dem Spiel beteiligte Einrichtungen (z. B. ein Ball, ein Puck, ein Schläger oder ein von dem Spieler getragener Ausrüstungsgegenstand) mit dem Empfänger beziehungsweise den Empfangsspulen versehen sein.

Im Übrigen sei darauf hingewiesen, dass nahezu beliebige Bereiche des Spielfeldes durch ein magnetisches Feld als eine Grenze gekennzeichnet sein können. Dabei ist es freilich nicht erforderlich, dass die Grenze auch tatsächlich durch eine sichtbare Linie gekennzeichnet ist. Vielmehr kann beispielsweise eine magnetische Kennzeichnung auch von Teilbereichen eines Spielfeldes bzw. einer Spielanlage erfolgen, ohne dass der jeweilige Teilbereich oder der jeweiligen Linie durch die Spielregeln eine konkrete Bedeutung zugeordnet ist. Eine derartige feine Unterteilung eines Spielfeldes bzw. einer Spielanlage kann beispielsweise wünschenswert sein, um bestimmte Statistiken im Hinblick auf den Spielverlauf zu erstellen.

Gemäß einem weiteren Ausführungsbeispiel kann das hier beschriebene Konzept auch verwendet werden, um eine Torentscheidung, z. B. bei einem Fußballspiel (oder bei einem Handballspiel oder bei einem Eishockeyspiel oder einem anderen beliebigen Spiel, bei dem ein Spielgerät durch eine begrenzte Öffnung zu bringen ist), zu treffen. Im Folgenden wird ein derartiges Konzept exemplarisch anhand eines Fußballspiels beschrieben. Die obigen Ausführungen sind jedoch übertragbar auf ein Handballspiel, ein Eishockeyspiel bzw. sogar auf ein Basketballspiel (wobei in diesem Ball der Korb als Tor angesehen werden kann).

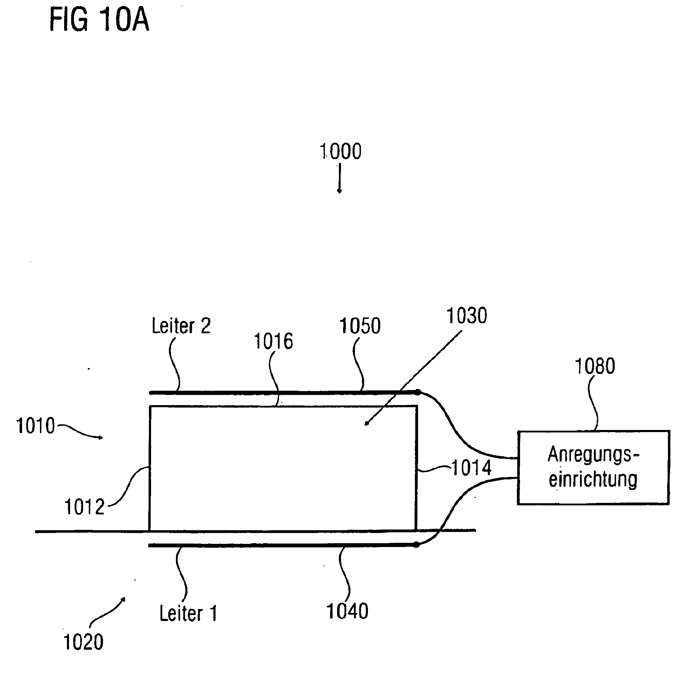

Fig. 10a zeigt eine schematische Darstellung einer Spielanlage gemäß einem Ausführungsbeispiel der Erfindung. Die Spielanlage gemäß der Fig. 10a ist in ihrer Gesamtheit mit 1000 bezeichnet. Die Spielanlage 1000 umfasst ein Tor 1010, das eine Torfläche zumindest teilweise begrenzt. Das Tor 1010 umfasst beispielsweise einen linken Torpfosten 1012, einen rechten Torpfosten 1014 sowie eine Torlatte bzw. Querlatte 1016. Das Tor ist im Übrigen, wie allgemein bekannt, auf einem Untergrund 1020 angeordnet. Das Tor 1010 kann beispielsweise auf einem Grasboden, auf einem Sandplatz, auf einem Hallenboden beliebiger Art oder auf einer anderen Art von Untergrund angeordnet sein. Das Tor 1010, das den linken Torpfosten 1012, den rechten Torpfosten 1014 und die Querlatte 1016 umfasst, begrenzt zusammen mit dem Untergrund 1020 eine Torfläche 1030. Bei verschiedenen Sportarten wird es als Torereignis gewertet, wenn ein Spielgerät (z. B. ein Ball, ein Fußball, ein Handball oder ein Puck) durch die Torfläche 1030 von einem Bereich vor dem Tor (1010) in einen Bereich hinter dem Tor 1010 bzw. im Inneren des Tores eindringt.

Das Tor 1010 kann im Übrigen ferner in einem Bereich hinter der Torfläche 1030 ein Gitter, ein Netz oder sonstige Einrichtungen umfassen, die beispielsweise ausgelegt sein können, um zu verhindern, dass das Spielgerät den Bereich hinter der Torfläche nach hinten verlässt.

Die Spielanlage 1000 umfasst ferner einen ersten elektrischen Leiter 1040, der entlang einer ersten Begrenzung der Torfläche 1030 angeordnet ist.

Der erste elektrische Leiter 1040 kann beispielsweise entlang einer Torlinie, die die Torfläche 1030 begrenzt, angeordnet sein. Der erste elektrische Leiter 1040 kann beispielsweise auf dem Untergrund 1040 verlegt sein oder aber in einer gewissen Tiefe in dem Untergrund 1020 vergraben bzw. eingelassen sein.

Die Spielanlage 1000 umfasst ferner einen zweiten elektrischen Leiter 1050, der beispielsweise entlang einer zweiten Begrenzung der Torfläche 1030, die der ersten Begrenzung der Torfläche 1030 gegenüberliegt, angeordnet ist. Beispielsweise kann der zweite elektrische Leiter 1050 entlang der Torlatte bzw. Querlatte 1016 angeordnet sein. Der zweite elektrische Leiter 1050 kann beispielsweise unterhalb der Torlatte 1016, oberhalb der Torlatte 1016 oder sogar innerhalb der Torlatte 1016 angeordnet sein.

Somit liegt beispielsweise die Torfläche 1030 zumindest näherungsweise zwischen dem ersten elektrischen Leiter 1040 und dem zweiten elektrischen Leiter 1050.

Diesbezüglich ist festzuhalten, dass der Ausdruck "entlang" nicht in einem strengen Sinne zu verstehen ist, sondern einen bestimmten Toleranzbereich umfasst. Beispielsweise gibt es bei einigen Ballspielen (z.B. beim Fußball) die Regel, dass ein Ball erst dann als "in dem Tor" gewertet wird, wenn der Ball die Torlinie vollständig überschritten hat. Somit kann bei einigen Ausführungsbeispielen der erste elektrische Leiter 1040 und/oder der zweite elektrische Leiter 1050 beispielsweise bis zu etwa einem halben Balldurchmesser oder einem ganzen Balldurchmesser (z.B. eines Balles, der für ein Spiel auf das Tor bestimmt ist) hinter der Torlinie (also beispielsweise in einem Bereich eines Torinnenraums bzw. unterhalb des Torinnenraums) angeordnet sein. Eine derartige Anordnung wird hier auch als "entlang der Torlinie" bzw. "entlang der Torlatte" angesehen. Die genannte Definition gilt in gleicher Weise, wenn anstelle der Leiter 1040, 1050 Leiterschleifen verwendet werden.

Die Spielanlage 1000 umfasst ferner eine Anregungseinrichtung 1060, die ausgelegt ist, um einen Stromfluss in dem ersten elektrischen Leiter 1040 anzuregen, und um einen Stromfluss in dem zweiten elektrischen Leiter 1050 anzuregen. Zu diesem Zweck kann die Anregungseinrichtung 1060 beispielsweise sowohl mit dem ersten elektrischen Leiter 1040 als auch mit dem zweiten elektrischen Leiter 1050 elektrisch wirksam gekoppelt sein. Die Anregungseinrichtung 1060 kann beispielsweise ausgelegt sein, um in den ersten Leiter 1040 einen Gleichstrom oder Wechselstrom einzuspeisen. Ferner kann die Anregungseinrichtung 1060 ausgelegt sein, um in den zweiten Leiter 1050 einen Gleichstrom oder Wechselstrom einzuspeisen.

Bei einem Ausführungsbeispiel kann die Anregungseinrichtung 1060 beispielsweise ausgelegt sein, um in den ersten Leiter 1040 einen Wechselstrom einer ersten Frequenz einzuspeisen, und in den zweiten Leiter 1050 einen Wechselstrom einer zweiten Frequenz einzuspeisen. Bei einem weiteren Ausführungsbeispiel kann die Anregungseinrichtung 1060 ausgelegt sein, um den ersten Leiter 1040 und den zweiten Leiter 1050 zeitlich versetzt mit einem Strom zu speisen.

Durch die oben beschriebene Spielanlage wird es beispielsweise ermöglicht, mit vergleichsweise hoher Zuverlässigkeit detektieren zu können, ob ein Spielgerät (z. B. ein Fußball) die Torfläche 1030 durchdringt. Durch die genannten Leiter 1040, 1050 kann ein Magnetfeld derart erzeugt werden, dass beispielsweise durch einen in dem Spielgerät befindlichen Magnetfeldsensor erkannt werden kann, ob das Spielgerät beispielsweise durch die Torfläche 1030 in das Tor bzw. in dem Bereich hinter dem Tor eingedrungen ist oder ob das Spielgerät beispielsweise über die Querlatte 1016 des Tors 1010 hinweggeflogen ist. Im Übrigen kann durch die beschriebene Anordnung eine besonders gute Abdeckung der Torfläche 1030 erzielt werden. So ist beispielsweise in einem unteren Bereich der Torfläche 1030 das durch den ersten elektrischen Leiter 1040 erzeugte Magnetfeld stärker als das durch den oberen Leiter 1050 erzeugte Magnetfeld. In einem unteren Bereich der Torfläche 1030, also in der Nähe des ersten elektrischen Leiters 1040, kann somit ein Magnetfeldsensor in dem Spielgerät primär oder ausschließlich das durch den ersten elektrischen Leiter 1040 erzeugte Magnetfeld (bzw. den entsprechenden Magnetfeldanteil) auswerten. In einem oberen Bereich der Torfläche 1030 ist hingegen das durch den zweiten elektrischen Leiter 1050 erzeugte Magnetfeld stärker als das durch den ersten elektrischen Leiter 1040 erzeugte Magnetfeld. Ein Magnetfeldsensor in dem Spielgerät kann somit in dem oberen Bereich einer Torfläche 1030 primär oder ausschließlich das durch den zweiten elektrischen Leiter 1050 erzeugte Magnetfeld (bzw. den entsprechenden Anteil an einem Gesamtmagnetfeld) auswerten. Somit existieren bei einem Ausführungsbeispiel in der gesamten Torfläche keine wesentlichen Bereiche, in denen nur ein sehr schwaches Magnetfeld vorhanden ist. Vielmehr wird durch die Tatsache, dass elektrische Leiter an gegenüberliegenden Begrenzungen der Torfläche 1030 angeordnet sind, eine vergleichsweise gute Homogenität des magnetischen Feldes erzielt.

Im Übrigen ermöglicht die Verwendung zweier elektrischer Leiter 1040, 1050 bei einigen Ausführungsbeispielen eine separate Ansteuerung der genannten elektrischen Leiter 1040, 1050. Somit kann bei einem Ausführungsbeispiel ein Magnetfeldsensor in einem Spielgerät sowohl das durch den ersten elektrischen Leiter 1040 erzeugte Magnetfeld als auch durch den zweiten elektrischen Leiter 1050 erzeugte Magnetfeld auswerten. Dies ermöglicht es, besonders umfangreiche Informationen im Hinblick auf die Magnetfelder zu gewinnen. Beispielsweise kann bei einem Ausführungsbeispiel eine Phasenverschiebung zwischen dem durch den ersten elektrischen Leiter 1040 und den zweiten elektrischen Leiter 1050 erzeugten Magnetfeld ausgewertet werden, um somit darauf zu schließen, ob das Spielgerät durch die Torfläche 1030 durchgetreten ist oder nicht.

Zusammenfassend ist somit festzuhalten, dass eine Anordnung zweier elektrischer Leiter 1040, 1050 entlang gegenüberliegenden Begrenzungen der Torfläche 1030 eine besonders gute Detektion eines Torereignisses (also des Durchtretens eines Spielgeräts durch die Torfläche 1030) ermöglicht.

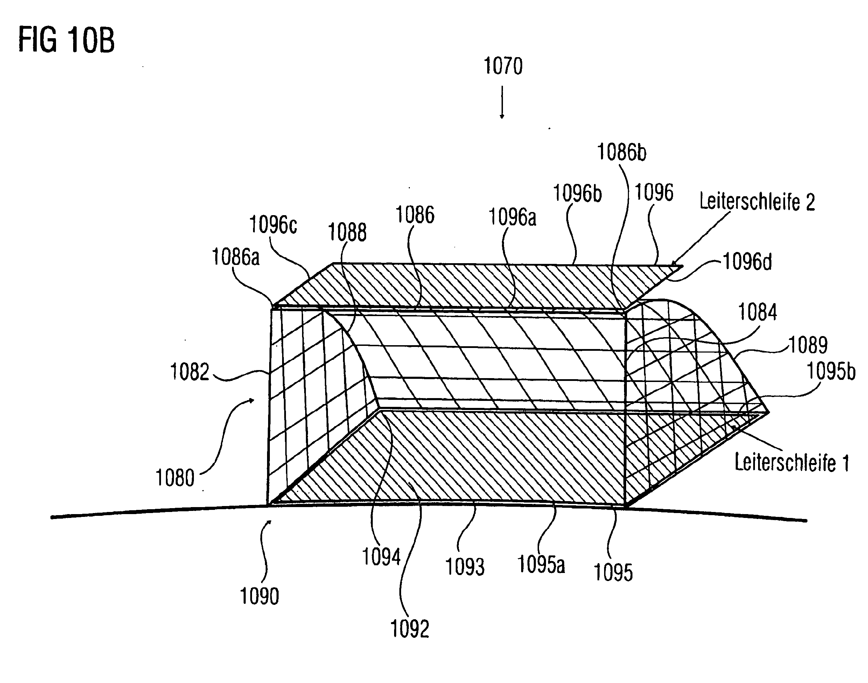

Fig. 10b zeigt eine schematische Darstellung einer Spielanlage gemäß dem Ausführungsbeispiel der Erfindung.

Die Spielanlage gemäß der Fig. 10b ist in ihrer Gesamtheit mit 1070 bezeichnet. Die Spielanlage 1070 umfasst ein Tor 1080. Das Tor 1080 umfasst beispielsweise einen linken Pfosten 1082, einen rechten Pfosten 1084 und eine Torlatte bzw. Querlatte 1086. Das Tor 1080 umfasst ferner beispielsweise ein linkes Seitenteil 1088 und ein rechtes Seitenteil 1089. Das linke Seitenteil 1088 ist beispielsweise mit dem linken Pfosten 1082 verbunden, um eine linke Tragestruktur des Tores zu bilden. In ähnlicher Weise ist das rechte Seitenteil 1089 beispielsweise mit dem rechten Torpfosten 1084 mechanisch verbunden, um eine rechte Tragestruktur des Tors zu bilden. Das Tor umfasst ferner ein Netz. Beispielsweise kann das Netz an dem linken Torpfosten 1082 und an dem rechten Torpfosten 1084 sowie an der Querlatte 1086 festgemacht sein, wie dies beispielsweise von Fußballtoren bekannt ist. Das linke Seitenteil 1088 und das rechte Seitenteil 1089 kann beispielsweise ausgelegt sein, um das Netz so zu führen, dass ein Torinnenraum entsteht, der einerseits durch die offene Torfläche und andererseits durch das Netz begrenzt wird. Das Tor 1080 ist üblicherweise auf einem Untergrund 1090 (z. B. einem Rasen, einem Hallenboden oder sonstigen Untergrund) angeordnet. Somit wird durch das Tor 1080 in Verbindung mit dem Untergrund 1090 eine innere Torgrundfläche 1092 definiert. Die innere Torgrundfläche 1092 wird beispielsweise zu einem Spielfeld hin durch eine Torlinie 1093 (beispielsweise einen Ausschnitt aus der Torlinie) begrenzt. Zur Seite und nach hinten hin wird die innere Torgrundfläche 1092 beispielsweise über eine erste Linie, die sich von einem Fußpunkt des linken Torpfostens 1082 zu einem linken hinteren Netzbefestigungspunkt 1094 erstreckt, durch eine zweite Linie, die sich von dem linken hinteren Netzbefestigungspunkt 1094 zu einem rechten hinteren Netzbefestigungspunkt 1095 erstreckt, und durch eine dritte Linie, die sich von dem rechten hinteren Netzbefestigungspunkt zu einem Fußpunkt des rechten Torpfostens 1084 erstreckt, begrenzt. An dem linken hinteren Netzbefestigungspunkt ist beispielsweise das Netz an dem Untergrund 1090 oder einer an dem Untergrund 1090 angebrachten Befestigungseinrichtung festgemacht. Ebenso ist das Netz an dem rechten hinteren Netzbefestigungspunkt an dem Untergrund 1090 oder an einer Befestigungseinrichtung festgemacht.

Ganz allgemein kann somit festgestellt werden, dass die Torgrundfläche einerseits durch die Torlinie 1093 und andererseits durch Linien, entlang derer das Netz an einer Befestigungseinrichtung oder an dem Untergrund 1090 festgemacht ist, begrenzt wird.

Bei einem Ausführungsbeispiel umfasst die Spielanlage 1070 gemäß der Fig. 10b eine Leiterschleife, die entlang eines Umfangs der inneren Torgrundfläche 1092 verlegt ist. Die Leiterschleife 1095 (auch als erste Leiterschleife oder Leiterschleife 1 bezeichnet), kann beispielsweise entlang des Umfangs der inneren Torgrundfläche 1092 oberirdisch oder unterirdisch verlegt sein. Beispielsweise kann die erste Leiterschleife 1095 entlang des Umfangs der inneren Torgrundfläche in dem Untergrund 1090 vergraben sein.

Die Spielanlage 1070 umfasst ferner bei einem Ausführungsbeispiel eine zweite Leiterschleife 1096, die beispielsweise oberhalb der Torgrundfläche 1092 angeordnet ist. Bei einem Ausführungsbeispiel ist die zweite Leiterschleife 1096 beispielsweise näherungsweise parallel zu der ersten Leiterschleife 1095 und näherungsweise in Höhe der Torlatte 1086 angeordnet. Beispielsweise kann die zweite Leiterschleife 1096 so angeordnet sein, dass die zweite Leiterschleife 1096 mit dem Untergrund bzw. mit der inneren Torgrundfläche 1092 einen Winkel von höchstens 30° einschließt. Bei einem Ausführungsbeispiel weist die zweite Leiterschleife 1096 eine näherungsweise rechteckige Form auf. Dies ist allerdings nicht zwingend erforderlich. Bei einem Ausführungsbeispiel ist eine Seite der zweiten Leiterschleife 1096 entlang der Torlatte 1086 angeordnet. In anderen Worten, bei dem genannten Ausführungsbeispiel ist eine Seite der Leiterschleife beispielsweise an der Oberseite der Torlatte 1086, an der Unterseite der Torlatte 1086 oder möglicherweise sogar innerhalb der Torlatte 1086 angeordnet. Die entsprechende Seite der Leiterschleife 1096, die an- oder in der Torlatte 1086 angeordnet ist, ist mit 1096a bezeichnet.

Bei einem Ausführungsbeispiel umfasst die obere Leiterschleife 1096 eine zweite Seite 1096b, die der ersten Seite 1096a der Leiterschleife 1096 gegenüberliegt. Die zweite Seite 1096b der Leiterschleife 1096a kann beispielsweise zumindest näherungsweise parallel zu der ersten Seite 1096a der Leiterschleife 1096 sein. Die Leiterschleife 1096 umfasst ferner beispielsweise eine dritte Seite 1096c und eine vierte Seite 1096d. Die dritte Seite 1096c und die vierte Seite 1096d können beispielsweise oberhalb des linken Seitenteils 1088 bzw. oberhalb des rechten Seitenteils 1089 angeordnet sein. In anderen Worten, die linke Seite 1096c und die rechte Seite 1096d der Leiterschleife 1096 können beispielsweise oberhalb einer linken bzw. einer rechten Begrenzung der inneren Torgrundfläche 1092 angeordnet sein. Die dritte Seite 1096c der zweiten Leiterschleife 1096 kann aber auch an dem linken Torträger 1088 angebracht sein. Die rechte Seite 1096d der zweiten Leiterschleife 1096 kann ferner an dem rechten Torträger 1089 angebracht sein.

Bei einigen Ausführungsbeispielen kann die zweite Leiterschleife 1096 aber auch ganz anders ausgeführt sein. Beispielsweise ist es nicht erforderlich, dass die zweite Leiterschleife 1096 eine rechteckige Form aufweist. Vielmehr ist es bei einigen Ausführungsbeispielen ausreichend, wenn die erste Seite 1096a der zweiten Leiterschleife 1096 entlang der Torlatte 1086 verläuft. In diesem Fall kann beispielsweise die zweite Leiterschleife 1096a durch eine nahezu beliebig geformte Leiteranordnung geschlossen werden, die sich zumindest näherungsweise von einem ersten Ende 1086a der Torlatte 1086 zu einem zweiten Ende 1086b der Torlatte 1086 erstreckt. Von Bedeutung ist es dabei lediglich, dass die entsprechende Leiteranordnung, die die zweite Leiterschleife 1096 schließt, stets hinter der Torlinie 1093, also auf der Seite der Torlinie, auf der sich die innere Torgrundfläche 1092 befindet, verläuft.

Bei einigen Ausführungsbeispielen kann beispielsweise die zweite Leiterschleife 1096 so angeordnet sein, dass eine senkrechte Projektion der zweiten Leiterschleife 1096 auf den Untergrund 1090 (wobei die Projektionsrichtung senkrecht zu der Oberfläche des Untergrundes 1090) ist, stets entlang der Torlinie oder auf der Seite der Torlinie, auf der auch die innere Torgrundfläche 1092 gelegen ist, liegt.

Bei einem weiteren Ausführungsbeispiel ist die zweite Leiterschleife 1096 so angeordnet, dass eine senkrechte Projektion der zweiten Leiterschleife 1096 auf den Untergrund 1090 im Innern oder auf den Rändern der inneren Torgrundfläche 1092 liegt.

Bei einem Ausführungsbeispiel liegt die zweite Leiterschleife 1096 im Übrigen oberhalb eines Torinnenraums, der durch die innere Torgrundfläche 1092 und das Netz des Tores begrenzt ist.

Die Spielanlage 1070 umfasst ferner eine hier nicht gezeigte Anregungseinrichtung, die ausgelegt ist, um die erste Leiterschleife 1095 und die zweite Leiterschleife 1096 anzuregen. Die Anregungsanlage kann beispielsweise ausgelegt sein, um in der ersten Leiterschleife 1095 einen Gleichstrom oder Wechselstrom anzuregen, und um in der zweiten Leiterschleife 1096 einen Gleichstrom oder einen Wechselstrom anzuregen.

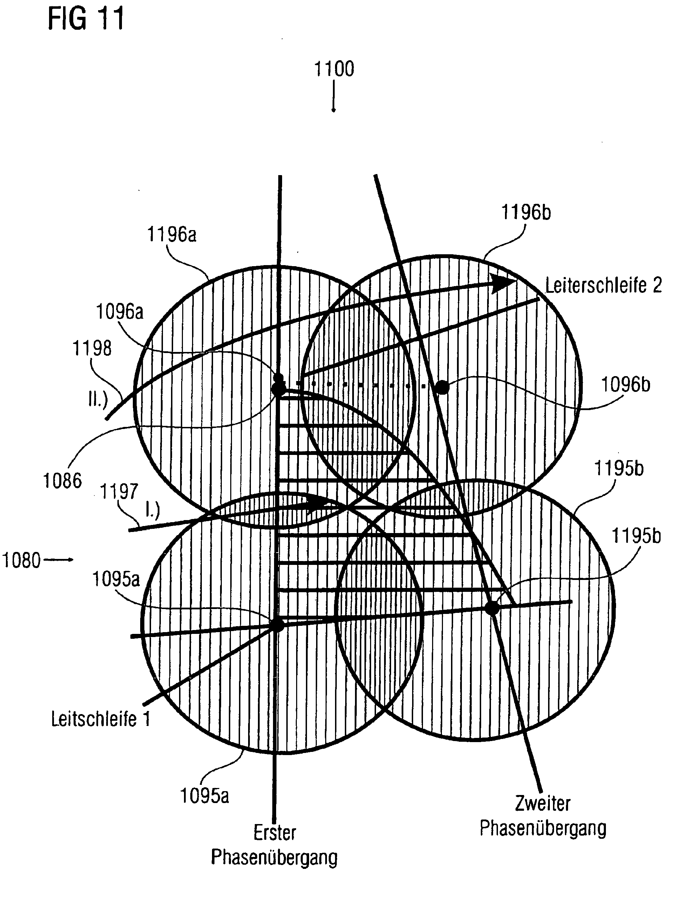

Fig. 11 zeigt eine Querschnittsdarstellung einer Spielanlage gemäß Fig. 10b. Die Spielanlage gemäß der Fig. 11 ist in ihrer Gesamtheit mit 1100 bezeichnet. Im übrigen sei darauf hingewiesen, dass identische Einrichtungen in den Fig. 10b und 11 mit den gleichen Bezugszeichen versehen sind und daher nicht noch einmal ausführlich erläutert werden.

Die Querschnittsdarstellung gemäß der Fig. 11 zeigt ein Tor 1080. Die Querschnittsdarstellung zeigt beispielsweise die Torlatte 1086, in der oder an der die erste Seite 1096a der zweiten Leiterschleife 1096 angeordnet ist. In dem gezeigten Beispiel ist die erste Seite 1096a der zweiten Leiterschleife 1096 beispielsweise oberhalb der Torlatte 1086 angeordnet. Bei einem anderen Ausführungsbeispiel kann die erste Seite 1096a der zweiten Leiterschleife 1096 allerdings auch in der Torlatte 1086 oder unterhalb der Torlatte 1086 angeordnet sein. Die Querschnittsdarstellung der Fig. 11 zeigt ferner die zweite Seite 1096b, der zweiten Leiterschleife 1096. Die zweite Seite der Leiterschleife 1096b kann beispielsweise auf der gleichen Höhe, wie die erste Seite 1096a der zweiten Leiterschleife 1096 angeordnet sein. Alternativ dazu ist es aber auch möglich, dass die zweite Seite 1096b der zweiten Leiterschleife 1096 leicht unterhalb der ersten Seite 1096a angeordnet ist. Beispielsweise kann die zweite Seite 1096b der zweiten Leiterschleife 1096 an einer Befestigungseinrichtung angebracht sein, über die auch das Netz des Tores 1080 abgespannt wird.

Die Querschnittsdarstellung der Fig. 11 zeigt im Übrigen eine erste Seite 1095a der ersten Leiterschleife 1095 sowie eine zweite Seite 1095b der ersten Leiterschleife 1095. Die erste Seite 1095a der ersten Leiterschleife 1095 kann beispielsweise entlang der Torlinie angeordnet sein (beispielsweise unterhalb der Torlinie 1093 vergraben). Die zweite Seite 1095b der ersten Leiterschleife ist im Übrigen beispielsweise entlang einer hinteren Begrenzung der inneren Torgrundfläche 1092 angeordnet.

Die Querschnittsdarstellung der Fig. 11 zeigt ferner eine schematische Darstellung des Magnetfeldes, wie es beispielsweise durch die erste Seite 1095a und die zweite Seite 1095b der ersten Leiterschleife 1095 sowie durch die erste Seite 1096a und die zweite Seite 1096b der zweiten Leiterschleife 1096 erzeugt wird.

Ein durch die erste Seite 1095a der ersten Leiterschleife 1095 erzeugtes Magnetfeld ist schematisch durch einen Kreis 1195a dargestellt, und ein Magnetfeld, wie es beispielsweise durch die zweite Seite 1095 der ersten Leiterschleife 1095 erzeugt wird, ist schematisch durch einen entsprechenden Kreis 1195b dargestellt. Ein Magnetfeld, wie es beispielsweise durch die erste Seite 1096a der zweiten Leiterschleife 1096 erzeugt wird, ist schematisch durch einen entsprechenden Kreis 1196a dargestellt, und ein Magnetfeld, das beispielsweise durch die zweite Seite 1096b der zweiten Leiterschleife 1096 erzeugt wird, ist schematisch durch einen Kreis 1196b dargestellt.

Fig. 11 zeigt ferner eine erste Flugbahn 1197 eines Spielgerätes, (z. B. eines Fußballes) in das Tor hinein. Die erste Flugbahn 1197 verläuft zwischen der ersten Seite 1095a der ersten Leiterschleife 1095 und der ersten Seite 1096a der zweiten Leiterschleife 1096 hindurch.

Die Querschnittsdarstellung der Fig. 11 zeigt ferner eine zweite Flugbahn 1198 eines Spielgeräts (z. B. eines Fußballes), die über das Tor verläuft. Die zweite Flugbahn 1198 verläuft somit oberhalb der ersten Seite 1096a der zweiten Leiterschleife 1096 und ebenso oberhalb der zweiten Seite 1096b der zweiten Leiterschleife 1096 hinweg.

Somit kann beispielsweise die erste Flugbahn 1197 des Spielgeräts zu einem gültigen Torereignis führen, während hingegen die zweite Flugbahn 1198 nicht zu einem gültigen Torereignis führt.

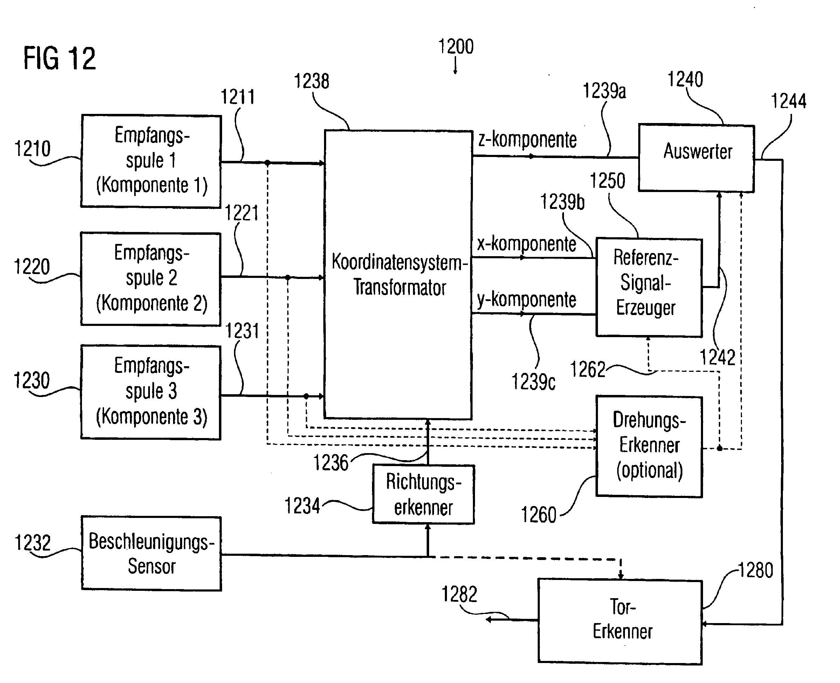

Im Folgenden wird anhand der Fig. 12 eine beispielhafte Vorrichtung zum Liefern einer Information im Hinblick auf ein Torereignis beschrieben. Die Vorrichtung gemäß der Fig. 2 wird in ihrer Gesamtheit mit 1200 bezeichnet. Diesbezüglich sei darauf hingewiesen, dass die Vorrichtung 1200 zum Teil Funktionalitäten aufweist, die den Funktionalitäten der Vorrichtung 800 gemäß der Fig. 8 sehr ähnlich sind. Darum wird hier auch auf die Beschreibung der Funktionalität der Vorrichtung 800 verwiesen.

Die Vorrichtung 1200 umfasst beispielsweise eine erste Empfangsspule 1210, eine zweite Empfangsspule 1220 und eine dritte Empfangsspule 1230. Die drei Empfangsspulen 1210, 1220 und 1230 entsprechen beispielsweise von ihrer Funktionsweise her den Empfangsspulen 810, 820, 830 und können ebenso wie die Empfangsspulen 810, 820, 830 durch andere Einrichtungen zur Erfassung eines Magnetfelds ersetzt werden. Die Vorrichtung 1200 umfasst ferner einen Beschleunigungssensor 1232, der ausgelegt ist, um eine Beschleunigung der Vorrichtung 1200 zu erfassen. Der Beschleunigungssensor 1232 kann beispielsweise ausgelegt sein, um neben zusätzlichen externen Beschleunigungen auch eine Erdbeschleunigung zu erfassen. Der Beschleunigungssensor 1232 kann beispielsweise ausgelegt sein, um eine Richtung einer auf die Vorrichtung 1200 wirkenden Kraft (einschließlich einer Schwerkraft) zu erfassen. Bei einigen Ausführungsbeispielen kann der Beschleunigungssensor 1232 beispielsweise eine qualitative und/oder quantitative Information über die Größe der Beschleunigung liefern. Bei einem Ausführungsbeispiel handelt es sich bei dem Beschleunigungssensor 1232 im Übrigen um einen Beschleunigungssensor, der die Beschleunigung in zumindest zwei verschiedenen Richtungen, oder sogar in drei verschiedene Richtungen erfassen kann. Die Vorrichtung 1200 umfasst ferner einen Richtungserkenner 1234, der beispielsweise mit dem Beschleunigungssensor 1232 gekoppelt sein kann, um eine Information über eine Richtung einer anliegenden Beschleunigung zu erhalten. Der Richtungserkenner 1234 kann somit beispielsweise ausgelegt sein, um eine Information 1236 zu liefern, die beispielsweise eine Orientierung der Empfangsspulen 1210, 1202, 1230 im Hinblick auf eine Richtung einer auf die Vorrichtung 1200 wirkenden Beschleunigung beschreiben kann. Die Vorrichtung 1200 umfasst ferner ein Koordinatensystem-Transformator 1238, der beispielsweise ausgelegt ist, um die Sendesignale der ersten Empfangsspule 1210, der zweiten Empfangsspule 1220 und der dritten Empfangsspule 1230 zu empfangen.

Der Koordinatensystemtransformator 1238 ist ferner ausgelegt, um basierend auf der durch den Richtungserkenner 1234 gelieferten Richtungsinformation 1236 und ferner basierend auf den durch die Empfangsspulen 1210, 1220, 1230 gelieferten Sensorsignalen 1211, 1221, 1231 eine richtungskorrigierte bzw. richtungs-transformierte Information über drei Komponenten 1239a, 1239b, 1239c des magnetfeldes zu liefern.

Beispielsweise kann der Koordinatensystemtransformator 1238 ausgelegt sein, um eine Information über eine Magnetfeld-komponente in Richtung der Erdbeschleunigung zu erhalten. Ist beispielsweise aufgrund der Richtungsinformation 1236 bekannt, in welcher Richtung (relativ zu einer Orientierung der Vorrichtung 1200) eine auf die Vorrichtung 1200 wirkende Beschleunigung (z. B. eine Erdbeschleunigung) wirkt, so kann beispielsweise der Koordinatensystem-Transformator 1238 basierend auf einer Kenntnis über die Orientierung der Empfangsspule (1210, 1220, 1230) bestimmen, wie groß eine Komponente des Magnetfelds in z-Richtung, also beispielsweise in Richtung der Erdbeschleunigung ist. Somit beschreibt beispielsweise die z-Komponente 1239a zumindest näherungsweise eine Komponente des Magnetfelds in einer Richtung parallel zu der auf die Vorrichtung 1200 wirkenden Beschleunigung (beispielsweise also näherungsweise der Magnetfeldkomponente in Richtung der Erdbeschleunigung). Die x-Komponente 1239b und die y-Komponente 1239c beschreiben beispielsweise Magnetfeldkomponenten in Richtungen senkrecht zu der Richtung der auf die Vorrichtung wirkenden Beschleunigung (z. B. der Erdbeschleunigung). Diesbezüglich sei darauf hingewiesen, dass bei einigen Ausführungsbeispielen die Vorrichtung 1200 nicht in der Lage ist, eine absolute Winkelposition der Vorrichtung 1200 in Bezug auf eine Rotation um eine z-Achse (also um eine Achse in Richtung der Erdbeschleunigung) zu bestimmen. Insofern bestehen verschiedene Möglichkeiten, die drei durch die Empfangsspulen 1210, 1220, 1230 detektierten Magnetfeldkomponenten auf die x-Komponenten 1239b und die y-Komponente 1231c abzubilden. Bei einigen Ausführungsbeispielen besteht darin ausdrücklich ein Freiheitsgrad des Koordinatensystemtransformators. Mit anderen Worten, der Koordinatensystemtransformator kann bei einigen Ausführungsbeispielen ausgelegt sein, um die x-Komponente 1239b und/oder die y-Komponente 1239c gemäß einer zumindest teilweise willkürlich gewählten Koordinatensystemtransformation aus den Signalen 1211, 1221, 1231 der Empfangsspulen 1210, 1220, 1230 abzuleiten.

Die Vorrichtung 1200 umfasst ferner einen Auswerter 1240, der von seiner Funktionsweise her beispielsweise dem Auswerter 840 entspricht. Die Vorrichtung 1200 umfasst ferner einen Referenzsignalerzeuger 1250, der von seiner Funktionsweise her im Wesentlichen dem Referenzsignalerzeuger 850 entsprechen kann. Der Referenzsignalerzeuger 1250 ist im Übrigen ausgelegt, um ein Referenzsignal 1242 an den Auswerter 1240 zu liefern.

Die Vorrichtung 1200 kann im Übrigen optional einen Drehungserkenner 1260 umfassen, der beispielsweise ausgelegt ist, um die Signale 1211, 1221, 1231 von den Empfangsspulen 1210, 1220, 1230 zu empfangen und eine Drehung zu detektieren. Der Drehungserkenner 1260 kann im Übrigen alternativ auch mit dem Koordinatensystemtransformator zusammenwirken. Bei einem Ausführungsbeispiel kann der Drehungserkenner 1260 beispielsweise anstelle der Signale (oder zusätzlich zu den Signalen) der Empfangsspulen 1210, 1220, 1230 die Komponenten-Signale 1239a, 1239b und 1239c (oder eine Auswahl aus diesen Signalen) empfangen. Der Drehungserkenner 1260 kann im Übrigen optional mit dem Referenzsignalerzeuger 1250 und/oder dem Auswerter 1240 gekoppelt sein, um an den Referenzsignalerzeuger 1250 und/oder den Auswerter 1240 eine Information 1262 über eine Drehung zu liefern.

Der Auswerter 1240 ist beispielsweise ausgelegt, um eine Information 1244 zu liefern, die anzeigt, dass die Vorrichtung 1200 eine durch ein magnetisches Wechselfeld markierte Grenze überschritten hat. Durch den Einsatz der Koordinatentransformation beziehungsweise durch die Verwendung des Koordinatensystem-Transformators 1238 kann beispielsweise die Information 1244 derart gewonnen werden, dass diese anzeigt, wenn die Vorrichtung 1200 eine senkrecht oberhalb (also in Richtung der Erdbeschleunigung oberhalb) eines stromdurchflossenen Leiters verlaufende Grenze bzw. Grenzfläche überschritten hat, oder wenn die Vorrichtung 1200 eine senkrecht unterhalb (also in Richtung der ersten Beschleunigung unterhalb) eines stromdurchflossenen Leiters verlaufende Grenze bzw. Grenzfläche überschritten hat.

In anderen Worten, die Information 1244 kann beispielsweise derart gewonnen werden, dass die Information 1244 anzeigt, wenn die Vorrichtung 1200 eine Fläche durchkreuzt hat, die durch einen stromdurchflossenen Leiter beschrieben bzw. markiert wird und die sich in Richtung der Erdbeschleunigung erstreckt. Beispielsweise kann die Vorrichtung 1200 so ausgelegt sein, dass die Information 1244 anzeigt, wie die Vorrichtung durch die Torfläche, also die Fläche, die durch die Torlinie 1093, den linken Pfosten 1082, den rechten Pfosten 1084 und die Torlatte 1086 begrenzen wird, durchtritt. Die Information 1244 kann ferner zusätzlich anzeigen, wenn die Vorrichtung 1200 sich beispielsweise über die Torlatte hinweg bewegt. Auch in diesem Fall kann die Information 1244 aktiv werden.

Ganz allgemein kann die Information 1244 somit anzeigen, wenn die Vorrichtung 1200 eine Grenzfläche überschreitet, die beispielsweise durch das Magnetfeld eines stromdurchflossenen Leiters markiert ist.

Bei einigen Ausführungsbeispielen ist es dabei unerheblich, die genau die Information 1244 erzeugt wird. In anderen Worten, die Einrichtungen 1210, 1220, 1230, 1234, 1238, 1240, 1250, 1260 können durch eine andere geeignete Anordnung ersetzt werden, die eine entsprechende Information 1244 liefert.

Die Vorrichtung 1200 umfasst ferner eine Torerkenner 1280, der ausgelegt ist, um basierend auf der Information 1244 und (optional) basierend auf der durch den Beschleunigungssensors 1232 gelieferten Information ein Torereignis zu erkennen und somit eine Information 1282 über ein Torereignis zu liefern. Bei einem Ausführungsbeispiel ist der Torerkenner 1280 ausgelegt, um ein Torereignis zu erkennen, wenn die Information 1244 anzeigt, dass die Vorrichtung 1200 eine (z. B. durch das Magnetfeld eines stromdurchflossenen Leiters) markierte Grenze überschreitet, es sei denn, es liegt eine Information vor, die darauf hinweist, dass das Überschreiten der durch das Magnetfeld markierten Grenze nicht auf ein Torereignis zurückzuführen ist. Bei einem Ausführungsbeispiel ist der Torerkenner 1280 konfiguriert, um eine entsprechende Information, die anzeigt, dass ein Überschreiten der markierten Grenze nicht auf ein Torereignis zurückzuführen ist, zu erzeugen, wenn die Vorrichtung 1200 innerhalb eines vorgegebenen Zeitraums zwei Mal eine durch ein Magnetfeld markierte Grenze überschreitet, ohne dass eine große äußere Beschleunigung (zusätzlich zu der Erdbeschleunigung) auf die Vorrichtung beziehungsweise auf den Beschleunigungssensor 1232 eingewirkt hat. Zur Bestimmung, ob auf die Vorrichtung 1200 bzw. auf den zu der Vorrichtung 1200 gehörigen Beschleunigungssensors 1232 eine große Beschleunigung eingewirkt hat, kann beispielsweise das durch den Beschleunigungssensor 1232 gelieferte Beschleunigungssignal dem Torerkenner 1280 zur Auswertung zugeführt werden. Der Torerkenner 1280 kann somit beispielsweise konfiguriert sein, um zu bestimmen, ob zwischen einem ersten Zeitpunkt, zu dem die Vorrichtung 1200 ein erstes Mal die durch das Magnetfeld markierte Grenze überschritten hat, um einem zweiten Zeitpunkt, zu dem die Vorrichtung 1200 zu einem zweiten Mal eine durch ein Magnetfeld markierte Grenze durchschritten hat, eine Beschleunigung durch den Beschleunigungssensor 1232 erfasst wurde, die zumindest gleich einer vorgegebenen Mindestbeschleunigung ist. Liegt eine solche "große" Beschleunigung vor, so kann der Torerkenner 1280 beispielsweise die Informationen 1282 über ein Torereignis ausgeben, auch wenn innerhalb eines vorgegeben Zeitraumes mehr als ein Mal eine durch ein magnetisches Feld markierte Grenze überschritten wurde. Liegt eine derartige "große" Bescheinigung nicht vor, so kann der Torerkenner 1280 hingegen konfiguriert sein, um eine Ausgabe einer Information 1282 über ein Torereignis zu unterdrücken, sofern die Vorrichtung 1200 innerhalb des vorgegebenen Zeitraums zumindest zwei Mal eine oder mehrere verschiedene durch ein Magnetfeld markierte Grenzen überschritten hat.

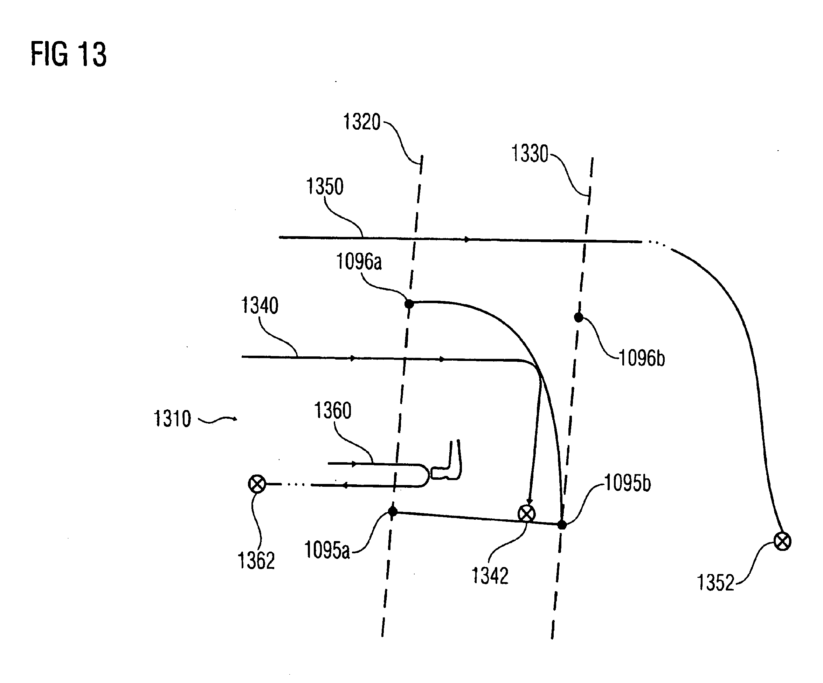

Die Funktionsweise des genannten Mechanismus wird im Folgenden anhand der Fig. 13 verdeutlicht. Fig. 13 zeigt einen Querschnitt durch eine Spielanlage gemäß einem Ausführungsbeispiel der Erfindung. Die Spielanlage gemäß de Fig. 13 umfasst im Wesentlichen dieselben Elemente wie die Spielanlage gemäß der Fig. 11. Allerdings wurde hier aus Gründen der Übersichtlichkeit halber auf die Darstellung der Magnetfelder verzichtet. Gleiche Einrichtungen sind in den Fig. 11 und 13 allerdings mit gleichen Bezugszeichen bezeichnet und werden nicht noch einmal beschrieben.

Die Fig. 13 zeigt ein Tor 1310. An dem Tor bzw. benachbart zu dem Tor sind zwei Leiterstücke 1095a, 1095b in der ersten Leiterschleife 1095 sowie zwei Leiterstücke 1096a, 1096b an der zweiten Leiterschleife 1096 angeordnet. Durch das in dem Leiterstücken 1095a, 1096a erzeugte Magnetfeld wird eine durch ein Magnetfeld markierte Grenze 1320 erzeugt, die in der Fig. 13 gestrichelt bezeichnet ist. Durch das in den Leiterstücken 1095b und 1096b erzeugte Magnetfeld wird im Übrigen eine durch ein Magnetfeld markierte Grenze 1330 erzeugt. Während in den vorliegenden Ausführungen zur Vereinfachung davon ausgegangen wird, dass die erste Grenze 1320 im Wesentlichen durch die Leiterstücke 1095a, 1096a erzeugt wird, haben in der Realität natürlich auch die durch die Leiterstücke 1095b, 1096b erzeugten Magnetfeldanteile einen Einfluss auf den Verlauf der ersten Grenze 1320. In ähnlicher Weise haben auch durch die Leiterstücke 1096a, 1095a erzeugten Magnetfeldanteile einen Einfluss auf den Verlauf der zweiten Grenze 1330. Aus Gründen der Einfachheit werden hier die genannten Wechselwirkungen allerdings im Wesentlichen vernachlässigt.

Im Folgenden werden drei Fälle beschrieben. In einem ersten Fall wird davon ausgegangen, dass ein Spielgerät, z. B. ein Ball, in das Tor geschossen wird, durch das Tornetz abgebremst wird und innerhalb des Tores liegen bleibt. Eine entsprechende Flugbahn des Balles ist mit 1340 bezeichnet, und eine Endposition des Balles ist mit 1342 bezeichnet. In diesem Fall durchschreitet das Spielgerät die erste Grenze 1320 genau ein Mal. Zu weiteren Überschreitungen irgendwelcher magnetisch markierten Grenzen kommt es hingegen nicht (bzw. erst dann, wenn ein Spieler den Ball nach einer relativ langen Zeitdauer aus dem Innern des Tores heraus bewegt). Somit stellt ein derartiger Bewegungsablauf eines Spielgeräts, bei dem dieses einmal die erste Grenze 1320 durchschreitet, im Regelfalle ein gültiges Torereignis dar.

In einem zweiten Fall fliegt das Spielgerät über das Tor hinweg. Eine entsprechende Flugbahn eines Spielgerätes ist beispielsweise mit 1350 bezeichnet. Nachdem das Spielgerät über das Tor hinweggeflogen ist, fällt das Spielgerät irgendwann einmal auf den Boden. Eine endgültige Position des Spielgerätes ist dabei mit 1352 bezeichnet. Das Spielgerät durchquert während seiner Flugbahn 1352 innerhalb eines bestimmten Zeitraums, der von der Geschwindigkeit des Spielgerätes abhängt, die erste Grenze 1320 und die zweite Grenze 1330. Im Übrigen ist leicht ersichtlich, dass in dem Falle, in dem das Spielgerät die Flugbahn 1350 nimmt, zumindest bei einigen Spielen (z. B. beim Fußballspiel oder beim Handballspiel) kein Torereignis vorliegt.

In einem dritten Fall tritt ein Spielgerät zwar in das Innere des Tores 1310 ein, wird dann aber, beispielsweise von einem Spieler bzw. von einem Torwart, wieder aus dem Tor heraus geschlagen. Eine entsprechende Flugbahn des Spielgerätes ist mit 1360 bezeichnet, und eine endgültige Lage des Spielgeräts, außerhalb des Tores, ist mit 1362 bezeichnet. Das Spielgerät überschreitet somit die erste Grenze 1220 zwei Mal kurz hintereinander, nämlich einmal beim Eintreten in das Innere des Tores und einmal beim Heraustreten aus dem Innern des Tores.

Wird nun davon ausgegangen, dass die Vorrichtung 1200 gemäß der Fig. 12 beispielsweise im Innern des entsprechenden Spielgeräts (z. B. im Innern eines Fußballs, eines Handballs, eines Pucks oder anderen Spielgerätes) angeordnet ist, kann in den oben beschriebenen drei Fällen, jeweils eine korrekte Torentscheidung getroffen werden.

Weißt das Spielgerät und damit die in dem Spielgerät oder an dem Spielgerät angebrachte Vorrichtung 1200 die erste Flugbahn 1340 auf, so wird die erste Grenze 1320 einmal überschritten. Es wird also innerhalb eines vorbestimmten Zeitintervalls nur einmal eine durch ein Magnetfeld markierte Grenze, nämlich die erste Grenze 1320, überschritten. Somit kann auf ein Torereignis geschlossen werden, und der Torerkenner 1280 kann eine entsprechende Information 1282 ausgeben.

Bewegt sich das Spielgerät und damit die in dem Spielgerät oder an dem Spielgerät angebrachte Vorrichtung entlang der Flugbahn 1350, so überschreitet die Vorrichtung 1200 innerhalb eines vorbestimmten Zeitintervalls zwei Mal eine durch ein Magnetfeld markierte Grenze, nämlich zunächst die erste Grenze 1320 und danach die zweite Grenze 1330. Im Übrigen tritt zwischen dem Überschreiten der ersten Grenze 1320 und dem Überschreiten der zweiten Grenze 1330 keine wesentliche Beschleunigung (abgesehen von der Erdbeschleunigung und einer durch den Luftwiderstand bedingten Abbremsung) auf das Spielgerät bzw. auf die Vorrichtung 1200 auf. Somit kann, wie oben beschrieben, durch den Torerkenner 1280 eine Erzeugung einer Information, die ein Torereignis anzeigt, unterdrückt werden. Somit wird in zutreffender Weise eine Signalisierung eines Torereignisses unterdrückt.

Bewegt sich das Spielgerät bzw. die Vorrichtung 1200 entlang der Bahn 1360, so überschreitet die Vorrichtung 1200 innerhalb eines vorbestimmten Zeitintervalls zwei Mal eine durch ein Magnetfeld markierte Grenze, nämlich zweimal die erste Grenze 1320. Im Übrigen tritt zwischen dem ersten Überschreiten der ersten Grenze 1320 und dem zweiten Überschreiten der ersten Grenze 1320 eine wesentliche Beschleunigung auf das Spielgerät bzw. auf die Vorrichtung 1200 auf, da ja das Spielgerät (z. B. durch ein Körperteil 1364) eines Spielers bzw. Torwart wieder aus dem Tor herausgeschlagen wird. Somit kann durch die Vorrichtung 1200 die entsprechende Beschleunigung, die in der Regel deutlich größer als die Erdbeschleunigung ist, erkennt werden. Somit kann der Torerkenner 1280 in zutreffender Weise eine Information 1282 liefern, die ein Torereignis anzeigt.

Zusammenfassend lässt sich somit festhalten, dass durch die Vorrichtung 1200 in sehr vielen Fällen Torereignisse zuverlässig detektiert werden können. Ein Überfliegen des Tores hingegen wird durch die Vorrichtung 1200 nicht als ein Torereignis erkannt.

Bei einigen Ausführungsbeispielen kann somit die Vorrichtung 1200 in vorteilhafter Weise mit einer Spielanlage zusammenwirken, wie sie anhand der Fig. 10a, 10b, 11 und 13b geschildert wurde.

Einige Aspekte der vorliegenden Erfindung können also wie folgt zusammengefasst werden:

Das hier beschriebene Verfahren (z. B. das Verfahren zum Erkennen, wenn ein Objekt oder eine Person eine durch ein magnetisches Feld die markierte Grenze überschreitet), kann beispielsweise zur Erkennung von Linienüberschreitungen bei Ballspielen (z. B. beim Fußball) verwendet werden. In entsprechender Weise können die hierin beschriebenen Vorrichtungen zur Erkennung von Linienüberschreitungen bei Ballspielen verwendet werden.

Das Verfahren bzw. die Vorrichtung könnte also auch zur Erkennung von Linienüberschreitungen verwendet werden. Das Spielfeld kann beispielsweise mit einem Kabel im Boden umgeben werden. Ein Spielteilnehmer oder ein Ball kann beispielsweise einen Empfänger mit einer Empfangsspule tragen, der beispielsweise zusätzlich mit einem Funksender ausgestattet ist, um eine Erkennung (z. B. einer Linienüberschreitung) an eine zentrale Stelle zu übermitteln.

Gemäß einem weiteren Aspekt können die hierin beschriebenen Vorrichtungen und Verfahren beispielsweise für eine Torentscheidung (z. B. bei einem Fußballspiel) verwendet werden.

Das Verfahren bzw. die Vorrichtung kann also auch zur Torentscheidung genutzt werden. Dazu kann beispielsweise eine Fläche im Tor, beispielsweise eine Fläche zwischen den beiden Torpfosten und z. B. Eckpunkten eines abgespannten Netzes, wie in Fig. 10b gezeigt, mit einer vergrabenen Leiterschleife umgeben sein. Ein Objekt, in diesem Fall beispielsweise ein Ball, kann mit drei orthogonalen Empfangsspulen ausgestattet sein. Übertritt beispielsweise der Ball die Linie, an der die Leiterschleife vergraben ist, so kann beispielsweise ein Phasenwechsel erkennt werden. Dieser Phasenwechsel kann dann beispielsweise als ein Tor bzw. Torereignis interpretiert werden.

Bei einem Ausführungsbeispiel können drei Seiten des Tores mit einem Netz umspannt sein. In diesem Fall erfolgt ein Linienübertritt beispielsweise nur über eine vordere Torlinie. Es wird somit beispielsweise ein Eintritt in eine eingegrenzte Fläche erkannt (z. B. ein Eintritt eines Spielgerätes bzw. Balles in die innere Torgrundfläche bzw. ins Innere des Tores) .

Bei einigen Ausführungsbeispielen ist es wünschenswert, einen Eintritt (z. B. eines Spielgeräts in ein Tor) auch in der Höhe, also in einer dritten Dimension, aufzulösen. So ist es beispielsweise bei einigen Ausführungsbeispielen wünschenswert, dass der Eintritt (z. B. der Eintritt des Balls in das Innere des Tores) sicher auch über eine gewisse Höhe über dem Boden erkannt wird. Zum anderen ist es bei einigen Ausführungsbeispielen wünschenswert, einen Schuss über das Tor von einem echten Tor zu unterscheiden. Bei einigen Ausführungsbeispielen wird daher ein weiteres Kabel oberhalb des Tores verwendet. Das Kabel beziehungsweise das weitere Kabel kann beispielsweise entlang einer Torlatte (des Tores) angebracht werden. Das weitere Kabel kann beispielsweise eine Fläche zwischen den beiden Pfosten (bzw. Torpfosten) und zwei weiteren Eckpunkten hinter dem Tor, z. B. Abspannpunkten des Netzes, aufspannen. Bei dem Ausführungsbeispiel sind somit zwei Kabel vorhanden, die ein elektromagnetisches Feld erzeugen.

Bei einigen Ausführungsbeispielen können die Signale (beispielsweise die in den Kabeln bzw. elektrischen Leitern angeregten elektrischen Ströme) bei unterschiedlichen Frequenzen oder zu unterschiedlichen Zeitpunkten, also zeitlich alternierend, abgestrahlt werden.

Mit der zweiten Leiterschleife an der Torlatte (z. B. mit der zweiten Leiterschleife 1096) kann beispielsweise ein Schuss über das Tor (wie er beispielsweise in der Figur 11 als Flugbahn 1198 gezeigt ist) dadurch erkannt werden, dass der Ball in eine von der Leiterschleife umgebene Fläche eintritt und dann aber nach hinten wieder austritt (beispielsweise durch eine erste markierte Grenze in eine durch die zweite Leiterschleife markierten Raumbereich eintritt und den durch die zweite Leiterschleife 1096 markierten Raumbereich anschließend wieder durch eine zweite markierte Grenze verlässt). Bei einem Ausführungsbeispiel wird in dem genannten Fall also je ein Phasenübergang bei einem Eintritt (z. B. in den markierten Raumbereich) und bei einem Austritt (z. B. aus dem markierten Randbereich) erkannt.

Bei der im Untergrund verlegten beziehungsweise im Boden vergrabenen Leitung hindert das Netz den Ball vor dem Austritt aus der mit der Leiterschleife (z. B. der ersten Leiterschleife 1095) umgebenen Fläche (beziehungsweise vor einem Austritt aus einem durch die erste Leiterschleife 1095 markierten Raumbereich).

Weiterhin kann bei einigen Ausführungsbeispielen mit dem zweiten Kabel an der Latte ein Erkennungsbereich in der Höhe verbessert werden. Da das Signal eines Kabels in vielen Fällen mit dem Abstand abnimmt, kann beispielsweise durch eine Verwendung eines zweiten Kabels mit einem Abstand zu dem ersten Kabel ein Signalempfang verbessert werden.

Ein zusätzliches Problem, das bei einem Fußball im Vergleich zu einem Einkaufswagen auftreten kann, besteht darin, dass der Ball sich während eines Fluges in allen drei Raumrichtungen bewegen bzw. rotieren kann. Bei einigen Ausführungsbeispielen ist es somit wünschenswert, sicher zu erkennen, dass eine Phasenänderung oder ein Phasensprung nicht von einer Rotation des Balls resultiert, sondern von einem Überschreiten eines Kabels (bzw. einer durch ein magnetisches Feld markierten Grenze). Dazu kann beispielsweise eine Feldstärke der drei Spulensignale ausgewertet werden. Bei einer Rotation kann es beispielsweise zu einer Signalverschiebung zwischen zwei orthogonalen Spulen kommen. Während die Signalstärke bei einer Spule zunimmt, kann sie beispielsweise bei der andere Spule in gleichem Maße abnehmen. Somit kann beispielsweise eine derartige Signalverschiebung, bei der ein von einer der Empfangsspulen geliefertes Signal abnimmt und bei der gleichzeitig ein von einer anderen der Empfangsspule geliefertes Signal zunimmt, als eine Rotation erkannt werden. Anders ist es beispielsweise bei einem Überschreiten eines Kabels (bzw. bei einem Überschreiten einer durch ein Magnetfeld markierten Grenze). Hier nimmt eine Feldstärke in einer Spule (beziehungsweise in einer der Empfangsspulen) ab, ohne dass eine Feldstärke in einer anderen Spule (bzw. in einer anderen der Empfangsspulen) ansteigt. Genau über dem Kabel (also beispielsweise senkrecht oberhalb des Kabels bzw. elektrischen Leiters) ist beispielsweise die Feldstärke (beziehungsweise eine Komponente der magnetischen Feldstärke) Null und steigt danach mit invertierter Phase wieder an.

Somit kann anhand eines derartigen Signalverlaufs beispielsweise ein Überschreiten einer markierten Grenze erkannt werden.

Zusammenfassend ist somit festzuhalten, dass anhand der Fig. 10b ein Tor mit zwei Leiterschleifen beschrieben wurde, dass sich beispielsweise für eine Erkennung von Torereignissen mit hoher Zuverlässigkeit eignet. Eine erste Leiterschleife (z. B. die erste Leiterschleife 1095) kann dabei im Boden vergraben sein, und eine zweite Leiterschleife (z. B. die zweite Leiterschleife 1096) kann zumindest teilweise an der Torlatte 1086 angebracht sein.

Die Fig. 11 zeigt ein Tor mit einer Leiterschleife von der Seite. Eine Flugbahn 1197 beschreibt einen Schuss in das Tor, und eine Flugbahn 1198 beschreibt einen Schuss über das Tor. Die genannten Schüsse in das Tor bzw. über das Tor können bei einigen Ausführungsbeispielen der erfindungsgemäßen Vorrichtung bzw. des erfindungsgemäßen Verfahrens unterschieden werden.

Im folgenden werden noch exemplarisch einige Ausführungsbeispiele beschrieben, die als optionale Möglichkeiten zur Ergänzung des hierin Beschriebenen Konzepts zu verstehen sind.

Gemäß einem Ausführungsbeispiel schafft die vorliegende Erfindung eine Spielanlage mit einem Tor, wobei das Tor eine Torfläche zumindest teilweise begrenzt, einem ersten elektrischen Leiter der entlang einer ersten Begrenzung der Torfläche angeordnet ist, einem zweiten elektrischen Leiter, der entlang einer zweiten Begrenzung der Torfläche, die der ersten Begrenzung der Torfläche gegenüberliegt, angeordnet ist, und einer Anregungseinrichtung, die ausgelegt ist, um einen Stromfluss in dem ersten elektrischen Leiter anzuregen und um einen Stromfluss in dem zweiten elektrischen Leiter anzuregen.

Gemäß einem weiteren Aspekt schafft die Erfindung eine Spielanlage, wobei das Tor drei Seiten einer im Wesentlichen rechteckigen Torfläche begrenzt, wobei eine Torlinie eine vierte Seite der im Wesentlichen rechteckigen Torfläche (1030) begrenzt, wobei der erste elektrische Leiter (1040; 1095a) entlang zumindest eines Teils der Torlinie angeordnet ist, und wobei der zweite elektrische Leiter (1050; 1096a) entlang einer Torlatte (1016; 1086) des Tors angeordnet ist.

Gemäß einem weiteren Aspekt schafft die Erfindung eine Spielanlage, bei der der zweite elektrische Leiter Teil einer Leiterschleife ist, die oberhalb eines Torinnenraums angeordnet ist, um eine Schleifenfläche aufzuspannen, die mit einer Grundfläche (1092), auf der das Tor angeordnet ist, einen Winkel von nicht mehr als 30° einschließt.

Gemäß einem weiteren Aspekt schafft die Erfindung eine Spielanlage, wobei der zweite Leiter (1050; 1096a) Teil einer Leiterschleife ist, wobei die Leiterschleife so angeordnet ist, dass ein Spielgerät, das in horizontaler Richtung geradlinig über die Torlatte über das Tor hinweg fliegt, sich zweimal senkrecht oberhalb eines zu der Leiterschleife gehörigen Leiterabschnitts befindet.

Gemäß einem weiteren Aspekt schafft die Erfindung eine Spielanlage, wobei die Anregungseinrichtung ausgelegt ist, um den ersten elektrischen Leiter so anzuregen, dass der erste elektrische Leiter von einem Wechselstrom einer ersten Frequenz durchflossen wird, und um den zweiten elektrischen Leiter so anzuregen, dass der zweite elektrische Leiter von einem Wechselstrom einer zweiten Frequenz durchflossen wird, wobei die sich erste Frequenz von der zweiten Frequenz unterscheidet.

Gemäß einem weiteren Aspekt schafft die Erfindung eine Spielanlage, bei der die Anregungseinrichtung ausgelegt ist, um den ersten elektrischen Leiter und den zweiten elektrischen Leiter so anzuregen, dass der erste elektrische Leiter und der zweite elektrische Leiter zeitlich abwechselnd von einem elektrischen Strom durchflossen werden.

Gemäß einem Aspekt schafft die vorliegende Erfindung ein Verfahren zum Liefern einer Information im Hinblick auf ein Torereignis. Das Verfahren umfasst ein Erkennen, ob ein Spielgerät eine durch ein magnetisches Wechselfeld markierte erste Grenze überschreitet, oder ob das Spielgerät eine durch ein magnetisches Wechselfeld markierte zweite Grenze überschreitet, wobei die erste Grenze durch einen stromdurchflossenen Leiter entlang einer Torlinie eines Tores markiert wird, und wobei die zweite Grenze durch einen stromdurchflossenen Leiter entlang einer Torlatte des Tores markiert wird. Das Verfahren umfasst ein Signalisieren, dass ein Torereignis vorliegt, ansprechend auf ein Erkennen, dass das Spielgerät die erste Grenze oder die zweite Grenze überschritten hat, es sei denn, es liegt eine Information vor, die anzeigt, dass das Spielgerät nach Überschreiten der zweiten Grenze eine dritte Grenze überschreitet, durch ein magnetisches Feld markiert ist, wobei die dritte Grenze durch einen stromdurchflossenen Leiter markiert ist, der so angeordnet ist, dass die dritte Grenze von einem Spielgerät überschritten wird, das sich oberhalb der Torlatte über das Tor hinweg bewegt.

Gemäß einem Aspekt umfasst das Feststellen, ob das Spielgerät innerhalb eines vorgegebenen Zeitraums nach Überschreiten der zweiten Grenze die dritte Grenze überschreitet, folgende Schritte aufweist:
Erkennen, ob das Spielgerät innerhalb des vorgegebenen Zeitraums zwei markierte Grenzen überschritten hat; und,
falls das Spielgerät innerhalb des vorgegebenen Zeitraums zwei markierte Grenzen überschritten hat,
Erkennen, ob zwischen dem Überschreiten der beiden Grenzen eine Beschleunigung auf das Spielgerät eingewirkt hat, die größer oder gleich einer vorgegebenen Maximalbeschleunigung ist, und
Bereitstellen einer Information, die anzeigt, dass das Spielgerät die dritte Grenze überschritten hat, wenn zwischen dem Überschreiten der beiden Grenzen keine Beschleunigung auf das Spielgerät eingewirkt hat, die größer oder gleich der Maximalbeschleunigung ist.

Gemäß einem Aspekt können die hierin beschriebene Vorrichtung und das hierin beschriebene Verfahren beispielsweise um alle diejenigen Aspekte ergänzt werden, die im Hinblick auf eine Erkennung eines Torereignisses beschrieben wurden.

Ein typisches Ausführungsbeispiel der vorliegenden Erfindung wurde zuvor anhand der Fign. 2 bis 7 beschrieben. Bei bevorzugten Realisierungen dieses Ausführungsbeispiels wird das Signal, das von der typischerweise vergrabenen Leitung oder Leiterschleife abgestrahlt wird und das z.B. ein einfaches 8 kHz-Wechselfeld sein kann, über drei auf eine etwas höhere Frequenz abgestimmte Parallelschwingkreise empfangen, deren Spulen zueinander orthogonal angeordnet sind. Die mit den Spulen empfangenen Signale werden verstärkt und Komparatoren zugeführt, die in einem Mikrocontroller integriert sein können.

Um die Signale im Mikrocontroller auswerten zu können, wird auf eine steigende oder fallende Flanke des z-Signals, also des mit der in z-Richtung orientierten Spule empfangenen Signals, getriggert. Das z-Signal ist unabhängig von der Radstellung. Durch ein dabei erhaltenes Triggersignal wird folgender Abtastvorgang ausgelöst: Ausgangswerte der Komparatoren für die z-Richtung, die x-Richtung und die γ-Richtung werden in Form von 1/0-Informationen, die eine aktuelle Polung wiedergeben, abgetastet und nacheinander in dieser Reihenfolge in ein entsprechendes Register geschrieben. Pro Periode des Wechselfeldes werden dabei acht Abtastwerte (entsprechend einem Byte) aufgezeichnet und verarbeitet.

Die Triggerung erfolgt mit Hilfe des z-Signals, da dieses bei jeder Raststellung empfangen werden kann, sofern sich das Rad nur nicht genau über einer Phasensprungstelle befindet. Aus demselben Grund wird für eine durch einen externen Komparator durchgeführte Felderkennung ebenfalls das z-Signal verwendet. Der Mikrocontroller erkennt durch eine entsprechend lange Low-Phase, die länger dauert als die für die Austastung des 8-kHz-Signals erforderlichen 16 Millisekunden, ein Verlassen des Feldes oder eine Rückkehr in selbiges. Dadurch kann ein Initialzustand hergestellt werden. Vor allem aber werden dadurch Rauschprobleme bei nicht vorhandenem Signal vermieden, was für das Powermanagement von großer Bedeutung ist.

Bei der Auswertung werden die abgetastet Werte bitweise miteinander verglichen, woraus die Phasenbeziehungen der Signale z-x, z-y und x-y abgeleitet werden. Sind die Abtastwerte von beispielsweise z und x gleich (1 oder 0), so sind die Signale in Phase. Sind die beiden Signale ungleich, sind sie gegenphasig. Es wird also nur die Phaseninformation pro Periode und nicht der Betrag des jeweiligen Signals betrachtet. Aus den relativen Phasenzuständen zwischen x, y und z (die Buchstaben x, y und z stehen hier jeweils für das Signal, das von der in die entsprechende Richtung orientierten Spule empfangen wird) lassen sich Zustände ableiten, wie sie z.B. in Fig. 7 dargestellt sind. Links sind dort die Zustände auf einer Seite der Leitung, rechts die Zustände auf der anderen Seite der Leitung dargestellt. Bei Überschreiten der Leitung treten bestimmte Zustandsübergänge auf, die sich aus den Unterschieden zwischen den in Fig. 7 jeweils nebeneinander stehenden Feldstärken (entsprechend Signalstärken) ergeben. Wird eine Zustandsänderung festgestellt, die einen Grenz- oder Leitungsübertritt markiert, veranlasst der Mikrocontroller im Fall des Einkaufswagens ein Anziehen oder Lösen der Bremse.

Es ist möglich, dass an einem in beschriebener Weise gesicherten Zugang nicht nur eine einzelne Leitung, sondern eine beispielsweise rechteckige Leiterschleife vorgesehen ist, bei der zwei parallel verlaufende Leiterabschnitte einen verhältnismäßig kleinen Abstand voneinander haben können, beispielsweise einen Abstand von etwa 1 m. Dann kann es zu einer Überlagerung von Feldlinien kommen, die durch die verschiedenen Leiterabschnitte verursacht werden, so dass bei einem Passieren des Zugangs nicht nur zwei Phasenwechsel messbar sind, die den beiden Leiterabschnitten zuzuordnen wären, sondern insgesamt fünf Phasenwechsel als Phasenwechsel sei dabei ein Sprung einer relativen Phase zwischen zwei mit zwei unterschiedlich orientierten Spulen gemessenen Signalen bezeichnet. Mit einem entsprechenden Auswertealgorithmus kann der zuletzt geschilderte Umstand berücksichtigt werden.

Signaländerungen, die auf ein Überschreiten der durch die Leitung markierten Grenze zurückgehen, lassen sich bei dem vorgeschlagenen Verfahren gerade im Fall des Einkaufswagens, der in der Regel nur um die z-Achse gedreht wird, deutlich von solchen Signaländerungen unterscheiden, die durch ein Drehen des Einkaufswagens zurückzuführen sind. In diesem Fall kann eine Drehung des Wagens leicht durch eine Auswertung einer relativen Phase und/oder Intensität der den Richtungen x und y (s. Fig. 7) zugeordneten Signale erkennen.

## Patentansprüche

1. Vorrichtung (100; 800) zum Erkennen, wenn ein Objekt oder eine Person die mit der Vorrichtung versehen bzw. verbunden ist eine durch ein magnetisches Wechselfeld (312a - 312e; 624a, 624b) markierte Grenze (630) überschreitet, mit folgenden Merkmalen:
einem ersten Magnetfeld-Sensor (110; 810), der ausgelegt ist, um eine erste Magnetfeld-Komponente (H_{z}) des magnetischen Wechselfeldes zu detektieren, um ein zugehöriges Magnetfeld-Sensor-Signal (112; 812) zu liefern;
einem zweiten Magnetfeld-Sensor (120; 820), der ausgelegt ist, um eine zweite Magnetfeld-Komponente (Hₓ) desselben magnetischen Wechselfeldes zu detektieren; und
einem Auswerter (130;840) zum Liefern einer Information, die anzeigt, dass das Objekt oder die Person die markierte Grenze (630) überschritten hat, wobei der Auswerter (130; 840) ausgelegt ist, um eine Phasendifferenz zwischen dem von dem ersten Magnetfeld-Sensor (110; 810) gelieferten Magnetfeld-Sensor-Signal (112; 812) und
einem durch das Detektieren der zweiten Magnetfeld-Komponente (Hₓ) mit dem zweiten Magnetfeld-Sensor (120; 820) gewonnenen Referenz-Signal (132; 842) zu ermitteln und die ermittelte Phasendifferenz so auszuwerten, dass eine Detektion einer Veränderung der Phasendifferenz Voraussetzung für das Liefern der genannten Information ist.

2. Vorrichtung (100; 800) gemäß Anspruch 1, wobei der Auswerter (130; 840) ausgelegt ist, um eine Bereitstellung einer Information (134; 844), die anzeigt, dass das Objekt oder die Person die markierte Grenze (630) überschritten hat, zu verhindern, wenn eine Veränderung der Phasendifferenz zwischen dem durch den ersten Magnetfeld-Sensor (110; 810) gelieferten Magnetfeld-Sensor-Signal (112; 812) und dem Referenz-Signal (132; 842) aufgrund einer Drehung der Vorrichtung (100; 800) erfolgt.

3. Vorrichtung (100; 800) gemäß Anspruch 2, wobei die Vorrichtung (100; 800) ausgelegt ist, um eine Drehung der Vorrichtung (100; 800) relativ zu dem magnetischen Wechselfeld zu erfassen, und wobei der Auswerter (130, 840) ausgelegt ist, um die erfasste Drehung bei dem Liefern der Information (134; 844), die anzeigt, dass das Objekt oder die Person die markierte Grenze (630) überschritten hat, zu berücksichtigen.

4. Vorrichtung (100; 800) gemäß Anspruch 2 oder 3, wobei die Vorrichtung (100; 800) einen Referenzsignal-Korrigierer (850) aufweist, der ausgelegt ist, um basierend auf einem ursprünglichen Referenz-Signal und einer Information (862) über eine Drehung der Vorrichtung (100; 800) relativ zu dem magnetischen Wechselfeld ein phasen-korrigiertes Referenz-Signal zu erzeugen, in dem ein Einfluss von Drehungen der Vorrichtung (100; 800) relativ zu dem magnetischen Wechselfeld auf eine Phasenlage im Vergleich zu dem ursprünglichen Referenz-Signal zumindest verringert ist, und
wobei der Auswerter (130; 840) ausgelegt ist, um zur Bereitstellung der Information (834; 844), die anzeigt, dass das Objekt oder die Person die markierte Grenze (630) überschritten hat, eine Phasendifferenz zwischen dem Magnetfeld-Sensor-Signal (112; 812) und dem phasenkorrigierten Referenz-Signal auszuwerten.

5. Vorrichtung (100; 800) gemäß einem der Ansprüche 2 bis 4, wobei die Vorrichtung (100; 800) einen Bewegungs-Erkenner (860) aufweist, der ausgelegt ist, um basierend auf einer Information über zumindest eine der Magnetfeld-Komponenten eine Drehung der Vorrichtung (100; 800) relativ zu dem magnetischen Wechselfeld zu erfassen.

6. Vorrichtung (100; 800) gemäß Anspruch 5, wobei die Vorrichtung (100; 800) einen dritten Magnetfeldsensor aufweist, der ausgelegt ist, um eine dritte Magnetfeld-Komponente des magnetischen Wechselfeldes zu detektieren, wobei sich eine Magnetfeld-Hauptempfindlichkeitsrichtung des dritten Magnetfeld-Sensors von einer Magnetfeld-Hauptempfindlichkeitsrichtung des ersten Magnetfeld-Sensors unterscheidet, und
wobei sich die Magnetfeld-Hauptempfindlichkeitsrichtung des dritten Magnetfeld-Sensors von einer Magnetfeld-Hauptempfindlichkeitsrichtung des zweiten Magnetfeld-Sensors unterscheidet, und wobei der Drehungs-Erkenner (860) ausgelegt ist, um die Drehung der Vorrichtung (100; 800) relativ zu dem magnetischen Wechselfeld basierend auf einem von dem zweiten Magnetfeld-Sensor (120; 820) gelieferten Magnetfeld-Sensor-Signal (122; 822) und auf einem von dem dritten Magnetfeld-Sensor (830) gelieferten Magnetfeld-Sensor-Signal (832) zu detektieren.

7. Vorrichtung (100; 800)gemäß Anspruch 6, wobei der Drehungs-Erkenner (860) ausgelegt ist, um eine Drehung der Vorrichtung (100; 800) relativ zu dem magnetischen Wechselfeld zu detektieren, wenn sich eine Phasenbeziehung zwischen einem von dem zweiten Magnetfeld-Sensor (820) gelieferten Magnetfeld-Sensor-Signal (822) und einem von dem dritten Magnetfeld-Sensor (830) gelieferten Magnetfeld-Sensor-Signal (832) gegenüber einer Anfangs-Phasenbeziehung um mehr als einen vorgegebenen Phasenbeziehungs-Veränderungs-Schwellwert verändert.

8. Vorrichtung (100; 800) gemäß einem der Ansprüche 1 bis 7, wobei die Vorrichtung (100; 800) einen Referenz-Signal-Erzeuger (140; 850) aufweist, der ausgelegt ist, um das Referenz-Signal (132; 842) abhängig von zumindest zwei Magnetfeld-Sensor-Signalen (822, 832) von zumindest zwei Magnetfeld-Sensoren (820, 830) zu bestimmen.

9. Vorrichtung (100; 800) gemäß Anspruch 8, wobei die Vorrichtung (100; 800) einen dritten Magnetfeld-Sensor (830) aufweist, der ausgelegt ist, um eine dritte Magnetfeld-Komponente des magnetischen Wechselfeldes zu detektieren,
wobei sich eine Magnetfeld-Hauptempfindlichkeitsrichtung des dritten Magnetfeld-Sensors von einer Magnetfeld-Hauptempfindlichkeitsrichtung des ersten Magnetfeld-Sensors unterscheidet,
wobei sich eine Magnetfeld-Hauptempfindlichkeitsrichtung des dritten Magnetfeld-Sensors von einer Magnetfeld-Hauptempfindlichkeitsrichtung des zweiten Magnetfeld-Sensors unterscheidet, und
wobei der Referenz-Signal-Erzeuger (140; 850) ausgelegt ist, um das Referenz-Signal (132; 842) abhängig von einem Magnetfeld-Sensor-Signal (822) des zweiten Magnetfeld-Sensors (820) und einem Magnetfeld-Sensor-Signal (832) des dritten Magnetfeld-Sensors (830) zu bestimmen.

10. Vorrichtung (100; 800) gemäß Anspruch 9, wobei der Referenz-Signal-Erzeuger (140; 850) ausgelegt ist, um zu bestimmen, welches der von dem zweiten Magnetfeld-Sensor (820) und dem dritten Magnetfeld-Sensor (830) gelieferten Magnetfeld-Sensor-Signale (822, 832) stärker ist, und
um das Referenz-Signal (132; 841) von dem stärkeren der von dem zweiten Magnetfeld-Sensor (820) und dem dritten Magnetfeld-Sensor (830) gelieferten Magnetfeld-Sensor-Signale (822, 832) abzuleiten.

11. Vorrichtung (100; 800) gemäß Anspruch 10, wobei der Referenz-Signal-Erzeuger (140; 850) ausgelegt ist, um eine Phasen-Korrektur im Hinblick auf das Referenz-Signal (132; 842) zu bewirken, so dass eine effektive Phasenlage des ReferenzSignals unverändert bleibt, wenn eine Veränderung im Hinblick darauf, von welchem der Magnetfeld-Sensor-Signale (822; 832) das Referenz-Signal (132; 842) abgeleitet wird, auftritt.

12. Vorrichtung gemäß einem der Ansprüche 1 bis 11, wobei die Vorrichtung ausgelegt ist, um ein Torereignis zu signalisieren, wenn der Auswerter eine Information liefert, die anzeigt, dass die Vorrichtung eine durch ein magnetisches Wechselfeld markierte Grenze überschritten hat,
es sei denn, die Vorrichtung überschreitet innerhalb eines vorgegebenen Zeitraums zumindest zweimal durch ein magnetisches Wechselfeld markierte Grenzen, ohne dass auf die Vorrichtung zwischen dem zweimaligen Überschreiten der markierten Grenzen eine Beschleunigung einwirkt, die größer oder gleich einer vorgegebenen Maximalbeschleunigung ist.

13. Verfahren (900) zum Erkennen, wenn ein Objekt oder eine Person eine durch ein magnetisches Wechselfeld markierte Grenze überschreitet, mit folgenden Merkmalen:
Detektieren (910) einer ersten Magnetfeld-Komponente des magnetischen Wechselfeldes;
Detektieren (920)einer zweiten Magnetfeld-Komponente desselben magnetischen Wechselfeldes; Ermitteln einer Phasendifferenz zwischen einem durch das Detektieren der ersten Magnetfeld-Komponente gewonnenen Signal und einem durch das Detektieren der zweiten Magnetfeld-Komponente gewonnenen Referenz-Signal;
Liefern (930) einer Information, die anzeigt, dass das Objekt oder die Person die markierte Grenze überschritten hat, indem die ermittelte Phasendifferenz so ausgewertet wird, dass eine Detektion einer Veränderung der Phasendifferenz Voraussetzung für das Liefern der genannten Information ist.

14. Verfahren gemäß Anspruch 13, wobei das Verfahren folgende Schritte aufweist:
Erkennen, ob ein Spielgerät eine durch ein magnetisches Feld markierte erste Grenze überschreitet, oder ob das Spielgerät eine durch ein magnetisches Feld markierte zweite Grenze überschreitet,
wobei die erste Grenze durch ein erstes stromdurchflossenes Leiterstück entlang einer Torlinie eines Tores markiert ist, und
wobei die zweite Grenze durch ein zweites stromdurchflossenes Leiterstück entlang einer Torlatte des Tores markiert ist; und
Signalisieren, dass ein Torereignis vorliegt, ansprechend auf ein Erkennen, dass das Spielgerät die erste Grenze oder die zweite Grenze überschritten hat,
es sei denn, es liegt eine Information vor, die anzeigt, dass das Spielgerät nach Überschreiten der zweiten Grenze eine dritte Grenze überschreitet, die durch ein magnetisches Feld markiert ist,
wobei die dritte Grenze durch ein drittes stromdurchflossenes Leiterstück markiert ist, das so angeordnet ist, dass die dritte Grenze von einem Spielgerät überschritten wird, das sich oberhalb der Torlatte über das Tor hinweg bewegt.

15. Verfahren gemäß Anspruch 14, wobei das Feststellen, ob das Spielgerät innerhalb eines vorgegebenen Zeitraums nach Überschreiten der zweiten Grenze die dritte Grenze überschreitet, folgende Schritte aufweist:
Erkennen, ob das Spielgerät innerhalb des vorgegebenen Zeitraums zwei markierte Grenzen überschritten hat; und
falls das Spielgerät innerhalb des vorgegebenen Zeitraums zwei markierte Grenzen überschritten hat:
Erkennen, ob zwischen dem Überschreiten der beiden Grenzen eine Beschleunigung auf das Spielgerät eingewirkt hat, die größer oder gleich einer vorgegebenen Maximalbeschleunigung ist, und
Bereitstellen einer Information, die anzeigt, dass das Spielgerät die dritte Grenze überschritten hat, wenn zwischen dem Überschreiten der beiden Grenzen keine Beschleunigung auf das Spielgerät eingewirkt hat, die größer oder gleich der Maximalbeschleunigung ist.

## Claims

1. Device (100; 800) for detecting if an object or a person provided with or connected to the device crosses a limit (630) marked by a magnetic alternating field (312a - 312e; 624a, 624b), having the following features:
a first magnetic field sensor (110; 810) which is designed to detect a first magnetic field component (H_{z}) of the magnetic alternating field in order to deliver an associated magnetic field sensor signal (112; 812);
a second magnetic field sensor (120; 820) which is designed to detect a second magnetic field component (Hₓ) of the same magnetic alternating field; and
an evaluator (130; 840) for delivering an information which indicates that the object or person has crossed the marked limit (630), wherein the evaluator (130; 840) is designed to detect a phase difference between the magnetic field sensor signal (112; 812) delivered by the first magnetic field sensor (110; 810) and a reference signaal (132; 842) gained by detecting the second magnetic field component (Hₓ) with the second magnetic field sensor (120; 820) and to evaluate the detected phase difference such that a detection of a change in the phase difference is a precondition for delivering said information.

2. Device (100; 800) according to claim 1, the evaluator (130; 840) being designed to prevent provision of information (134; 844) which indicates that the object or the person has crossed the marked limit (630) if a change in the phase difference between the magnetic field sensor signal (112; 812), delivered by the first magnetic field sensor (110; 810), and the reference signal (132; 842) is effected due to a rotation of the device (100; 800).

3. Device (100; 800) according to claim 2, the device (100; 800) being designed to detect a rotation of the device (100; 800) relative to the magnetic alternating field, and
the evaluator (130; 840) being designed to take into account the detected rotation during delivery of the information (134; 844) which indicates that the object or the person has crossed the marked limit (630).

4. Device (100; 800) according to claim 2 or 3, the device (100; 800) having a reference signal corrector (850) which is designed, on the basis of an original reference signal and information (862) relating to a rotation of the device (100; 800) relative to the magnetic alternating field, to produce a phase-corrected reference signal in which an influence of rotations of the device (100; 800) relative to the magnetic alternating field upon a phase position is at least reduced in comparison to the original reference signal, and
the evaluator (130; 840) being designed, in order to provide the information (834; 844) which indicates that the object or person has crossed the marked limit (630), to evaluate a phase difference between the magnetic field sensor signal (112; 812) and the phase-corrected reference signal.

5. Device (100; 800) according to one of claims 2 to 4, the device (100; 800) having a movement detector (860) which is designed, on the basis of information relating to at least one of the magnetic field components, to detect a rotation of the device (100; 800) relative to the magnetic alternating field.

6. Device (100; 800) according to claim 5, the device (100; 800) having a third magnetic field sensor which is designed to detect a third magnetic field component of the magnetic alternating field, a magnetic field main sensitivity direction of the third magnetic field sensor differing from a magnetic field main sensitivity direction of the first magnetic field sensor, and
the magnetic field main sensitivity direction of the third magnetic field sensor differing from a magnetic field main sensitivity direction of the second magnetic field sensor, and
the rotation detector (860) being designed to detect the rotation of the device (100; 800) relative to the magnetic alternating field on the basis of a magnetic field sensor signal (122; 822) delivered by the second magnetic field sensor (120; 820) and on the basis of a magnetic field sensor signal (832) delivered by the third magnetic field sensor (830).

7. Device (100; 800) according to claim 6, wherein the rotation detector (860) being designed to detect a rotation of the device (100; 800) relative to the magnetic alternating field if a phase relation between a magnetic field sensor signal (822), delivered by the second magnetic field sensor (820), and a magnetic field sensor signal (832) delivered by the third magnetic field sensor (830) changes relative to an initial phase relation by more than a prescribed phase relation change threshold.

8. Device (100; 800) according to one of the claims 1 to 7, the device (100; 800) having a reference signal producer (140; 850) which is designed to determine the reference signal (132; 842) depending on at least two magnetic field sensor signals (822, 832) from at least two magnetic field sensors (820; 830).

9. Device (100; 800) according to claim 8, the device (100; 800) having a third magnetic field sensor (830) which is designed to detect a third magnetic field component of the magnetic alternating field,
the magnetic field main sensitivity direction of the third magnetic field sensor differing from a magnetic field main sensitivity direction of the first magnetic field sensor,
a magnetic field main sensitivity direction of the third magnetic field sensor differing from a magnetic field main sensitivity direction of the second magnetic field sensor, and the reference signal producer (140; 850) being designed to determine the reference signal (132; 842) depending on a magnetic field sensor signal (822) of the second magnetic field sensor (820) and a magnetic field sensor signal (832) of the third magnetic field sensor (830).

10. Device (100; 800) according to claim 9, the reference signal producer (140; 850) being designed to determine which of the magnetic field sensor signals (822; 832) delivered by the second magnetic field sensor (820) and by the third magnetic field sensor (830) is stronger, and
to derive the reference signal (132; 841) from the stronger of the magnetic field sensor signals (822, 832) delivered by the second magnetic field sensor (820) and by the third magnetic field sensor (830).

11. Device (100; 800) according to claim 10, the reference signal producer (140; 850) being designed to effect a phase correction with respect to the reference signal (132; 842), so that an effective phase position of the reference signal remains unchanged if a change occurs with respect to from which of the magnetic field sensor signals (822; 832) the reference signal (132; 842) is derived.

12. Device according to one of the claims 1 to 11, the device being designed to signal a goal event if the evaluator delivers information which indicates that the device has crossed a limit marked by a magnetic alternating field,
unless the device crosses limits marked by a magnetic alternating field at least twice within a prescribed period of time without an acceleration acting on the device between the twofold crossing of the marked limits, which acceleration is greater than or equal to a prescribed maximum acceleration.

13. Method (900) for detecting if an object or a person crosses a limit marked by a magnetic constant field, having the following features:
detection (910) of a first magnetic field component of the magnetic alternating field;
detection (920) of a second magnetic field component of the magnetic alternating field;
determination of a phase difference between a signal gained by detecting the first magnetic field component and a reference signal gained by detecting the second magnetic field component;
delivery (930) of information which indicates that the object or the person has crossed the marked limit by evaluating the determined phase difference such that a detection of a change in the phase difference is a precondition for delivering the said information.

14. Method according to claim 13, the method having the following steps:
detection of whether playing equipment crosses a first limit marked by a magnetic field or whether the playing equipment crosses a second limit marked by a magnetic field,
the first limit being marked by a first conductor part which is subjected to a flow of current along a goal line of a goal, and
the second limit being marked by a second conductor part which is subjected to a flow of current along a crossbar of the goal; and
signalling that a goal event occurs, in response to detection that the playing equipment has crossed the first limit or the second limit,
unless information is present which indicates that the playing equipment crosses a third limit marked by a magnetic field after crossing the second limit,
the third limit being marked by a third conductor part which is subjected to a flow of current and is disposed such that the third limit is crossed by playing equipment which moves beyond the goal above the crossbar.

15. Method according to claim 14, wherein detection of whether the playing equipment crosses the third limit within a prescribed period of time after crossing the second limit, having the following steps:
detection of whether the playing equipment has crossed two marked limits within the prescribed period of time; and
if the playing equipment has crossed two marked limits within the prescribed period of time:
detection of whether an acceleration has acted on the playing equipment between crossing the two limits, which acceleration is greater than or equal to a prescribed maximum acceleration, and
providing information which indicates that the playing equipment has crossed the third limit if no acceleration has acted on the playing equipment between crossing the two limits, which acceleration is greater than or equal to the prescribed maximum acceleration.

## Revendications

1. Dispositif (100 ; 800) pour reconnaître quand un objet ou une personne doté(e) ou relié(e) au dispositif dépasse une limite (630) marquée par un champ magnétique alternatif (312a - 312e ; 624a, 624b), avec les caractéristiques suivantes :
un premier capteur de champ magnétique (110 ; 810) conçu pour détecter une première composante de champ magnétique (H₂) du champ magnétique alternatif, afin de délivrer un signal de capteur de champ magnétique (112 ; 812) correspondant ;
un deuxième capteur de champ magnétique (120 ; 820) conçu pour détecter une deuxième composante de champ magnétique (Hₓ) dudit champ magnétique alternatif ; et
un dispositif d'évaluation (130 ; 840) pour délivrer une information indiquant que l'objet ou la personne a franchi la limite marquée (630), le dispositif d'évaluation (130 ; 840) étant conçu pour déterminer une différence de phase entre le signal de capteur de champ magnétique (112 ; 812) délivré par le premier capteur de champ magnétique (110 ; 810) et un signal de référence (132 ; 842) acquis par la détection de la deuxième composante de champ magnétique (Hₓ) avec le deuxième capteur de champ magnétique (120 ; 820), et
pour évaluer la différence de phase déterminée de manière à ce qu'une détection d'une modification de la différence de phase soit une condition préalable pour la délivrance de ladite information.

2. Dispositif (100 ; 800) selon la revendication 1, dans lequel le dispositif d'évaluation (130 ; 840) est conçu pour empêcher une mise à disposition d'une information (134 ; 844) indiquant que l'objet ou la personne a dépassé la limite marquée (630), lorsqu'une modification de la différence de phase entre le signal de capteur de champ magnétique (112 ; 812) délivré par le premier capteur de champ magnétique (110 ; 810) et le signal de référence (132 ; 842) apparaît en raison d'une rotation du dispositif (100 ; 800).

3. Dispositif (100 ; 800) selon la revendication 2, dans lequel le dispositif (100 ; 800) est conçu pour détecter une rotation du dispositif (100 ; 800) par rapport au champ magnétique alternatif, et
dans lequel le dispositif d'évaluation (130 ; 840) est conçu pour tenir compte de la rotation détectée lors de la délivrance de l'information (134 ; 844) indiquant que l'objet ou la personne a dépassé la limite marquée (630).

4. Dispositif (100 ; 800) selon la revendication 2 ou 3, dans lequel le dispositif (100 ; 800) comporte un moyen de correction du signal de référence (850), lequel est conçu pour produire un signal de référence corrigé en phase, sur la base d'un signal de référence initial et d'une information (862) sur une rotation du dispositif (100 ; 800) par rapport au champ magnétique alternatif, où une influence de la rotation du dispositif (100 ; 800) par rapport au champ magnétique alternatif sur une position de phase est au moins
atténuée en comparaison avec le signal de référence initial, et
dans lequel le dispositif d'évaluation (130 ; 840) est conçu pour évaluer une différence de phase entre le signal de capteur de champ magnétique (112 ; 812) et le signal de référence corrigé en phase, pour la mise à disposition de l'information (834 ; 844) indiquant que l'objet ou la personne a dépassé la limite marquée (630).

5. Dispositif (100 ; 800) selon l'une des revendications 2 à 4, dans lequel le dispositif (100 ; 800) comporte un moyen de reconnaissance de mouvement (860) conçu pour détecter une rotation du dispositif (100 ; 800) par rapport au champ magnétique alternatif, sur la base d'une information sur une composante de champ magnétique.

6. Dispositif (100 ; 800) selon la revendication 5, dans lequel le dispositif (100 ; 800) comporte un troisième capteur de champ magnétique conçu pour détecter une troisième composante de champ magnétique, sachant qu'une direction de sensibilité principale aux champs magnétiques du troisième capteur de champ magnétique se distingue d'une direction de sensibilité principale aux champs magnétiques du premier capteur de champ magnétique, et
dans lequel la direction de sensibilité principale aux champs magnétiques du troisième capteur de champ magnétique se distingue d'une direction de sensibilité principale aux champs magnétiques du deuxième capteur de champ magnétique, et
dans lequel le moyen de reconnaissance de rotation (860) est conçu pour détecter la rotation du dispositif (100 ; 800) par rapport au champ magnétique alternatif sur la base d'un signal de capteur de champ magnétique (122 ; 822) délivré par le deuxième capteur de champ magnétique (120 ; 820) et sur la base d'un signal de capteur de champ magnétique (832) délivré par le troisième capteur de champ magnétique (830).

7. Dispositif (100 ; 800) selon la revendication 6, dans lequel le moyen de reconnaissance de rotation (860) est conçu pour détecter une rotation du dispositif (100 ; 800) par rapport au champ magnétique alternatif lorsqu'un rapport de phases entre un signal de capteur de champ magnétique (822) délivré par le deuxième capteur de champ magnétique (820) et un signal de capteur de champ magnétique (832) délivré par le troisième capteur de champ magnétique (830) varie au-delà d'une valeur seuil de modification de rapport de phases prédéfinie, par rapport à un rapport de phases initial.

8. Dispositif (100 ; 800) selon l'une des revendications 1 à 7, dans lequel le dispositif (100 ; 800) comporte un moyen de génération de signaux de référence (140 ; 850) conçu pour déterminer le signal de référence (132 ; 842) en fonction d'au moins deux signaux de capteur de champ magnétique (822, 832) d'au moins deux capteurs de champ magnétique (820, 830).

9. Dispositif (100 ; 800) selon la revendication 8, dans lequel le dispositif (100 ; 800) comporte un troisième capteur de champ magnétique (830) conçu pour détecter une troisième composante de champ magnétique du champ magnétique alternatif,
dans lequel une direction de sensibilité principale aux champs magnétiques du troisième capteur de champ magnétique se distingue d'une direction de sensibilité principale aux champs magnétiques du premier capteur de champ magnétique,
dans lequel une direction de sensibilité principale aux champs magnétiques du troisième capteur de champ magnétique se distingue d'une direction de sensibilité principale aux champs magnétiques du deuxième capteur de champ magnétique, et
dans lequel le moyen de génération de signaux de référence (140 ; 850) est conçu pour déterminer le signal de référence (132 ; 842) en fonction d'un signal de capteur de champ magnétique (822) du deuxième capteur de champ magnétique (820) et d'un signal de capteur de champ magnétique (832) du troisième capteur de champ magnétique (830).

10. Dispositif (100 ; 800) selon la revendication 9, dans lequel le moyen de génération de signaux de référence (140 ; 850) est conçu pour déterminer lequel parmi les signaux de capteur de champ magnétique (822, 832) délivrés par le deuxième capteur de champ magnétique (820) et le troisième capteur de champ magnétique (830) est le plus fort, et
pour dériver le signal de référence (132 ; 841) à partir du plus fort des signaux de capteur (822, 832) délivrés par le deuxième capteur de champ magnétique (820) et le troisième capteur de champ magnétique (830).

11. Dispositif (100 ; 800) selon la revendication 10, dans lequel le moyen de génération de signaux de référence (140 ; 850) est conçu pour effectuer une correction de phase quant au signal de référence (132 ; 842), de manière à ce qu'une position de phase effective du signal de référence demeure inchangée lorsqu'une modification apparaît quant au signal de capteur de champ magnétique (822 ; 832) à partir duquel le signal de référence (132 ; 842) est dérivé.

12. Dispositif selon l'une des revendications 1 à 11, dans lequel le dispositif est conçu pour signaler un événement de but lorsque le dispositif d'évaluation délivre une information indiquant que le dispositif a dépassé une limite marquée par un champ magnétique alternatif,
à moins que le dispositif ne dépasse des limites marquées par un champ magnétique alternatif au moins deux fois dans un laps de temps prédéfini, sans qu'une accélération supérieure ou égale à une accélération maximale prédéfinie n'agisse sur le dispositif entre les deux dépassements des limites marquées.

13. Procédé (900) pour reconnaître lorsqu'un objet ou une personne dépasse une limite marquée par un champ magnétique alternatif, avec les caractéristiques suivantes :
détection (910) d'une première composante de champ magnétique du champ magnétique alternatif ;
détection (920) d'une deuxième composante de champ magnétique dudit champ magnétique alternatif ;
détermination d'une différence de phase entre un signal acquis par la détection de la première composante de champ magnétique et un signal de référence acquis par la détection de la deuxième composante de champ magnétique ;
livraison (930) d'une information indiquant que l'objet ou la personne a dépassé la limite marquée, en évaluant la différence de phase de manière à ce qu'une détection d'une modification de la différence de phase soit une condition préalable pour ladite délivrance de l'information.

14. Procédé selon la revendication 13, dans lequel le procédé comporte les étapes suivantes :
reconnaissance du dépassement par un jouet d'une première limite marquée par un champ magnétique, ou du dépassement par un jouet d'une deuxième limite marquée par un champ magnétique,
où la première limite est marquée par une première partie conductrice traversée par un courant, le long d'une ligne de dépassement d'une porte, et
où la deuxième limite est marquée par une deuxième pièce conductrice traversée par un courant, le long d'une ligne de dépassement d'une porte ; et
signalisation de la présence d'un événement de but, en réponse à une reconnaissance du dépassement de la première limite ou de la deuxième limite par le jouet,
à moins qu'une information n'indique qu'après le dépassement de la deuxième limite, le jouet dépasse une troisième limite marquée par un champ magnétique,
où la troisième limite est marquée par une troisième pièce conductrice traversée par un courant, laquelle est agencée de manière à ce que la troisième limite soit franchie par un jouet se déplaçant au-dessus de la barre de porte au-delà de la porte.

15. Procédé selon la revendication 14, dans lequel la détermination du dépassement par le jouet de la troisième limite dans un laps de temps prédéfini après le dépassement de la deuxième limite comprend les étapes suivantes :
reconnaissance du dépassement par le jouet de deux limites marquées dans un laps de temps prédéfini ; et si le jouet a dépassé deux limites marquées dans le laps de temps prédéfini :
reconnaissance de l'effet d'une accélération entre le dépassement des deux limites sur le jouet, laquelle est supérieure ou égale à une accélération maximale prédéfinie, et
mise à disposition d'une information indiquant que le jouet a dépassé la troisième limite, si aucune accélération supérieure ou égale à une accélération maximale n'a eu d'effet sur le jouet entre le dépassement des deux limites.
